# FASCICULE DE BREVET EUROPEEN

(11) **EP 1 909 169 B1**
(45) Date de publication et mention de la délivrance du brevet: **11.08.2010**
(21) Numéro de dépôt: 07291203.3
(22) Date de dépôt: 03.10.2007
(51) Int. Cl.: G06F 3/06, G06F 12/08

(54) **Système et procédé de stockage de masse**
Massenspeicherungssystem und -verfahren
Mass-storage system and method

(30) Priorité: 03.10.2006 FR 0608639
(43) Date de publication de la demande: 09.04.2008
(73) Titulaire: BULL SAS, 78340 Les Clayes sous Bois (FR)
(72) Inventeur: Bouchou, Jean-Louis, 93110 Rosny Sous Bois (FR); Dejon, Christian, 75012 Paris (FR)
(74) Mandataire: Pellegrini, Marie Claude

(56) Documents cités:
- US-A- 5 530 850
- US-A- 5 566 315
- US-A1- 2004 205 380
- US-A1- 2005 055 512

## Description

La présente invention concerne le domaine de l'informatique et en particulier des systèmes de stockage de masse de données de différents formats, générées par différents types de plateformes informatiques hétérogènes, tels que, par exemple, les plateformes GCOS8®, Unix®, Linux® ou Windows®. Ces plateformes exécutent des applications logicielles de sauvegarde telles que, par exemple, GCOS8/TMS, Bull OpenSave, Veritas NetBackup ou Legato Networker permettant de sauvegarder les données générées en les envoyant vers des systèmes de stockage de masse, via un réseau de communication, tel qu'un réseau de type SAN (« Storage Area Network », selon la terminologie anglaise) ou un réseau de type Internet par exemple. Les systèmes de stockage de masse comportent tous des moyens de communication via au moins un réseau de communication et des moyens de traitement de données pour gérer, d'une part, les échanges avec les plateformes informatiques et, d'autre part, le stockage des données provenant de ces plateformes. Les systèmes de stockage de masse comportent également, d'une part, des moyens de mémorisation stockant les données nécessaires à l'exécution des applications logicielles gérant les opérations du systèmes et, d'autre part, des moyens de stockage de grande ampleur pour stocker les données en masse provenant des différentes plateformes auxquelles ces systèmes sont reliés.

Il est connu dans l'art antérieur divers types de systèmes de stockage de masse dans lesquels les moyens de stockage de grande ampleur consistent en des librairies physiques de supports magnétiques de stockage, dits cartouches, manipulés par des robots. Ces librairies physiques comportent une pluralité de cartouches dans lesquelles les données sont écrites et lues grâce à au moins lecteur accédant individuellement, via une robotique, à chacune des cartouches, lors d'une requête d'écriture ou de lecture transmise par une des plateformes informatiques vers le système de stockage de masse. Cependant, ces solutions connues de l'art antérieur présentent les inconvénients majeurs d'être relativement lents et de saturer rapidement lorsque les demandes d'accès aux librairies physiques par les plateformes sont nombreuses. Il est connu également dans l'art antérieur des systèmes de stockage de masse comportant des moyens de mémorisation de grande taille formant un tampon entre les plateformes informatiques et les librairies physiques. Ces moyens de mémorisation de grande taille consistent, par exemple, en une pluralité de disques durs dans lesquels les données envoyées ou consultées par les plateformes peuvent être stockées temporairement pour faciliter l'accès aux données par les plateformes pendant que le système effectue les opérations nécessaires au sein de la librairie physique de cartouches physiques. Ces systèmes de stockage de masse connus de l'art antérieur permettent donc de stocker temporairement les données dans les moyens de mémorisation de grande taille pour permettre aux plateformes d'y accéder plus rapidement que si elles accédaient à la librairie physique. Ces systèmes de stockage de masse permettent donc de gérer la consultation et la mise à jour des données à la demande des plateformes informatiques dont elles proviennent. Cependant, à cause de la multitude et de la complexité des tâches de maintenance effectuées par ces systèmes, lors des requêtes transmises par les plateformes informatiques, la lenteur et la saturation facile des capacités de traitement de ces systèmes restent des inconvénients majeurs. En effet, les moyens de mémorisation de grande taille de ces systèmes de stockage de masse possèdent une certaine bande passante qui limite le nombre possible d'accès simultanés aux données.

Il est connu dans l'art antérieur, notamment par la demande de brevet US 2005/055512 A1, des systèmes de stockage de masse gérant le vidage de divers volumes du cache en fonction de priorités pré-établies et en fonction de périodes d'inactivité correspondant à une faible « charge de demandes » et qui consistent en ce que la nécessité de vider le cache est faible (car l'espace libre dans le cache est important). Ce type de solution présente l'inconvénient de ne prendre en compte que le remplissage du cache et de ne pas permettre une gestion fine du cache en fonction des demandes ni de permettre de gérer les accès au cache par les plateformes informatiques et par le système lui-même.

Il est également connu dans l'art antérieur, notamment par la demande de brevet US 5 566 315 A, des systèmes de stockage de masse dans lesquels un taux d'allocation et un taux de blocage sont calculés pour réguler le vidage du cache. Ce type de solution présente l'inconvénient de ne pas anticiper le blocage du cache puisqu'elle consiste à calculer le nombre de fois où des allocations d'espace ont échoué à cause d'un remplissage du cache trop important. Ce type de solution ne permet donc pas non plus une gestion fine du cache en fonction des demandes ni de gestion des accès au cache par les plateformes informatiques et par le système lui-même.

Enfin, il est également connu dans l'art antérieur, notamment par la demande de brevet US 5 530 850 A, des systèmes de stockage permettant un compactage de données stockées et segmentées sur des dispositifs de stockage suite à des modifications des données inscrites. Ce type de solution présente également l'inconvénient de ne pas permettre une gestion fine du cache en fonction des demandes ni une gestion des accès au cache par les plateformes informatiques et par le système lui-même. De plus, ce type de solution ne permet pas de déclencher le compactage en fonction de l'activité du système de stockage.

Dans ce contexte, il est intéressant d'optimiser la gestion des différentes tâches d'écriture, de lecture et de maintenance des librairies physiques qu'un système de stockage de masse a sous son contrôle.

La présente invention a pour but de pallier certains inconvénients de l'art antérieur en proposant un système de stockage permettant d'optimiser la gestion des différentes tâches d'écriture, de lecture et de maintenance des librairies physiques qu'il a sous son contrôle, en privilégiant les accès aux données par les plateformes informatiques.

Ce but est atteint par un système de stockage de données générées, dans au moins un format, par au moins une plateforme informatique et transmises au système de stockage via au moins un réseau de communication, grâce à des moyens d'accès de la plateforme au système de stockage, le système de stockage comportant des moyens de traitement et des ressources de stockage comprenant, d'une part, des moyens de stockage comportant au moins une librairie physique comprenant au moins un robot capable de charger et décharger au moins une cartouche de stockage de données dans au moins un lecteur permettant l'écriture et la lecture des données transmises par la plateforme informatique dans la librairie physique et, d'autre part, des moyens de mémorisation, dits cache, dans lesquels les moyens de traitement du système de stockage émulent, vis-à-vis des plateformes informatiques, au moins une librairie virtuelle à partir d'au moins une librairie physique que le système de stockage a sous son contrôle, les données ainsi stockées dans la librairie physique et la librairie virtuelle étant regroupées en ensembles de taille déterminée, dits volumes virtuels, possédant au moins une image dans la librairie physique et/ou une image dans la librairie virtuelle, les moyens d'accès des plateformes au système de stockage accédant ainsi en lecture et en écriture, via le réseau de communication, à l'image dans le cache de chacun des volumes virtuels stockés par le système de stockage, caractérisé en ce que les moyens de traitement du système de stockage comportent un module de gestion gérant les accès aux ressources de stockage, à la fois dans la librairie physique et dans la librairie virtuelle, en fonction de requêtes transmises par les moyens d'accès des plateformes informatiques au système de stockage, le module de gestion étant responsable de l'émulation des volumes virtuels de la librairie physique en volumes virtuels de la librairie virtuelle du cache et comportant, d'une part, un module de contrôle de l'activité du cache calculant au moins un indice d'activité du cache par périodes de temps déterminées, reflétant l'utilisation de la bande passante d'accès au cache et, d'autre part, un module de contrôle du remplissage du cache calculant au moins un taux de remplissage du cache à un instant donné, le module de gestion déclenchant ces calculs périodiquement ou ponctuellement lors d'une allocation d'espace pour un nouveau volume virtuel dans le cache et utilisant le résultat de ces calculs, en fonction d'au moins un algorithme de gestion de la bande passante d'accès au cache, implémenté dans le système de stockage, de façon à réguler le remplissage du cache tout en gérant les priorités dans le temps des accès aux ressources de stockage par les plateformes informatiques pour la lecture/écriture des volumes virtuels du cache ou par le système lui-même pour au moins une opération interne, dite de vidage du cache, permettant la copie des données d'au moins un volume virtuel de la librairie virtuelle vers au moins un volume virtuel de la librairie physique.

Selon une autre particularité, le cache consiste en une pluralité de disques durs sur lesquels est répartie une pluralité de partitions, le module de gestion comportant un module d'organisation maintenant en permanence à jour des informations relatives à la répartition des partitions installées sur les disques durs et à la répartition des données enregistrées sur les différentes partitions, ce module d'organisation générant, à partir de ces informations, au moins un répertoire contenant des informations relatives aux emplacements et à l'utilisation des volumes virtuels du cache, les volumes virtuels sur lesquels une lecture ou une écriture est en cours étant identifiés comme volumes virtuels ouverts et les volumes virtuels sur lesquels aucune lecture ou écriture n'est en cours étant identifiés comme volumes virtuels fermés.

Selon une autre particularité, le module de gestion comporte des moyens d'accès au contenu des ressources de stockage du système et vérifie le contenu de la librairie physique et de la librairie virtuelle pour attribuer à chacun des volumes virtuels une valeur, dite statut, parmi au moins les statuts suivants :
- statut « disc only » lorsque le volume virtuel possède une image dans la librairie virtuelle du cache mais ne possède pas d'image dans la librairie physique ou dont au moins une image dans la librairie physique n'est pas valide, c'est-à-dire ne contiennent pas les mêmes données que l'image dans la librairie virtuelle ;
- statut « out of cache » lorsque le volume virtuel ne possède aucune image dans la librairie virtuelle du cache ;
- statut « disk and tape » lorsque le volume virtuel possède des images valides à la fois dans la librairie virtuelle du cache et dans la librairie physique ;
- statut « swapping in » lorsque le volume virtuel possède une image en cours de chargement dans la librairie virtuelle, à partir d'une image dans la librairie physique ;
- statut « swapping out » lorsque le volume virtuel possède une image dans la librairie virtuelle en cours de copie dans une image de la librairie physique ;
- statut « incomplete » lorsque le volume virtuel de la librairie virtuelle est ouvert et ne contient pas de données ou contient des données incomplètes ;
- statut « moving out » lorsque le volume virtuel de la librairie virtuelle est en cours de copie d'une partition du cache dans une autre ;
- statut « swappable » lorsque le volume virtuel possède une image dans la librairie virtuelle du cache mais dont au moins une image dans la librairie physique n'est pas valide ou que l'image dans la librairie virtuelle est en cours de copie dans une image de la librairie physique, c'est-à-dire que le volume est soit en statut « disc only », soit en statut « swapping out ».

Selon une autre particularité, le module de contrôle du remplissage du cache calcule, d'une part, un taux de remplissage, dit individuel, correspondant à un calcul du taux de remplissage sur chacune des partitions du cache individuellement et, d'autre part, un taux de remplissage, dit moyen, correspondant à un calcul du taux de remplissage de l'ensemble des partitions du cache.

Selon une autre particularité, le taux de remplissage moyen du cache à un instant donné, calculé par le module de contrôle du remplissage du cache, correspond, pour l'ensemble des partitions du cache, à la somme de la taille des données présentes dans les volumes virtuels fermés dont le statut est « disc only » et de la taille allouée, pour l'ensemble des partitions, aux volumes virtuels ouverts, quels que soient leurs statuts, cette somme étant rapportée, pour l'ensemble partition, à la taille totale disponible dans l'ensemble des partitions du cache, pour obtenir le taux de remplissage moyen de l'ensemble des partitions du cache.

Selon une autre particularité, le taux de remplissage individuel de chaque partition du cache à un instant donné, calculé par le module de contrôle du remplissage du cache, correspond, pour chacune des partitions du cache individuellement, à la taille des données présentes dans les volumes virtuels dont le statut est « disc only », qu'ils soient ouverts ou fermés, cette taille étant rapportée, pour chaque partition, à la taille totale disponible dans la partition considérée, pour obtenir le taux de remplissage individuel de chaque partition.

Selon une autre particularité, l'indice d'activité du cache par périodes de temps déterminées, calculé par le module de contrôle de l'activité du cache, correspond à la moyenne, calculée sur un nombre déterminé de périodes de temps déterminées successives, du nombre maximum de volumes virtuels du cache ouverts simultanément pendant chaque période de temps déterminée.

Selon une autre particularité, le module de gestion compare l'indice d'activité du cache avec un seuil minimum d'activité et un seuil maximum d'activité, compare le taux de remplissage individuel du cache avec un seuil maximum de remplissage et compare le taux de remplissage moyen du cache avec un premier seuil, dit seuil de priorité, au-dessous duquel le remplissage du cache est prioritaire par rapport au vidage et un deuxième seuil, dit seuil de démarrage du vidage, au-dessus duquel le vidage du cache peut être effectué, pour gérer les accès au cache grâce à l'algorithme de gestion de la bande passante d'accès au cache, implémenté dans le système de stockage et comportant au moins une des règles suivantes :
- si la valeur du taux de remplissage individuel d'une partition du cache est supérieure à la valeur du seuil maximum de remplissage, quelle que soit la valeur de l'indice d'activité du cache, l'opération de vidage du cache est impérative et autorisée à démarrer au détriment éventuel des accès au cache par les plateformes informatiques, une partie de la bande passante d'accès au cache étant alors utilisée par la copie d'un ou plusieurs volume(s) virtuel(s) de cette partition vers la librairie physique au cours de ce vidage,
- si la valeur de l'indice d'activité du cache est inférieure ou égale à la valeur du seuil minimum d'activité, toute opération de vidage du cache est autorisée à démarrer, pour permettre la copie d'un ou plusieurs volume(s) virtuel(s) vers la librairie physique,
- si la valeur de l'indice d'activité du cache est comprise entre la valeur du seuil minimum d'activité et la valeur du seuil maximum d'activité, une opération de vidage du cache déjà en cours est autorisée à se poursuivre, la copie d'un ou plusieurs volume(s) virtuel(s) du cache vers la librairie physique étant autorisée pendant cette opération de vidage en cours, mais, s'il n'existe pas d'opération de vidage en cours, une nouvelle opération de vidage du cache n'est pas autorisée à démarrer,
- si la valeur de l'indice d'activité du cache est supérieure à la valeur du seuil maximum d'activité, une nouvelle opération de vidage du cache n'est pas autorisée à démarrer et une opération de vidage du cache déjà en cours est interrompue, au profit des accès au cache par les plateformes informatiques, sauf si la valeur du taux de remplissage individuel du cache est supérieure à la valeur du seuil maximum de remplissage ou si la valeur du taux de remplissage moyen du cache est supérieure au seuil de démarrage du vidage, une nouvelle copie d'un ou plusieurs volume(s) virtuel(s) du cache vers la librairie physique, pendant une opération de vidage déjà en cours, étant interdite, tandis qu'une copie déjà en cours d'un ou plusieurs volume(s) virtuel(s) du cache vers la librairie physique, pendant cette opération de vidage en cours, est autorisée à se terminer,
- si la valeur du taux de remplissage moyen de l'ensemble des partitions du cache est inférieure ou égale à la valeur du seuil de priorité, les accès aux ressources de stockage en réponse aux requêtes transmises par les moyens d'accès des plateformes informatiques au système de stockage sont prioritaires par rapport aux accès nécessaires à une copie de volumes nécessitant les mêmes ressources au cours d'une opération de vidage du cache, cette copie pouvant alors être différée jusqu'à libération de ces ressources,
- si la valeur du taux de remplissage moyen de l'ensemble des partitions du cache est supérieure au seuil de priorité, les accès aux ressources de stockage en réponse aux requêtes transmises par les moyens d'accès des plateformes informatiques au système de stockage ne sont pas prioritaires par rapport aux accès nécessaires à une copie de volumes nécessitant les mêmes ressources au cours d'une opération de vidage du cache qui peut donc démarrer ou se poursuivre au détriment éventuel des accès aux ressources de stockage par les plateformes informatiques,
- si la valeur du taux de remplissage moyen de l'ensemble des partitions du cache est inférieure ou égale à la valeur du seuil de démarrage du vidage, une opération de vidage du cache vers la librairie physique n'est autorisée à démarrer que si la valeur de l'indice d'activité du cache est inférieure ou égale à la valeur du seuil minimum d'activité,
- si la valeur du taux de remplissage moyen de l'ensemble des partitions du cache est supérieure à la valeur du seuil de démarrage du vidage, une opération de vidage du cache vers la librairie physique est impérative et autorisée à démarrer.

Selon une autre particularité, le module de contrôle d'activité du cache comporte des moyens de consultation des informations générées par le module d'organisation pour calculer l'indice d'activité du cache en comptant le nombre de volumes virtuels ouverts, le seuil maximum d'activité correspondant au nombre total de volumes virtuels du cache ouverts en même temps qui consomment une fraction de bande passante jugée trop importante pour permettre de démarrer une opération interne nécessitant un accès au cache.

Selon une autre particularité, le module de contrôle du remplissage du cache comporte des moyens de consultation des informations générées par le module d'organisation pour calculer, d'une part, le taux de remplissage moyen du cache en comparant la somme de la taille totale des données présentes dans les volumes virtuels ouverts, quels que soient leurs statuts, et de la taille totale des données présentes dans les volumes virtuels fermés et dont le statut est « disc only », par rapport à la capacité totale de stockage dans l'ensemble des partitions du cache et, d'autre part, le taux de remplissage individuel de chacune des partitions du cache en comparant, pour une partition donnée, la taille des données présentes dans les volumes virtuels dont le statut est « disc only », qu'ils soient ouverts ou fermés, par rapport à la capacité totale de stockage de cette partition du cache.

Selon une autre particularité, le module d'organisation coopère avec les modules de contrôle d'activité du cache et de contrôle du remplissage du cache pour répartir les volumes virtuels de façon équitable sur les différentes partitions du cache, afin de favoriser une distribution homogène sur l'ensemble des disques supportant les différentes partitions du cache.

Selon une autre particularité, le module de gestion, lors de l'opération de vidage du cache, utilise les résultats des calculs du module de contrôle du remplissage du cache pour sélectionner les volumes virtuels du cache à copier dans la librairie physique, les volumes virtuels ainsi sélectionnés étant les volumes virtuels fermés, dont le statut est « disk only » et qui ont été les moins récemment accédés, en lecture ou en écriture, par les plateformes informatiques, soit dans une partition donnée du cache si la valeur du taux de remplissage individuel de cette partition est supérieure ou égale à la valeur du seuil maximum de remplissage, soit dans l'ensemble des partitions du cache si les valeurs des taux de remplissage individuels de toutes les partitions sont inférieures à la valeur du seuil maximum de remplissage .

Selon une autre particularité, le module de gestion comporte un module de contrôle de l'activité de la librairie physique maintenant en permanence à jour au moins des informations relatives à l'utilisation des lecteurs et/ou des cartouches des librairies physiques sous le contrôle du système de stockage, ces informations permettant ainsi au module de gestion de gérer les priorités dans le temps des accès aux ressources de stockage, d'une part, par le système lui-même pour le vidage d'au moins un volume virtuel du cache vers au moins un volume virtuel de la librairie physique et, d'autre part, par les plateformes informatiques pour la lecture/écriture d'un volume virtuel non présent dans le cache et nécessitant donc une consultation de la librairie physique pour la copie d'un volume virtuel de cette librairie physique vers le cache, sous la forme d'un volume virtuel de la librairie virtuelle.

Selon une autre particularité, le module de gestion, grâce à ses moyens d'accès au contenu des ressources de stockage du système , maintient en permanence à jour au moins des informations relatives à la validité des volumes virtuels présents dans les cartouches des librairies physiques sous le contrôle du système de stockage, par rapport aux volumes virtuels éventuellement modifiés dans le cache par les plateformes informatiques, ces informations de validité permettant au module de gestion de comparer l'espace occupé par les volumes virtuels obsolètes dans les cartouches de la librairie physique avec un seuil maximum d'invalidité, et d'effectuer, lorsque cet espace des volumes virtuels obsolètes atteint ce seuil, un compactage des volumes valides de la librairie physique, dans les cartouches contenant des volumes virtuels non utilisés dans la librairie physique et/ou correspondant à des volumes virtuels fermés dans le cache, en contrôlant la lecture de l'ensemble des volumes valides des cartouches sources contenant des volumes obsolètes et la copie simultanée de ces volumes valides dans des cartouches cibles, de façon à effacer ces cartouches sources et à n'obtenir que des cartouches contenant des volumes valides dans la librairie physique.

Selon une autre particularité, le module de gestion, responsable de l'émulation des volumes virtuels de la librairie physique en volumes virtuels de la librairie virtuelle du cache, offre la possibilité qu'un volume virtuel du cache possède des images multiples dans la librairie physique et, permet que les volumes virtuels du cache pris en compte par le module de contrôle du remplissage du cache, dans le calcul du taux de remplissage, correspondent aux volumes virtuels du cache dont le statut est « disc only », c'est-à-dire dont les images présentes dans la librairie physique ne sont pas toutes valides.

Selon une autre particularité, le module de gestion utilise les résultats des opérations effectuées par le module de contrôle de l'activité du cache, le module de contrôle du remplissage du cache et le module de contrôle de l'activité de la librairie physique, de façon à ce que le compactage des volumes valides de la librairie physique par le module de gestion soit réalisé en fonction de l'activité et du remplissage du cache, en favorisant les accès aux ressources de stockage par les plateformes informatiques par rapport aux accès nécessaires à ce compactage.

Selon une autre particularité, les moyens de traitement exécutent une application logicielle constituant l'ensemble des modules du système de stockage et responsable de l'interopérabilité des différents moyens du système, cette application logicielle coopérant avec un système d'exploitation installé sur le système de stockage pour gérer les opérations à réaliser en générant au moins des informations relatives aux emplacements et à l'utilisation de l'ensemble des données présentes dans le système de stockage, les données nécessaires à l'exécution de cette application ayant été au préalable enregistrées dans une mémoire accessible par les moyens de traitement du système.

Un autre but de la présente invention est de proposer un procédé de sauvegarde permettant d'optimiser la gestion des différentes tâches d'écriture, de lecture et de maintenance des librairies qu'il a sous son contrôle, en privilégiant les accès aux données par les plateformes informatiques.

Ce but est atteint par un procédé de sauvegarde de données générées, dans au moins un format, par au moins une plateforme informatique et transmises à un système de stockage via au moins un réseau de communication, grâce à des moyens d'accès de la plateforme au système de stockage, le système de stockage comportant des ressources de stockage comprenant, d'une part, des moyens de stockage comportant au moins une librairie physique comprenant au moins un robot capable de charger et décharger au moins une cartouche de stockage de données dans au moins un lecteur permettant l'écriture et la lecture des données transmises par la plateforme informatique dans la librairie physique et, d'autre part, des moyens de mémorisation, dits cache, dans lesquels les moyens de traitement du système de stockage émulent, vis-à-vis des plateformes informatiques, au moins une librairie virtuelle à partir d'au moins une librairie physique que le système de stockage a sous son contrôle, les données ainsi stockées dans la librairie physique et la librairie virtuelle étant regroupées en ensembles de taille déterminée, dits volumes virtuels, possédant au moins une image dans la librairie physique et/ou une image dans la librairie virtuelle, les moyens d'accès des plateformes au système de stockage accédant ainsi en lecture et en écriture, via le réseau de communication, à l'image dans le cache de chacun des volumes virtuels stockés par le système de stockage, le procédé étant caractérisé en ce qu'il comporte au moins les étapes suivantes :
- émulation des volumes virtuels de la librairie physique en volumes virtuels de la librairie virtuelle du cache, par un module de gestion, présent dans les moyens de traitement du système de stockage et gérant les accès aux ressources de stockage, à la fois sur les volumes virtuels de la librairie physique et sur les volumes virtuels du cache, en fonction de requêtes transmises par les moyens d'accès des plateformes informatiques au système de stockage ;
- calcul, par un module de contrôle de l'activité du cache, d'au moins un indice d'activité du cache par périodes de temps déterminées, reflétant l'utilisation de la bande passante d'accès au cache, cette étape de calcul étant répétée pour surveiller l'évolution de l'activité du cache périodiquement ou ponctuellement lors d'une allocation d'espace pour un nouveau volume virtuel dans le cache;
- calcul, par un module de contrôle du remplissage du cache, d'au moins un taux de remplissage du cache à un instant donné, cette étape de calcul étant répétée pour surveiller l'évolution du remplissage du cache périodiquement ou ponctuellement lors d'une allocation d'espace pour un nouveau volume virtuel dans le cache ;
- décision, par le module de gestion, en fonction du résultat de ces calculs et d'au moins un algorithme de gestion de la bande passante d'accès au cache, implémenté dans le système de stockage, entre une autorisation ou une interdiction des accès aux ressources de stockage par les plateformes informatiques pour la lecture/écriture des volumes virtuels dans le cache ou par le système lui-même pour au moins une opération, dite de vidage du cache, permettant la copie des données d'au moins un volume virtuel de la librairie virtuelle vers au moins un volume virtuel de la librairie physique, de façon à réguler le remplissage du cache tout en gérant les priorités dans le temps des accès aux ressources par les plateformes et le système lui-même.

Selon une autre particularité, le procédé comporte, d'une part, au moins une étape d'installation d'une pluralité de partitions sur une pluralité de disques durs constituant le cache et, d'autre part, au moins une étape de création et de mise à jour, par un module d'organisation, de données représentatives d'informations relatives à la répartition des partitions et à la répartition des données enregistrées sur les différentes partitions, ce module d'organisation générant, à partir de ces informations, au moins un répertoire contenant des informations relatives aux emplacements et à l'utilisation des volumes virtuels, les volumes virtuels sur lesquels une lecture ou une écriture est en cours étant identifiés comme volumes virtuels ouverts et les volumes virtuels sur lesquels aucune lecture ou écriture n'est en cours étant identifiés comme volumes virtuels fermés.

Selon une autre particularité, le procédé comporte une étape de vérification du contenu de la librairie physique et de la librairie virtuelle par le module de gestion, grâce à des moyens d'accès au contenu des ressources de stockage du système, suivie d'une étape d'attribution, à chacun des volumes virtuels d'une valeur, dite statut, parmi au moins les statuts suivants :
- statut « disc only » lorsque le volume virtuel possède une image dans la librairie virtuelle du cache mais ne possède pas d'image dans la librairie physique ou dont au moins une image dans la librairie physique n'est pas valide, c'est-à-dire ne contiennent pas les mêmes données que l'image dans la librairie virtuelle ;
- statut « out of cache » lorsque le volume virtuel ne possède aucune image dans la librairie virtuelle du cache ;
- statut « disk and tape » lorsque le volume virtuel possède des images valides à la fois dans la librairie virtuelle du cache et dans la librairie physique ;
- statut « swapping in » lorsque le volume virtuel possède une image en cours de chargement dans la librairie virtuelle, à partir d'une image dans la librairie physique ;
- statut « swapping out » lorsque le volume virtuel possède une image dans la librairie virtuelle en cours de copie dans une image de la librairie physique ;
- statut « incomplete » lorsque le volume virtuel de la librairie virtuelle est ouvert et ne contient pas de données ou contient des données incomplètes ;
- statut « moving out » lorsque le volume virtuel de la librairie virtuelle est en cours de copie d'une partition du cache dans une autre ;
- statut « swappable » lorsque le volume virtuel possède une image dans la librairie virtuelle du cache mais dont au moins une image dans la librairie physique n'est pas valide ou que l'image dans la librairie virtuelle est en cours de copie dans une image de la librairie physique, c'est-à-dire que le volume est soit en statut « disc only » soit en statut « swapping out ».

Selon une autre particularité, l'étape de calcul du taux de remplissage du cache à un instant donné, par le module de contrôle du remplissage du cache comporte, d'une part, une étape de calcul d'un taux de remplissage, dit individuel, correspondant à un calcul du taux de remplissage sur chacune des partitions du cache individuellement et, d'autre part, une étape de calcul d'un taux de remplissage, dit moyen, correspondant à un calcul du taux de remplissage de l'ensemble des partitions du cache.

Selon une autre particularité, l'étape de calcul du taux de remplissage moyen du cache, par le module de contrôle du remplissage du cache, consiste en une mesure, pour l'ensemble des partitions du cache, de la somme de la taille des données présentes dans les volumes virtuels fermés dont le statut est « disc only » et de la taille allouée aux volumes virtuels ouverts, quels que soient leurs statuts, cette somme étant rapportée à la taille totale disponible dans l'ensemble des partitions du cache, pour obtenir le taux de remplissage moyen de l'ensemble des partitions du cache.

Selon une autre particularité, l'étape de calcul du taux de remplissage individuel de chaque partition du cache, par le module de contrôle du remplissage du cache, consiste en une mesure, pour chacune des partitions du cache individuellement, de la taille totale des données présentes dans les volumes virtuels dont le statut est « disc only », qu'ils soient ouverts ou fermés, cette taille étant rapportée à la taille totale disponible dans la partition considérée du cache, pour obtenir le taux de remplissage moyen de chacune des partitions du cache.

Selon une autre particularité, l'étape de calcul de l'indice d'activité du cache par périodes de temps déterminées, par le module de contrôle de l'activité du cache, consiste en un calcul d'une moyenne, calculée sur un nombre déterminé de périodes de temps déterminées successives, du nombre maximum de volumes virtuels du cache ouverts simultanément pendant chaque période de temps déterminée.

Selon une autre particularité, le procédé comporte au moins une étape supplémentaire de comparaison de l'indice d'activité du cache avec un seuil minimum d'activité et un seuil maximum d'activité, une étape de comparaison du taux de remplissage individuel du cache avec seuil maximum de remplissage et une étape de comparaison du taux de remplissage moyen avec un premier seuil, dit seuil de priorité, au-dessous duquel le remplissage du cache est prioritaire par rapport au vidage et un deuxième seuil, dit seuil de démarrage du vidage, au-dessus duquel le vidage du cache peut être effectué, mises en oeuvre par le module de gestion pour gérer les accès au cache grâce à l'algorithme de gestion de la bande passante d'accès au cache, implémenté dans le système de stockage et comportant au moins une des règles suivantes :
- si la valeur du taux de remplissage individuel d'une partition du cache est supérieure à la valeur du seuil maximum de remplissage, quelle que soit la valeur de l'indice d'activité du cache, l'opération de vidage du cache est impérative et autorisée à démarrer au détriment éventuel des accès au cache par les plateformes informatiques, une partie de la bande passante d'accès au cache étant alors utilisée par la copie d'un ou plusieurs volume(s) virtuel(s) de cette partition vers la librairie physique au cours de ce vidage,
- si la valeur de l'indice d'activité du cache est inférieure ou égale à la valeur du seuil minimum d'activité, toute opération de vidage du cache est autorisée à démarrer, pour permettre la copie d'un ou plusieurs volume(s) virtuel(s) vers la librairie physique,
- si la valeur de l'indice d'activité du cache est comprise entre la valeur du seuil minimum d'activité et la valeur du seuil maximum d'activité, une opération de vidage du cache déjà en cours est autorisée à se poursuivre, la copie d'un ou plusieurs volume(s) virtuel(s) du cache vers la librairie physique étant autorisée pendant cette opération de vidage en cours, mais, s'il n'existe pas d'opération de vidage en cours, une nouvelle opération de vidage du cache n'est pas autorisée à démarrer,
- si la valeur de l'indice d'activité du cache est supérieure à la valeur du seuil maximum d'activité, une nouvelle opération de vidage du cache n'est pas autorisée à démarrer et une opération de vidage du cache déjà en cours est interrompue, au profit des accès au cache par les plateformes informatiques, sauf si la valeur du taux de remplissage individuel du cache est supérieure à la valeur du seuil maximum de remplissage ou si la valeur du taux de remplissage moyen du cache est supérieure au seuil de démarrage du vidage, une nouvelle copie d'un ou plusieurs volume(s) virtuel(s) du cache vers la librairie physique, pendant une opération de vidage déjà en cours, étant interdite, tandis qu'une copie déjà en cours d'un ou plusieurs volume(s) virtuel(s) du cache vers la librairie physique, pendant cette opération de vidage en cours, est autorisée à se terminer,
- si la valeur du taux de remplissage moyen de l'ensemble des partitions du cache est inférieure ou égale à la valeur du seuil de priorité, les accès aux ressources de stockage en réponse aux requêtes transmises par les moyens d'accès des plateformes informatiques au système de stockage sont prioritaires par rapport aux accès nécessaires à une copie de volumes nécessitant les mêmes ressources au cours d'une opération de vidage du cache, cette copie pouvant alors être différée jusqu'à libération de ces ressources,
- si la valeur du taux de remplissage moyen de l'ensemble des partitions du cache est supérieure au seuil de priorité, les accès aux ressources de stockage en réponse aux requêtes transmises par les moyens d'accès des plateformes informatiques au système de stockage ne sont pas prioritaires par rapport aux accès nécessaires à une copie de volumes nécessitant les mêmes ressources au cours d'une opération de vidage du cache qui peut donc démarrer ou se poursuivre au détriment éventuel des accès aux ressources de stockage par les plateformes informatiques,
- si la valeur du taux de remplissage moyen de l'ensemble des partitions du cache est inférieure ou égale à la valeur du seuil de démarrage du vidage, une opération de vidage du cache vers la librairie physique n'est autorisée à démarrer que si la valeur de l'indice d'activité du cache est inférieure ou égale à la valeur du seuil minimum d'activité,
- si la valeur du taux de remplissage moyen de l'ensemble des partitions du cache est supérieure à la valeur du seuil de démarrage du vidage, une opération de vidage du cache vers la librairie physique est impérative et autorisée à démarrer.

Selon une autre particularité, l'étape de calcul de l'indice d'activité du cache, par le module de contrôle d'activité du cache, comporte au moins une étape de consultation des données générées par le module d'organisation, pour calculer l'indice d'activité du cache en comptant le nombre de volumes virtuels ouverts dans le cache, le seuil maximum d'activité correspondant au nombre total de volumes virtuels du cache ouverts en même temps qui consomment une fraction de bande passante jugée trop importante pour permettre de démarrer une opération interne nécessitant un accès au cache.

Selon une autre particularité, l'étape de calcul du taux de remplissage du cache, par le module de contrôle du remplissage du cache, comporte au moins une étape de consultation des données générées par le module d'organisation, pour calculer, d'une part, le taux de remplissage moyen du cache grâce à une comparaison de la somme de la taille totale des données présentes dans les volumes virtuels ouverts, quels que soient leurs statuts, et de la taille totale des données présentes dans les volumes virtuels fermés dont le statut est « disc only », par rapport à la capacité totale de stockage dans l'ensemble des partitions du cache et, d'autre part, le taux de remplissage individuel de chacune des partitions du cache grâce à une comparaison, pour une partition donnée, de la taille des données présentes dans les volumes virtuels dont le statut est « disc only », qu'ils soient ouverts ou fermés, par rapport à la capacité totale de stockage de cette partition du cache.

Selon une autre particularité, l'étape d'émulation des volumes virtuels par le module de gestion comporte une étape de coopération du module d'organisation avec les modules de contrôle d'activité du cache et de contrôle du remplissage du cache pour répartir les volumes virtuels de façon équitable sur les différentes partitions du cache, afin de favoriser une distribution homogène sur l'ensemble des disques supportant les différentes partitions du cache.

Selon une autre particularité, l'opération de vidage du cache, résulte d'une utilisation, par le module de gestion, des résultats des calculs du module de contrôle du remplissage du cache, pour sélectionner les volumes virtuels du cache à copier dans la librairie physique, les volumes virtuels ainsi sélectionnés étant les volumes virtuels fermés, dont le statut est « disk only » et qui ont été les moins récemment accédés, en lecture ou en écriture, par les plateformes informatiques, soit dans une partition donnée du cache si la valeur du taux de remplissage individuel de cette partition est supérieure ou égale à la valeur du seuil maximum de remplissage, soit dans l'ensemble des partitions du cache si les valeurs des taux de remplissage individuels de toutes les partitions sont inférieures à la valeur du seuil maximum de remplissage.

Selon une autre particularité, le procédé comporte au moins une étape de création et de mise à jour, par un module de contrôle de l'activité de la librairie, de données représentatives d'informations relatives à l'utilisation des lecteurs et/ou des cartouches des librairies sous le contrôle du système de stockage, ces informations permettant ainsi au module de gestion de gérer les priorités dans le temps des accès aux ressources de stockage, d'une part, par le système lui-même pour le vidage d'au moins un volume virtuel du cache vers un volume de la librairie physique et, d'autre part, par les plateformes informatiques pour la lecture/écriture d'un volume virtuel non présent dans le cache et nécessitant donc une consultation de la librairie physique pour la copie d'un volume de cette librairie physique vers le cache, sous la forme d'un volume virtuel de la librairie virtuelle.

Selon une autre particularité, le procédé comporte au moins une étape de création et de mise à jour, par le module de gestion, de données représentatives d'informations relatives à la validité des volumes présents dans les cartouches des librairies physiques sous le contrôle du système de stockage, par rapport aux volumes virtuels éventuellement modifiés dans le cache par les plateformes informatiques, ces informations de validité permettant au module de gestion de mettre en oeuvre une étape de comparaison de l'espace occupé par les volumes virtuels obsolètes dans les cartouches de la librairie physique avec un seuil maximum d'invalidité, et de mettre en oeuvre, lorsque cet espace occupé par ces volumes virtuels obsolètes atteint ce seuil, une étape de compactage des volumes valides, extraits des cartouches contenant des volumes non utilisés et/ou correspondant à des volumes virtuels fermés, en contrôlant une lecture de l'ensemble des volumes valides des cartouches sources contenant des volumes obsolètes et une copie simultanée de ces volumes valides dans des cartouches cibles, de façon à effacer ces cartouches sources et à n'obtenir que des cartouches contenant des volumes valides dans la librairie physique.

Selon une autre particularité, les étapes d'émulation des volumes virtuels de la librairie physique en volumes virtuels de la librairie virtuelle du cache et de gestion du cache par le module de gestion, offrent la possibilité qu'un volume virtuel du cache possède des images multiples dans la librairie physique, l'étape de création et de mise à jour, par le module de gestion, de données représentatives d'informations relatives à la validité des volumes présents dans les cartouches des librairies physiques, permettant que les volumes virtuels du cache pris en compte par le module de contrôle du remplissage du cache, dans le calcul du taux de remplissage, correspondent aux volumes virtuels du cache dont le statut est « disc only », c'est-à-dire dont les images présentes dans la librairie physique ne sont pas toutes valides.

Selon une autre particularité, l'étape de compactage de la librairie physique comporte une étape d'utilisation , par le module de gestion,des résultats des opérations effectuées par le module de contrôle de l'activité du cache, le module de contrôle du remplissage du cache et le module de contrôle de l'activité de la librairie physique, de façon à ce que le compactage des volumes valides de la librairie physique par le module de gestion soit réalisé en fonction de l'activité et du remplissage du cache, en favorisant les accès aux ressources de stockage par les plateformes informatiques par rapport aux accès nécessaires à ce compactage.

Selon une autre particularité, le procédé comporte une étape d'installation d'une application logicielle dans le système d'exploitation du système de stockage, cette application logicielle constituant l'ensemble des modules du système de stockage et responsable de l'interopérabilité des différents moyens du système, cette application logicielle coopérant avec un système d'exploitation installé sur le système de stockage pour gérer les opérations à réaliser en générant au moins des informations relatives aux emplacements et à l'utilisation de l'ensemble des données présentes dans le système de stockage, cette étape d'installation permettant l'enregistrement des données nécessaires à l'exécution de cette application dans une mémoire accessible par les moyens de traitement du système.

D'autres particularités et avantages de la présente invention apparaîtront plus clairement à la lecture de la description ci-après, faite en référence aux dessins annexés, dans lesquels :

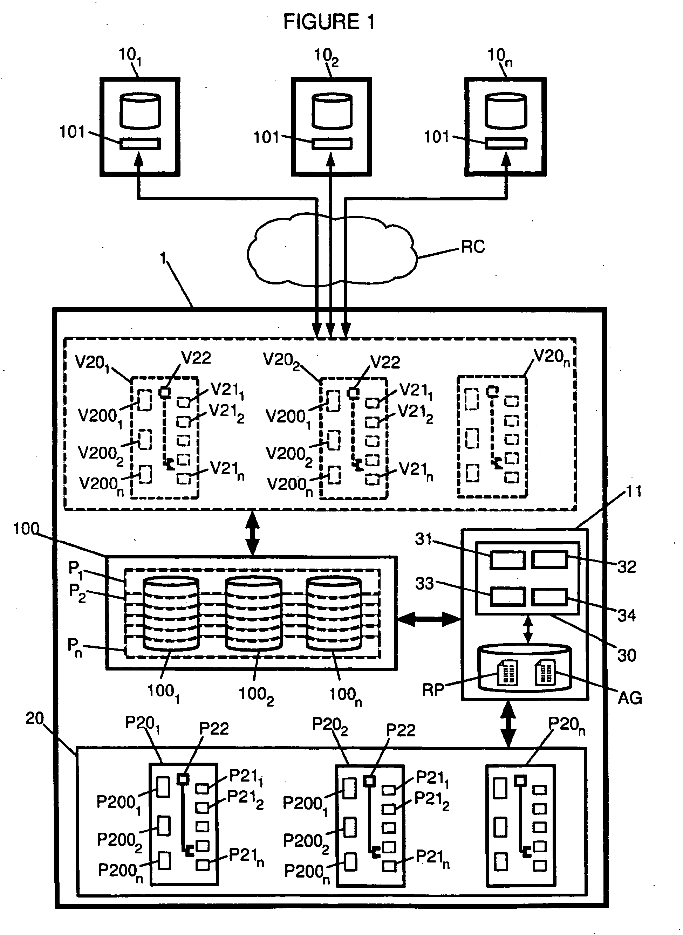

- la figure 1 représente le système de stockage selon un mode de réalisation de l'invention,
- la figure 2 représente les étapes principales du procédé selon un mode de réalisation de l'invention,
- la figure 3 représente les détails de l'étape d'émulation telle qu'elle est mise en oeuvre dans le système, selon un mode de réalisation de l'invention,
- la figure 4 représente les étapes détaillées du procédé selon un mode de réalisation de l'invention.

La présente invention concerne un procédé et un système (1) de stockage de données générées par au moins une plateforme (10₁ à 10ₙ) informatique. Comme mentionné précédemment, l'invention permet de sauvegarder des données provenant de divers types de plateformes informatiques tels que, par exemple, les plateformes GCOSB®, Unix®, Linux® ou Windows®. Ces plateformes exécutent des applications logicielles de sauvegarde telles que, par exemple, GCOS8/TMS, Bull OpenSave, Veritas NetBackup ou Legato Networker permettant de sauvegarder les données générées en les envoyant vers des systèmes de stockage de masse, via un réseau de communication, tel que le réseau Internet par exemple. Les données sont générées par ces différentes plateformes dans au moins un format informatique de données et sont transmises au système (1) de stockage via au moins un réseau (RC) de communication, grâce à des moyens (101) d'accès de la plateforme au système (1) de stockage. En particulier, ces moyens (101) d'accès au système (1) de stockage pourront consister en une des application logicielles de sauvegarde citées ci-dessus, combinées à des moyens de communication via au moins un réseau de communication, ainsi qu'à tout autre type de moyens d'accès permettant à la plateforme d'effectuer des consultations ou des modifications de données ou toute opération connue dans ce domaine. De façon connue en soi, le système (1) de stockage comporte des moyens (11) de traitement de données et des ressources (20, 100) de stockage. Ces ressources (20, 100) de stockage comprennent, d'une part, des moyens (20) de stockage comportant au moins une librairie (P20₁ à P20ₙ) physique comprenant au moins un robot (P22) capable de charger et décharger au moins une cartouche (P21₁ à P21ₙ) de stockage de données dans au moins un lecteur (P200₁ à P200ₙ) et, d'autre part, des moyens (100) de mémorisation, dits cache (100), comportant au moins une librairie virtuelle (V20₁ à V20ₙ) stockant, de façon temporaire, des données correspondant aux données d'au moins une cartouche (V₁ à Vₙ) d'une librairie physique (P20₁ à P20ₙ) que le système de stockage a sous son contrôle. Les moyens (11) de traitement du système (1) de stockage selon l'invention émulent, vis-à-vis des plateformes (10₁ à 10ₙ) informatiques, au moins une librairie virtuelle (V20₁ à V20ₙ) à partir d'au moins une librairie physique (P20₁ à P20ₙ). Ainsi, dans les systèmes de stockage connus de l'art antérieur, lorsque les moyens (101) d'accès d'une des plateformes (10₁ à 10ₙ) informatiques au système (1) de stockage prises en charge par le système de stockage requièrent la lecture ou l'écriture de données, le robot (20) permet le chargement de la cartouche (P21₁ à P21ₙ) correspondant aux données requises dans un des lecteurs (P200₁ à P200ₙ) de la librairie (P20₁ à P20ₙ) physique qui permet l'écriture et la lecture des données. Par contre, dans les systèmes de stockage émulant une librairie (V20₁ à V20ₙ) virtuelle à partir de la librairie (P20₁ à P20ₙ) physique, comme c'est le cas dans la présente invention, les plateformes (10₁ à 10ₙ) informatiques accèdent en fait à la librairie (V20₁ à V20ₙ) virtuelle du cache (100) au lieu d'accéder directement à la librairie (P20₁ à P20ₙ) physique, L'émulation permet donc que le système (1) de stockage se comporte vis-à-vis des plateformes (10₁ à 10ₙ) informatiques comme s'il offrait effectivement un accès direct à la librairie (P20₁ à P20ₙ) physique mais en offrant un accès plus rapide à la librairie (V20₁ à V20ₙ) virtuelle. Les plateformes (10₁ à 10ₙ) informatiques n'ont donc pas à être modifiées et le système (1) de stockage se charge de convertir les requêtes reçues pour présenter les données requises par les plateformes (10₁ à 10ₙ) informatiques, comme s'il s'agissait effectivement d'une librairie (P20₁ à P20ₙ) physique. L'émulation pourra avoir différents niveaux de détails allant par exemple jusqu'à émuler la librairie physique au lecteur près mais l'émulation permet que le système (1) de stockage ait sa propre organisation et il n'est pas nécessaire que l'organisation des librairies émulées dans le cache correspondent exactement à l'organisation des librairies physiques que le système a sous son contrôle. Ainsi, lorsque le système de stockage reçoit, d'une plateforme informatique, une requête de montage d'une cartouche dans un lecteur, il interprétera la requête reçue et pourra, par exemple, simuler le montage d'une cartouche dans un lecteur de façon à permettre une lecture/écriture de cette cartouche par la plateforme informatique jusqu'à ce que cette dernière transmette au système une requête de démontage de la cartouche. De façon connue en soi, les données stockées dans la librairie (P20₁ à P20ₙ) physique sont regroupées en ensembles de taille déterminée, dits volumes (V₁ à Vₙ) virtuels. Ces volumes (V₁ à Vₙ) virtuels de la librairie (P20₁ à P20ₙ) physique sont accessibles par des moyens (11) de traitement du système (1) de stockage. De même, la librairie (V20₁ à V20ₙ) virtuelle dans le cache (100) du système (1) de stockage stocke, de façon temporaire, sous la forme d'au moins un ensemble, dit volume virtuel (V'₁ à V'ₙ) du cache (100), des données correspondant au contenu d'au moins un volume (V₁ à Vₙ) virtuel de la librairie (P20₁ à P20ₙ). Ainsi, les données de chacun des volumes virtuels possèdent au moins une image (V₁ à Vₙ) dans la librairie physique (P20₁ à P20ₙ) et/ou une image (V'₁ à V'ₙ) dans la librairie virtuelle (V20₁ à V20ₙ), les moyens (101) d'accès des plateformes (10₁ à 10ₙ) au système (1) de stockage accédant ainsi en lecture et en écriture, via le réseau (RC) de communication, à l'image (V'₁ à V'ₙ) dans le cache (100) de chacun des volumes virtuels stockés par le système de stockage. Les différents composants et ressources du système (1) de stockage tels que, en outre, le cache (100), les moyens (11) de traitement et la librairie (P20₁ à P20ₙ) physique pourront être, de façon connue en soi, relié entre eux par des connexions rapides à débit de données élevé, comme par exemple les fibres optiques utilisées, par exemple, selon le protocole « Fiber Channel ».

De façon plus spécifique à la présente invention, les moyens (11) de traitement du système (1) de stockage comportent un module (30) de gestion responsable de l'émulation des volumes (V₁ à Vₙ) de la librairie en volumes virtuels (V'₁ à V'ₙ) du cache. Ce module (30) de gestion gère les accès, aussi bien en lecture qu'en écriture, sur toutes les ressources (20, 100) de stockage, à la fois sur les volumes (V₁ à Vₙ) virtuels de la librairie (P20₁ à P20ₙ) physique et sur les volumes virtuels (V'₁ à V'ₙ) de la librairie (V20₁ à V20ₙ) virtuelle du cache (100). Lors de requêtes transmises par les moyens (101) d'accès des plateformes (10₁ à 10ₙ) informatiques au système (1) de stockage, le module de gestion (30) autorisera ou interdira les accès aux données en fonction des demandes et de différents paramètres définis dans un algorithme (AG) de gestion de la bande passante d'accès au cache, implémenté dans le système (1). Cet algorithme de gestion (AG) pourra, par exemple, être stocké dans une mémoire accessible par les moyens (11) de traitement du système et permet de gérer les priorités dans le temps des accès aux ressources (20, 100) de stockage, par les plateformes informatiques (10₁ à 10ₙ) pour la lecture/écriture des volumes virtuels (V'₁ à V'ₙ) du cache (100) ou par le système (1) lui-même pour au moins une opération interne, dite de vidage du cache, permettant la copie des données d'au moins un volume virtuel (V'₁ à V'ₙ) de la librairie virtuelle (V20₁ à V20ₙ) vers au moins un volume virtuel (V₁ à Vₙ) de la librairie physique (P20₁ à P20ₙ). L'opération de vidage du cache est dite « interne » par opposition aux accès au cache (100) requis par les plateformes informatiques qui sont, à priori, extérieures au système de stockage. Cette opération correspond en effet à une opération de gestion du cache décidée par le système lui-même, en interne, d'après des algorithmes de gestion du cache (100). De même, le compactage des volumes (V₁ à Vₙ) valides de la librairie (P20₁ à P20ₙ) physique, décrit plus loin, correspond à une opération interne nécessitant un accès au cache (100). Le terme « opération interne » sera ainsi utilisé ici pour toute opération décidée en interne par le système lui-même pour gérer ses ressources de stockage. Au cours de l'opération de vidage du cache (100), un certains nombre de volumes virtuels (V'₁ à V'ₙ) de la librairie virtuelle (V20₁ à V20ₙ), candidats au vidage, sont sélectionnés pour pouvoir être recopiés dans la librairie physique (P20₁ à P20ₙ). L'opération de vidage démarrera, en fonction des ressources (20, 100) disponibles, avec au moins un de ces volumes virtuels (V'₁ à V'ₙ) candidats puis, lorsque l'utilisation des ressources (20, 100) le permet, sélectionnera d'autres volumes virtuels (V'₁ à V'ₙ) pour les recopier dans la librairie physique (P20₁ à P20ₙ). Une opération de vidage du cache (100) pourra donc concerner une pluralité de volumes virtuels (V'₁ à V'ₙ) à « vider » (à copier dans la librairie physique) simultanément ou successivement au cours d'une opération de vidage donnée, en fonction de la disponibilité des ressources. Le démarrage d'une opération de vidage est conditionné par l'activité du système et par le remplissage du cache et les copies réalisées pendant ces opérations de vidage sont également contrôlées en fonction de l'activité et du remplissage, comme expliqué en détail ci-après. Ainsi, il est permis de gérer les priorités dans le temps des accès aux ressources (20, 100) de stockage par les plateformes informatiques (10₁ à 10ₙ) pour la lecture/écriture des volumes virtuels (V'₁ à V'ₙ) du cache (100) ou par le système (1) lui-même pour au moins une opération interne. En outre, selon certains modes de réalisation, l'invention comporte au moins un calcul d'au moins un indice d'activité du cache par périodes de temps déterminées, reflétant l'utilisation de la bande passante d'accès au cache (100). De la sorte, l'utilisation de la bande passante d'accès au cache (l'utilisation des ressources, d'une manière générale) conditionne les accès au cache (100) par les plateformes informatiques (10₁ à 10ₙ) ou par le système (1) lui-même. Selon certains modes de réalisation, l'invention comporte au moins un calcul d'au moins un taux de remplissage du cache permettant de déterminer, par exemple, si des données peuvent être inscrites dans le cache ou si le cache doit être vidé, etc. Ainsi, dans divers modes de réalisation, l'invention permet de réguler l'utilisation de la bande passante d'accès au cache, de façon à éviter tout blocage ou retard résultant d'une exploitation trop importante des ressources du système (1). En outre, l'invention permet de réguler le remplissage du cache (100) tout en gérant les priorités dans le temps des accès aux ressources (20, 100) de stockage du système (1), comme détaillé ci-après.

Dans certains modes de réalisation de l'invention, les différents moyens décrits ici pourront être supportés par une application logicielle exécutée sur les moyens (11) de traitement du système (1) de stockage. Ainsi, cette application logicielle constituera l'ensemble des modules (30, 31, 32, 33 et 34) décrits ici et sera responsable de l'interopérabilité des différents moyens du système (1) de stockage selon l'invention. Cette application logicielle coopèrera avec le système d'exploitation installé sur le système (1) de stockage pour gérer les opérations à réaliser. Selon l'invention, le système d'exploitation du système (1) de stockage pourra consister en n'importe quel système d'exploitation générant, de façon connue en soi, des données représentatives au moins d'informations relatives aux emplacements et à l'utilisation de l'ensemble des données présentes dans le système (1) de stockage. Ainsi, les informations générées par ce système d'exploitation sont utilisées par les moyens (11) de traitement du système (1) de stockage selon l'invention. Par exemple, le système d'exploitation du système (1) de stockage pourra consister en un système de type AIX. Dans ce cas, les données générées par ce système AIX, représentatives au moins d'informations relatives aux emplacements et à l'utilisation de l'ensemble des données de ce système, correspondent à un système de fichier journalisé de type JFS (« Journalized File System » selon la terminologie anglaise), particulièrement adapté à la mise en oeuvre de l'invention, bien que cette dernière puisse être implémentée dans d'autres types de système d'exploitation générant d'autres types de systèmes de fichiers. Les données nécessaires à l'exécution de cette application auront bien entendu été au préalable enregistrées dans une mémoire accessible par les moyens (11) de traitement du système (1), par exemple la mémoire dans laquelle est stocké l'algorithme de gestion (AG).

Dans certains modes de réalisation de l'invention, le cache (100) consiste en une pluralité de disques durs (100₁ à 100ₙ) sur lesquels est répartie une pluralité de partitions (P₁ à Pₙ). Par exemple, les partitions (P₁ à Pₙ) installées sur ces disques durs pourront organisées selon le type RAID 5 (« Redundant Array of Inexpensive Disks », selon la terminologie anglaise, le type 5 étant également appelé « disk array with block-interleaved distributed parity ») de façon à permettre une réparation en cas de dommage. Dans certains modes de réalisation de l'invention, le module de gestion (30) comporte un module (33) d'organisation maintenant en permanence à jour des informations relatives à la répartition des partitions (P₁ à Pₙ) installées sur les disques durs et à la répartition des données enregistrées sur les différentes partitions (P₁ à Pₙ). Grâce au système de fichier journalisé JFS du système d'exploitation, ce module (33) d'organisation génère, à partir de ces informations relatives à la répartition des partitions (P₁ à Pₙ) et des données, au moins un répertoire (RP) contenant des informations relatives aux emplacements et à l'utilisation des volumes virtuels (V'₁ à V'ₙ) du cache (100). Les volumes virtuels (V'₁ à V'ₙ) du cache (100) sur lesquels une lecture ou une écriture est en cours sont identifiés comme « volumes virtuels ouverts » et les volumes virtuels sur lesquels aucune lecture ou écriture n'est en cours sont identifiés comme « volumes virtuels fermés ». Grâce au système de fichier journalisé JFS du système d'exploitation, ce module (33) d'organisation intègre les informations indiquant quels volumes virtuels (V'₁ à V'ₙ) sont ouverts et lesquels sont fermés et permet ainsi de répartir les données de façon équitable sur les différentes partitions (P₁ à Pₙ) du cache (100). Cette répartition équitable des données sur les différents disques durs du cache favorise une distribution homogène des volumes sur les disques supportant les partitions et permet d'éviter une concentration trop importante d'accès aux disques supportant les différentes partitions (P₁ à Pₙ) du cache (100). En effet, les disques durs (100₁ à 100ₙ) du cache (100) ont une bande passante limitée permettant un nombre limité d'accès simultanés aux différentes partitions (P₁ à Pₙ). Si plusieurs opérations requièrent un accès à un même disque, certaines opérations devront être mises en attente le temps que les autres opérations se terminent. La répartition équitable des données sur les disques permet de minimiser cette mise en attente des accès aux partitions (P₁ à Pₙ).

Dans certains modes de réalisation de l'invention, le module (30) de gestion comporte des moyens d'accès au contenu des ressources (20, 100) de stockage du système (1). En accédant aux ressources (20, 100) de stockage, le module (30) de gestion peut ainsi vérifier le contenu de la librairie physique (P20₁ à P20ₙ) et de la librairie virtuelle (V20₁ à V20ₙ) pour attribuer à chacun des volumes virtuels une valeur, dite statut. Ce statut permet au module (30) de gestion de l'état des volumes virtuels (V'₁ à V'ₙ et V₁ à Vₙ, respectivement) du cache (100) et de la librairie physique (P20₁ à P20ₙ). Le module (30) de gestion attribuera donc un statut à chacun des volumes virtuels en fonction du contenu des deux librairies, parmi au moins les statuts suivants :
- statut « disc only » lorsque le volume virtuel possède une image (V'₁ à V'ₙ) dans la librairie virtuelle (V20₁ à V20ₙ) du cache (100) mais ne possède pas d'image dans la librairie physique ou dont au moins une image (V₁ à Vₙ) dans la librairie physique (P20₁ à P20ₙ) n'est pas valide, c'est-à-dire ne contiennent pas les mêmes données que l'image (V'₁ à V'ₙ) dans la librairie virtuelle (V20₁ à V20n) ;
- statut « out of cache » lorsque le volume virtuel ne possède aucune image (V'₁ à V'ₙ) dans la librairie virtuelle (V20₁ à V20ₙ) du cache (100);
- statut « disk and tape » lorsque le volume virtuel possède des images valides à la fois dans la librairie virtuelle (V20₁ à V20ₙ) du cache (100) et dans la librairie physique (P20₁ à P20ₙ) ;
- statut « swapping in » lorsque le volume virtuel possède une image (V'₁ à V'ₙ) en cours de chargement dans la librairie virtuelle (V20₁ à V20ₙ), à partir d'une image (V₁ à Vₙ) dans la librairie physique (P20₁ à P20ₙ) ;
- statut « swapping out » lorsque le volume virtuel possède une image (V'₁ à V'ₙ) dans la librairie virtuelle (V20₁ à V20ₙ) en cours de copie dans une image (V₁ à Vₙ) de la librairie physique (P20₁ à P20ₙ) ;
- statut « incomplete » lorsque le volume virtuel (V'₁ à V'ₙ) de la librairie virtuelle (V20₁ à V20ₙ) est ouvert et ne contient pas de données ou contient des données incomplètes ;
- statut « moving out » lorsque le volume virtuel (V'₁ à V'ₙ) de la librairie virtuelle (V20₁ à V20ₙ) est en cours de copie d'une partition (P₁ à Pₙ) du cache (100) dans une autre ;
- statut « swappable » lorsque le volume virtuel possède une image (V'₁ à V'ₙ) dans la librairie virtuelle (V20₁ à V20ₙ) du cache (100) mais dont au moins une image (V₁ à Vₙ) dans la librairie physique (P20₁ à P20ₙ) n'est pas valide ou que l'image (V'₁ à V'ₙ) dans la librairie virtuelle (V20₁ à V20ₙ) est en cours de copie dans une image (V₁ à Vₙ) de la librairie physique (P20₁ à P20ₙ), c'est-à-dire que le volume est soit en statut « disc only » soit en statut « swapping out ».

Dans certains modes de réalisation de l'invention, le module de gestion (30) comporte un module (31) de contrôle de l'activité du cache calculant au moins un indice d'activité du cache par périodes de temps déterminées. Cet indice d'activité du cache par périodes de temps déterminées, pourra, par exemple, correspondre au nombre moyen de volumes virtuels (V'₁ à V'ₙ) ouverts dans le cache (100), c'est-à-dire les volumes virtuels (V'₁ à V'ₙ) du cache (100) sur lesquels une lecture ou une écriture est en cours pendant une période de temps déterminée. De façon plus précise, l'indice d'activité pourra être calculé sur une période de temps glissante, c'est-à-dire en répétant le calcul de l'indice sur plusieurs périodes de temps déterminées successives et en calculant la moyenne des indices d'activité obtenu sur chacune de ces périodes de temps successives. Ainsi, la moyenne calculée sur plusieurs indices d'activité ponctuels successifs permet au calcul de l'indice d'activité d'être plus performant, en supprimant les éventuelles variations brutales et ponctuelles de l'activité. L'indice d'activité obtenu suite à ce calcul moyen est donc lissé (filtre passe-bas) et réellement représentatif de l'activité du cache (100). L'indice d'activité du cache par périodes de temps déterminées, pourra donc correspondre à la moyenne, calculée sur un nombre déterminé de périodes de temps déterminées successives, du nombre moyen de volumes virtuels (V'₁ à V'ₙ) ouverts du cache (100) ouverts simultanément pendant chaque période de temps déterminée. Le module (30) de gestion peut donc ainsi surveiller l'activité du cache (100) en déclenchant ce calcul périodiquement ou ponctuellement lors d'une allocation d'espace pour un nouveau volume virtuel (V'₁ à V'ₙ) dans le cache (100).

Dans certains modes de réalisation de l'invention, le module de gestion (30) comporte également un module (32) de contrôle du remplissage du cache calculant au moins un taux de remplissage du cache à un instant donné. Plus précisément, cet instant donné pourra être déterminé en fonction des opérations effectuées par le système (1) de stockage. Par exemple, ce calcul du taux de remplissage pourra avoir lieu à chaque fois qu'une opération du système se traduit par une fermeture d'un volume virtuel (V'₁ à V'ₙ) du cache (100) et/ou par la fin d'une opération de vidage du cache (100), et/ou au cours d'une opération de vidage, lorsque la copie d'un volume virtuel (V'₁ à V'ₙ) du cache (100) est terminée et/ou une nouvelle allocation d'un espace de stockage dans le cache (100) pour définir un volume virtuel (V'₁ à V'ₙ) du cache. On notera au passage qu'une ouverture d'un volume virtuel (V'₁ à V'ₙ) du cache (100) résulte en une définition de l'espace maximal réservé aux volumes virtuels (V'₁ à V'ₙ) dans le cache (100) de façon à ce que la plateforme ayant requis l'ouverture d'un volume virtuel (V'₁ à V'ₙ) puisse y enregistrer des données de la taille d'un volume virtuel (V'₁ à V'ₙ) entier et, lors de la fermeture de ce volume virtuel (V'₁ à V'ₙ) du cache (100), si ce volume virtuel n'est pas complet, c'est-à-dire qu'il ne contient pas autant de données que ce qui est possible, le système (1) de stockage attribue seulement la taille nécessaire à ce volume virtuel (V'₁ à V'ₙ) au lieu de lui conserver la taille maximale possible pour les volumes virtuels (V'₁ à V'ₙ). Le module (30) de gestion peut donc ainsi surveiller le remplissage du cache (100) en déclenchant ce calcul périodiquement ou ponctuellement lors d'une allocation d'espace pour un nouveau volume virtuel (V'₁ à V'ₙ) dans le cache (100), la fermeture d'un volume ne nécessitant pas forcément une estimation du remplissage du cache (100).

Dans certains modes de réalisation de l'invention, le module (32) de contrôle du remplissage du cache calcule deux taux de remplissage différents. Il calcule, d'une part, un taux de remplissage, dit individuel, correspondant à un calcul du taux de remplissage sur chacune des partitions (P₁ à Pₙ) du cache (100) individuellement et, d'autre part, un taux de remplissage, dit moyen, correspondant à un calcul du taux de remplissage de l'ensemble des partitions (P₁ à Pₙ) du cache (100). Dans les modes de réalisation où le module (30) de gestion attribue un statut aux volumes virtuels, le taux de remplissage moyen du cache (100) pourra correspondre, pour l'ensemble des partitions (P₁ à Pₙ) du cache (100), à la somme de la taille des données présentes dans les volumes virtuels (V'₁ à V'ₙ) fermés dont le statut est « disc only » et de la taille allouée aux volumes virtuels (V'₁ à V'ₙ) ouverts, quels que soient leurs statuts, cette somme étant rapportée à la taille totale disponible dans l'ensemble des partitions (P₁ à Pₙ) du cache (100), pour obtenir le taux de remplissage moyen de l'ensemble des partitions (P₁ à Pₙ) du cache (100). De même, le taux de remplissage individuel de chaque partition (P₁ à Pₙ) du cache (100) à un instant donné pourra correspondre, pour chacune des partitions (P₁ à Pₙ) du cache (100) individuellement, à la taille des données présentes dans les volumes virtuels (V'₁ à V'ₙ) dont le statut est « disc only », qu'ils soient ouverts ou fermés, cette taille étant rapportée, pour chaque partition (P₁ à Pₙ), à la taille totale disponible dans la partition (P₁ à Pₙ) considérée, pour obtenir le taux de remplissage individuel de chaque partition (P₁ à Pₙ). Dans des modes de réalisation où le module (30) de gestion n'attribue pas de statuts aux volumes virtuels, les taux de remplissage du cache pourront correspondre soit à la taille totale des données présentes seulement dans les volumes virtuels (V'₁ à V'ₙ) fermés dans le cache (100), soit à la taille totale des données présentes à la fois dans les volumes virtuels (V'₁ à V'ₙ) fermés et dans les volumes virtuels (V'₁ à V'ₙ) ouverts.

En fonction de l'algorithme (AG) de gestion de la bande passante d'accès au cache, le module de gestion (30) utilise le résultat des calculs réalisés par les modules de contrôle (31) d'activité du cache et de contrôle (32) du taux de remplissage du cache, de façon à gérer les accès aux ressources (20, 100) de stockage du système (1). Les accès au cache (100) pourront, bien entendu, être requis par les plateformes informatiques (10₁ à 10ₙ) pour la lecture/écriture des volumes virtuels (V'₁ à V'ₙ), mais également par le système (1) lui-même pour une opération de vidage de tout ou partie du cache (100) vers la librairie (P20₁ à P20ₙ) physique. Ainsi, l'algorithme (AG) de gestion de la bande passante d'accès au cache (100) permet de donner une priorité dans le temps aux différents accès aux ressources (20, 100) de stockage requis pour l'exécution des différentes opérations réalisables par le système (1) selon l'invention. De façon plus précise, le module (30) de gestion compare l'indice d'activité du cache avec un seuil minimum d'activité et un seuil maximum d'activité, compare le taux de remplissage individuel des différentes partitions (P'₁ à P'ₙ) du cache (100) avec un seuil maximum de remplissage et compare le taux de remplissage moyen du cache (100) avec un premier seuil, dit seuil de priorité, au-dessous duquel le remplissage du cache (100) est prioritaire par rapport au vidage et un deuxième seuil, dit seuil de démarrage du vidage, au-dessus duquel le vidage du cache (100) peut être effectué. Cette comparaison permet au module (30) de gestion de gérer les accès au cache (100) grâce à l'algorithme (AG) de gestion de la bande passante d'accès au cache. Dans certains modes de réalisation de l'invention, l'algorithme (AG) de gestion comporte de préférence l'ensemble des règles décrites ci-après, mais de façon plus générale, au moins une de ces règles. L'invention prévoit également que l'utilisation ces différentes règles soit modifiable grâce à un paramétrage de l'algorithme (AG) de gestion.

Une première règle consiste en ce que si la valeur du taux de remplissage individuel d'une partition (P₁ à Pₙ) du cache (100) est supérieure à la valeur du seuil maximum de remplissage, quelle que soit la valeur de l'indice d'activité du cache (100), l'opération de vidage du cache (100) est impérative et autorisée à démarrer au détriment éventuel des accès au cache (100) par les plateformes informatiques (10₁ à 10ₙ), une partie de la bande passante d'accès au cache (100) étant alors utilisée par la copie d'un ou plusieurs volume(s) virtuel(s) (V'₁ à V'ₙ) de cette partition (P₁ à Pₙ) vers la librairie physique (P20₁ à P20ₙ) au cours de ce vidage.

Une autre règle consiste en ce que si la valeur de l'indice d'activité du cache (100) est inférieure ou égale à la valeur du seuil minimum d'activité, toute opération de vidage du cache (100) est autorisée à démarrer, pour permettre la copie d'un ou plusieurs volume(s) virtuel(s) (V'₁ à V'ₙ) vers la librairie physique (P20₁ à P20ₙ).

Une autre règle consiste en ce que si la valeur de l'indice d'activité du cache (100) est comprise entre la valeur du seuil minimum d'activité et la valeur du seuil maximum d'activité, une opération de vidage du cache (100) déjà en cours est autorisée à se poursuivre, la copie d'un ou plusieurs volume(s) virtuel(s) (V'₁ à V'ₙ) du cache (100) vers la librairie physique (P20₁ à P20ₙ) étant autorisée pendant cette opération de vidage en cours, mais, s'il n'existe pas d'opération de vidage en cours, une nouvelle opération de vidage du cache (100) n'est pas autorisée à démarrer. Ainsi, une nouvelle opération de vidage du cache (100) ne sera pas autorisée à démarrer, seuls les opérations de vidages déjà en cours étant autorisées à se poursuivre et la copie de volumes virtuels du cache (100) sélectionnés comme candidats au vidage au cours de cette opération sera autorisée à être effectuée. De plus, ces conditions fixées par les indices d'activité peuvent être levées par les conditions fixées par les taux de remplissage individuel et moyen, c'est-à-dire qu'une nouvelle opération de vidage sera autorisée à démarrer si le taux de remplissage individuel dépasse le seuil maximum de remplissage ou si le taux de remplissage moyen dépasse le seuil de démarrage du vidage.

Une autre règle consiste en ce que si la valeur de l'indice d'activité du cache (100) est supérieure à la valeur du seuil maximum d'activité, une nouvelle opération de vidage du cache (100) n'est pas autorisée à démarrer et une opération de vidage du cache (100) déjà en cours est interrompue, au profit des accès au cache (100) par les plateformes informatiques (10₁ à 10ₙ), sauf si la valeur du taux de remplissage individuel du cache (100) est supérieure à la valeur du seuil maximum de remplissage ou si la valeur du taux de remplissage moyen du cache (100) est supérieure au seuil de démarrage du vidage, une nouvelle copie d'un ou plusieurs volume(s) virtuel(s) (V'₁ à V'ₙ) du cache (100) vers la librairie physique (P20₁ à P20ₙ), pendant une opération de vidage déjà en cours, étant interdite, tandis qu'une copie déjà en cours d'un ou plusieurs volume(s) virtuel(s) (V'₁ à V'ₙ) du cache (100) vers la librairie physique (P20₁ à P20ₙ), pendant cette opération de vidage en cours, est autorisée à se terminer. Ainsi, de même que précédemment, ces conditions fixées par les indices d'activité peuvent être levées par les conditions fixées par les taux de remplissage individuel et moyen, c'est-à-dire que si la valeur du taux de remplissage individuel ou du taux de remplissage moyen du cache (100) est supérieure, respectivement, à la valeur du seuil maximum de remplissage ou du seuil de démarrage du vidage, une nouvelle opération de vidage du cache (100) pourra avoir lieu.

Une autre règle consiste en ce que si la valeur du taux de remplissage moyen de l'ensemble des partitions (P₁ à Pₙ) du cache (100) est inférieure ou égale à la valeur du seuil de priorité, les accès aux ressources (20, 100) de stockage en réponse aux requêtes transmises par les moyens (101) d'accès des plateformes (10₁ à 10ₙ) informatiques au système (1) de stockage sont prioritaires par rapport aux accès nécessaires à une copie de volumes nécessitant les mêmes ressources (20, 100) au cours d'une opération de vidage du cache (100), cette copie pouvant alors être différée jusqu'à libération de ces ressources (20, 100).

Une autre règle consiste en ce que si la valeur du taux de remplissage moyen de l'ensemble des partitions (P₁ à Pₙ) du cache (100) est supérieure au seuil de priorité, les accès aux ressources (20, 100) de stockage en réponse aux requêtes transmises par les moyens (101) d'accès des plateformes (10₁ à 10ₙ) informatiques au système (1) de stockage ne sont pas prioritaires par rapport aux accès nécessaires à une copie de volumes nécessitant les mêmes ressources (20, 100) au cours d'une opération de vidage du cache (100) qui peut donc démarrer ou se poursuivre au détriment éventuel des accès aux ressources (20, 100) de stockage par les plateformes informatiques (10₁ à 10ₙ).

Une autre règle consiste en ce que si la valeur du taux de remplissage moyen de l'ensemble des partitions (P₁ à Pₙ) du cache (100) est inférieure ou égale à la valeur du seuil de démarrage du vidage, une opération de vidage du cache (100) vers la librairie physique (P20₁ à P20ₙ) n'est autorisée à démarrer que si la valeur de l'indice d'activité du cache (100) est inférieure ou égale à la valeur du seuil minimum d'activité.

Une autre règle consiste en ce que si la valeur du taux de remplissage moyen de l'ensemble des partitions (P₁ à Pₙ) du cache (100) est supérieure à la valeur du seuil de démarrage du vidage, une opération de vidage du cache (100) vers la librairie physique (P20₁ à P20ₙ) est impérative et autorisée à démarrer.

De plus, l'algorithme pourra, dans une variante de réalisation, avoir été paramétré de telle sorte que le seuil maximum de remplissage et le seuil de démarrage du vidage aient la même valeur et soient en fait un seul et même seuil qui conditionne le démarrage du vidage. Les calculs des taux de remplissage individuel et moyen permettent donc de contrôler les opérations réalisées par le système (1) avec précision en fonction de l'utilisation des différentes partitions du cache (100). Le système permet ainsi une souplesse d'utilisation permettant à un opérateur de fixer différentes valeurs pour les seuils et de contrôler les différentes opérations réalisées en fonction des paramètres qu'il aura choisis dans l'algorithme de gestion.

Ces différentes règles et le paramétrage de l'algorithme et des seuils permet donc une utilisation souple du système et un opérateur responsable du paramétrage pourra, par exemple, choisir de fixer le seuil de priorité à une valeur nulle de façon à ce que le remplissage ne soit jamais prioritaire sur le vidage. De même, le paramétrage des seuils permet, par exemple, de fixer le seuil de priorité à une valeur supérieure à celle du seuil de démarrage du vidage, de façon à ce que, lorsque le taux de remplissage moyen dépasse le seuil de démarrage du cache, une opération de vidage soit autorisée à démarrer mais le remplissage du cache reste prioritaire par rapport au vidage. A l'inverse, le seuil de priorité pourra être fixé à une valeur inférieure à celle du seuil de démarrage du vidage, de façon à ce que, lorsque le taux de remplissage moyen dépasse le seuil de priorité, une opération de vidage du cache soit prioritaire par rapport au remplissage et si le seuil de démarrage du vidage est atteint, l'opération de vidage impérative sera déclenchée immédiatement, en priorité par rapport au remplissage. L'invention permet donc de nombreuses fonctionnalités différentes mais l'essentiel est, en général et dans la mesure du possible, de favoriser les accès aux ressources par les plateformes informatiques.

Enfin, l'algorithme sera de préférence paramétré tel qu'expliqué ci-dessus, de telle sorte que si l'indice d'activité est inférieur ou égal au seuil minimum d'activité, une opération de vidage du cache peut démarrer quelques soient les valeurs des taux de remplissage, dans la mesure où il existe des volumes virtuels fermés dont l'état est « disk only », candidats au vidage du cache (100). Cependant, le paramétrage pourra être différent et requérir un taux de remplissage donné pour permettre le démarrage d'une opération de vidage. De plus, on notera ici que les règles fixées en fonction des valeurs des indices et taux ont été fixées dans une relation du type « inférieur ou égale » et « supérieur », mais bien entendu, la relation pourra être du type « inférieur » et « supérieur ou égal » ou toute combinaison de ces relations, sans sortir de l'esprit de l'invention.

Dans certains modes de réalisation de l'invention, le module (33) d'organisation coopère avec les modules (31) de contrôle d'activité du cache et de contrôle (32) du remplissage du cache pour répartir les données de façon équitable sur les différentes partitions (P₁ à Pₙ) du cache (100), afin de favoriser une distribution homogène des volumes virtuels sur l'ensemble des disques supportant les différentes partitions (P₁ à Pₙ) du cache (100). Ainsi, grâce à cette coopération, le module (30) de gestion permet que la répartition équitable des données sur les différentes partitions (P₁ à Pₙ) du cache (100) se fasse uniquement lorsque l'activité et le remplissage du cache (100) le permettent. Le module (31) de contrôle d'activité du cache comporte des moyens de consultation des informations générées par le module (33) d'organisation. En consultant les informations générées par le module (33) d'organisation, le module (31) de contrôle d'activité du cache peut ainsi calculer l'indice d'activité du cache (100) en dénombrant le nombre de volumes virtuels (V'₁ à V'ₙ) ouverts dans le cache (100). Le seuil minimum d'activité correspond à une valeur d'activité pour laquelle on considère que les ressources (20, 100) du système (1) sont sous-exploitées, ou exploitées de manière suffisamment faible pour permettre d'effectuer des opérations de vidage du cache (100). Le système (1) peut alors lancer, en interne, c'est-à-dire de lui-même, sans intervention des plateformes informatiques, des opérations de vidage du cache (100). Ces opérations de vidage du cache (100) consistent en un ensemble de copies de volumes virtuels (V'₁ à V'ₙ) dont le statut est « disc-only », en parallèle des accès par les plateformes informatiques qui sont, dans le cas où l'indice d'activité passe en dessous du seuil minimum d'activité, suffisamment peu nombreux pour permettre d'effectuer au moins une opération de vidage sans risquer de limiter les accès au cache par les plateformes informatiques. Le seuil maximum d'activité correspond, quant à lui, au nombre total de volumes virtuels (V'₁ à V'ₙ) du cache qui, lorsqu'ils sont ouverts en même temps, consomment une fraction de bande passante jugée trop importante pour permettre de démarrer une opération interne nécessitant un accès au cache. La valeur de ce seuil aura donc été choisie au préalable pour éviter de créer des conflits d'accès aux différentes partitions (P₁ à Pₙ) du cache (100). De même, le module (32) de contrôle du remplissage du cache (100), contrôlé par le module (30) de gestion, comporte des moyens de consultation des informations générées par le module (33) d'organisation pour calculer, d'une part, le taux de remplissage moyen du cache (100) et, d'autre part, le taux de remplissage individuel de chacune des partitions (P₁ à Pₙ) du cache (100). Comme mentionné précédemment, le contrôle du contenu des librairies physique et virtuelle par le module (30) de gestion permet d'attribuer aux volumes virtuels des statuts qui servent pour les calculs des taux de remplissage par le module (32) de contrôle du remplissage du cache (100).

Dans certains modes de réalisation de l'invention, le module de gestion (30), lors de l'opération de vidage du cache (100), utilise les résultats des calculs du module (32) de contrôle du remplissage du cache pour sélectionner les volumes virtuels (V'₁ à V'ₙ) du cache (100) à copier dans la librairie (P20₁ à P20ₙ) physique. Les volumes virtuels (V'₁ à V'ₙ) du cache (100) ainsi sélectionnés pour une opération de vidage sont des volumes virtuels (V'₁ à V'ₙ) fermés dont le statut est « Disc Only » car ils ne sont pas en cours d'utilisation et ils ne possèdent pas d'image dans la librairie physique ou possèdent au moins une image dans la librairie physique qui n'est pas valide. Dans certains modes de réalisation particulièrement avantageux, cette sélection pourra être effectuée selon une règle dite LRU (« Less Recently Used », selon la terminologie anglaise). Les volumes virtuels (V'₁ à V'ₙ) sélectionnés selon cette règle seront les volumes virtuels (V'₁ à V'ₙ) les moins récemment accédés, en lecture ou en écriture, par les plateformes (10₁ à 10ₙ) informatiques. Cette règle pourra être appliquée soit pour une partition (P₁ à Pₙ) donnée du cache (100) si la valeur du taux de remplissage individuel de cette partition est supérieure ou égale à la valeur du seuil maximum de remplissage, soit pour l'ensemble des partitions (P₁ à Pₙ) du cache (100) si les valeurs des taux de remplissage individuels de toutes les partitions sont inférieures à la valeur du seuil maximum de remplissage.

Dans certains modes de réalisation de l'invention, le module (30) de gestion comporte également un module (34) de contrôle de l'activité de la librairie (P20₁ à P20ₙ). Ce module (34) de contrôle de l'activité de la librairie maintient en permanence à jour au moins des informations relatives à l'utilisation des lecteurs (P200₁ à P200ₙ) et/ou des cartouches (P21₁ à P21ₙ) des librairies (P20₁ à P20ₙ) sous le contrôle du système (1) de stockage. Ces informations permettent au module (30) de gestion de gérer les priorités dans le temps des accès aux ressources (20, 100) de stockage, notamment en fonction de la disponibilité des lecteurs (P200₁ à P200ₙ) et/ou des cartouches (P21₁ à P21ₙ). D'une part, ce module (34) permet donc de réguler les accès aux ressources (20, 100) de stockage par le système (1) lui-même pour une opération de vidage du cache (100) vers la librairie (P20₁ à P20ₙ) physique. D'autre part, ce module (34) permet également de réguler les accès aux ressources (20, 100) de stockage par les plateformes (10₁ à 10ₙ) informatiques pour la lecture/écriture d'un volume virtuel (V'₁ à V'ₙ) non présent dans le cache (100) et nécessitant donc une consultation de la librairie (P20₁ à P20ₙ) physique pour la copie d'un volume virtuel (V₁ à Vₙ) de cette librairie (P20₁ à P20ₙ) physique vers le cache (100), sous la forme d'un volume virtuel (V'₁ à V'ₙ) de la librairie (V20₁ à V20ₙ) virtuelle.

Dans certains modes de réalisation de l'invention, le module (30) de gestion, grâce à ses moyens d'accès au contenu des ressources (20, 100) de stockage, maintient en permanence à jour au moins des informations relatives à la validité des volumes (V₁ à Vₙ) présents dans les cartouches (P21₁ à P21ₙ) des librairies (P20₁ à P20ₙ) physiques sous le contrôle du système (1) de stockage. Le module (30) de gestion vérifie ainsi en permanence que les données présentes dans la librairie sont à jour par rapport aux volumes virtuels (V'₁ à V'ₙ) éventuellement modifiés dans le cache (100) par les plateformes (10₁ à 10ₙ) informatiques. Ce module de gestion (30), responsable de l'émulation des volumes virtuels (V₁ à Vₙ) de la librairie physique (P20₁ à P20ₙ) en volumes virtuels (V'₁ à V'ₙ) de la librairie virtuelle (V20₁ à V20ₙ) du cache (100), offre la possibilité qu'un volume virtuel (V'₁ à V'ₙ) du cache (100) possède des images (V₁ à Vₙ) multiples dans la librairie physique (P20₁ à P20ₙ) mais, en attribuant des statuts aux volumes virtuels, permet que les volumes virtuels (V'₁ à V'ₙ) du cache (100) qui seront pris en compte par le module (32) de contrôle du remplissage du cache, dans le calcul du taux de remplissage, correspondent seulement aux volumes virtuels (V'₁ à V'ₙ) du cache (100) dont les images (V₁ à Vₙ) présentes dans la librairie physique (P20₁ à P20ₙ) ne sont pas toutes valides (volumes dont le statut est « disc only »). Ces informations de validité permettent au module (30) de gestion de comparer le nombre de volumes virtuels (V₁ à Vₙ) obsolètes dans les cartouches (P21₁ à P21ₙ) de la librairie (P20₁ à P20ₙ) physique avec un seuil maximum d'invalidité. Ainsi, lorsque cet espace occupé par ces volumes virtuels (V₁ à Vₙ) obsolètes atteint ce seuil, le module (30) de gestion effectue un compactage des volumes (V₁ à Vₙ) valides de la librairie (P20₁ à P20ₙ) physique, dans les cartouches (P21₁ à P21ₙ) contenant des volumes virtuels (V₁ à Vₙ) non utilisés dans la librairie (P20₁ à P20ₙ) physique et/ou correspondant à des volumes virtuels (V'₁ à V'ₙ) fermés dans le cache (100). Ce compactage est réalisé par le module (30) de gestion en contrôlant la lecture de l'ensemble des volumes (V₁ à Vₙ) valides des cartouches (P21₁ à P21ₙ) sources contenant des volumes (V₁ à Vₙ) obsolètes et la copie simultanée de ces volumes (V₁ à Vₙ) valides dans des cartouches (P21₁ à P21ₙ) cibles, de façon à effacer ces cartouches (P21₁ à P21ₙ) sources et à n'obtenir que des cartouches (P21₁ à P21ₙ) contenant des volumes (V₁ à Vₙ) valides dans la librairie (P20₁ à P20ₙ) physique. De plus, dans certains modes de réalisation de l'invention, le module (30) de gestion utilise les résultats des opérations réalisées par les modules de contrôle (31) de l'activité du cache et de contrôle (32) du remplissage du cache, de façon à mettre à jour les données dans les cartouches (P21₁ à P21ₙ) de la librairie (P20₁ à P20ₙ), en fonction de l'activité et du remplissage du cache (100). Ainsi, ce compactage des données dans les cartouches (P21₁ à P21ₙ) pourra être effectuée en favorisant les accès aux ressources (20, 100) de stockage par les plateformes (10₁ à 10ₙ) informatiques par rapport aux accès nécessaires à ce compactage. Par exemple, ce compactage pourra n'avoir lieu que si les accès aux ressources physiques (20) de stockage sont peu nombreux pendant une période de temps déterminée. Le module (30) de gestion pourra, dans certains modes de réalisation de l'invention, comparer le nombre de volumes (V₁ à Vₙ) obsolètes dans les cartouches (P21₁ à P21ₙ) de la librairie (P20₁ à P20ₙ) physique avec un seuil maximum d'invalidité. Si ce seuil dépassé, le module (30) de gestion effectuera un compactage des volumes virtuels (V₁ à Vₙ) valides de la librairie physique. Ainsi, les cartouches (P21₁ à P21ₙ) sources contenant des volumes invalides seront effacées et seules resteront des cartouches (P21₁ à P21ₙ) contenant des volumes (V₁ à Vₙ) valides, par exemple mis bout à bout de façon à économiser une capacité de stockage jusqu'alors gaspillée par des volumes invalides ou effacés.

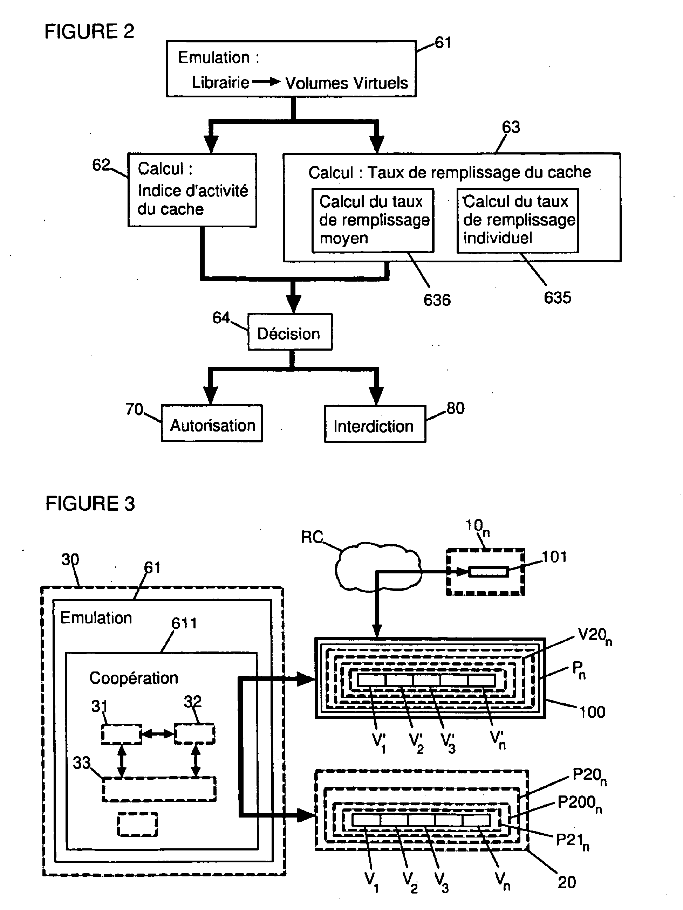

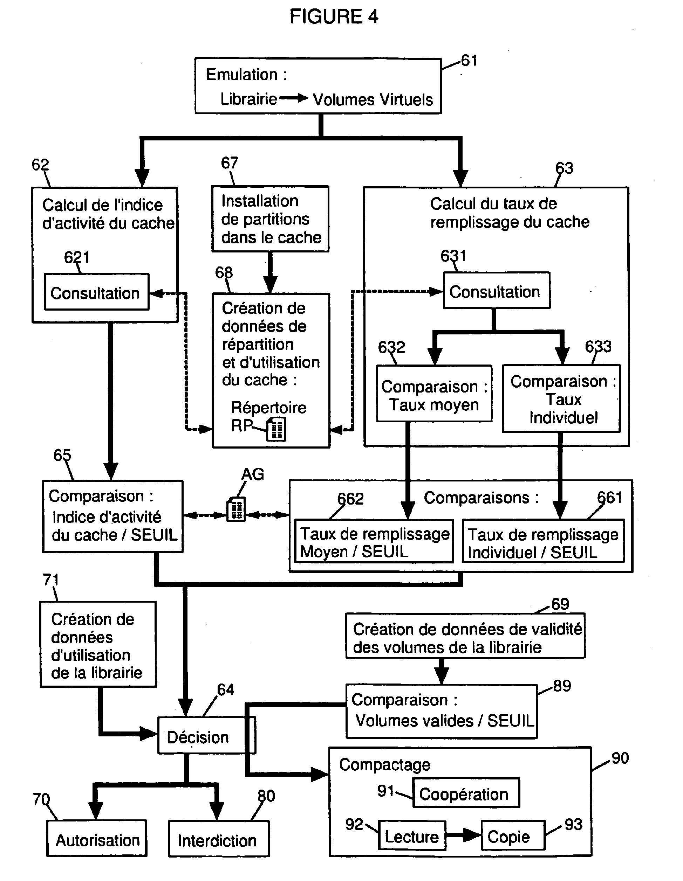

Le procédé selon l'invention va maintenant être décrit en référence aux figures 2 à 4. Le procédé selon l'invention est mis en oeuvre par un système (1) de stockage du type de celui décrit ci-dessus. Ce procédé comporte au moins les étapes suivantes :
- émulation (61) des volumes (V₁ à Vₙ) virtuels de la librairie (P20₁ à P20ₙ) physique en volumes virtuels (V'₁ à V'ₙ) de la librairie (V20₁ à V20ₙ) virtuelle du cache (100), par un module (30) de gestion, présent dans les moyens (11) de traitement du système (1) de stockage et gérant les accès aux ressources (20, 100) de stockage, à la fois sur les volumes (V₁ à Vₙ) virtuels de la librairie (P20₁ à P20ₙ) physique et sur les volumes virtuels (V'₁ à V'ₙ) du cache (100), en fonction de requêtes transmises par les moyens (101) d'accès des plateformes (10₁ à 10ₙ) informatiques au système (1) de stockage ;
- calcul (62), par un module (31) de contrôle de l'activité du cache, d'au moins un indice d'activité du cache (100) par périodes de temps déterminées, cette étape de calcul (62) étant répétée pour surveiller l'évolution de l'activité du cache (100) périodiquement ou ponctuellement lors d'une allocation d'espace pour un nouveau volume virtuel (V'₁ à V'ₙ) dans le cache (100) ;
- calcul (63), par un module (32) de contrôle du remplissage du cache, d'au moins un taux de remplissage du cache (100) à un instant donné, cette étape de calcul (63) étant répétée pour surveiller l'évolution du remplissage du cache (100) périodiquement ou ponctuellement lors d'une allocation d'espace pour un nouveau volume virtuel (V'₁ à V'ₙ) dans le cache (100) ;
- décision (64), par le module (30) de gestion, en fonction du résultat de ces calculs et d'au moins un algorithme (AG) de gestion de la bande passante d'accès au cache (100), implémenté dans le système (1) de stockage, entre une autorisation (70) ou une interdiction (80) des accès aux ressources (20, 100) de stockage par les plateformes (10₁ à 10ₙ) informatiques pour la lecture/écriture des volumes virtuels (V'₁ à V'ₙ) dans le cache (100) ou par le système (1) lui-même pour au moins une opération, dite de vidage du cache, permettant la copie des données d'au moins un volume virtuel (V'₁ à V'ₙ) de la librairie virtuelle (V20₁ à V20ₙ) vers au moins un volume virtuel (V₁ à Vₙ) de la librairie physique (P20₁ à P20ₙ).

Préalablement à la mise en oeuvre des étapes décrites ci-dessus, le procédé pourra intégrer au moins une étape d'installation (67) d'une pluralité de partitions (P₁ à Pₙ) sur une pluralité de disques durs (100₁ à 100ₙ) constituant le cache (100). De plus, comme mentionné précédemment, le système peut comporter un module (33) d'organisation et le procédé comportera alors au moins une étape (68) de création et de mise à jour de données représentatives d'informations relatives à la répartition des partitions (P₁ à Pₙ) et à la répartition des données enregistrées sur les différentes partitions (P₁ à Pₙ). Le module (33) d'organisation génère, à partir de ces informations, au moins un répertoire (RP) contenant des informations relatives aux emplacements et à l'utilisation des volumes virtuels (V'₁ à V'ₙ), les volumes virtuels (V'₁ à V'ₙ) sur lesquels une lecture ou une écriture est en cours étant identifiés comme volumes virtuels ouverts et les volumes virtuels sur lesquels aucune lecture ou écriture n'est en cours étant identifiés comme volumes virtuels fermés. De plus, comme mentionné précédemment, le module (30) de gestion comporte des moyens d'accès au contenu des librairies physique (P20₁ à P20ₙ) et virtuelle (V20₁ à V20ₙ). Ces moyens d'accès permettent au module (30) de gestion d'attribuer à chacun des volumes virtuels un statut parmi les statuts décrits précédemment. Ces informations réunies par le module (30) de gestion permettent de déterminer si les différents volumes virtuels sont présents à la fois dans la librairie virtuelle (V20₁ à V20ₙ) et dans la librairie physique (P20₁ à P20ₙ) et de savoir si les différentes images des volumes virtuels sont valides et si les images (V'₁ à V'ₙ) dans la librairie virtuelle (V20₁ à V20ₙ) sont en cours d'utilisation ou non.

Dans les modes de réalisation où l'ensemble des modules (30, 31, 32, 33 et 34) est supporté par une application logicielle exécutée sur les moyens (11) de traitement du système (1) de stockage, le procédé comportera naturellement une étape d'installation de cette application logicielle dans le système d'exploitation du système (1) de stockage, grâce à l'enregistrement des données nécessaires à l'exécution de cette application dans une mémoire accessible par les moyens (11) de traitement du système (1). Comme expliqué précédemment, cette application logicielle sera responsable de l'interopérabilité des différents moyens du système (1) et pourra constituer à elle seule l'ensemble des modules (30, 31, 32, 33 et 34) du système (1).

Dans certains modes de réalisation de l'invention, l'étape (62) de calcul de l'indice d'activité du cache (100) par périodes de temps déterminées consiste en un calcul d'une moyenne, sur un nombre déterminé de périodes de temps déterminées et successives, du nombre maximum de volumes virtuels (V'₁ à V'ₙ) du cache (100) ouverts simultanément pendant chaque période de temps déterminée. Par exemple, le calcul pourra être réalisée sur 3 périodes de temps successives et le module (31) de contrôle de l'activité du cache (100) répétera ainsi 3 fois la mesure du nombre de les volumes virtuels (V'₁ à V'ₙ) du cache (100) sur lesquels une lecture ou une écriture est en cours pendant chacune de ces 3 périodes de temps consécutives. Ensuite, le module (31) de contrôle de l'activité fera la moyenne des 3 valeurs obtenues pour obtenir un nombre moyen de volumes ouverts qui est représentatif de la réalité car les variations brutales auront été lissées grâce à la moyenne sur plusieurs périodes successives. De façon plus simple, ce calcul pourrait aussi être réalisé sur une seule période mais il serait moins représentatif de la réalité et risquerait de ne pas permettre une bonne estimation de l'activité du cache (100).

Dans certains modes de réalisation de l'invention, l'étape (63) de calcul du taux de remplissage du cache (100) à un instant donné, par le module (32) de contrôle du remplissage du cache (100) comporte, d'une part, une étape (635) de calcul d'un taux de remplissage, dit individuel, correspondant à un calcul du taux de remplissage sur chacune des partitions (P₁ à Pₙ) du cache (100) individuellement et, d'autre part, une étape (636) de calcul d'un taux de remplissage, dit moyen, correspondant à un calcul du taux de remplissage de l'ensemble des partitions (P₁ à Pₙ) du cache (100). Dans les modes de réalisation où le module (30) de gestion attribue des statuts aux volumes virtuels, cette étape (636) de calcul du taux de remplissage moyen du cache (100), par le module (32) de contrôle du remplissage du cache (100), consiste en une mesure, pour l'ensemble des partitions (P₁ à Pₙ) du cache (100), de la somme de la taille totale des données présentes dans les volumes virtuels (V'₁ à V'ₙ) fermés et dont le statut est « disc only » et de la taille allouée aux virtuels (V'₁ à V'ₙ) ouverts, quels que soient leurs statuts, cette somme étant rapportée à la taille totale disponible dans l'ensemble des partitions (P₁ à Pₙ) du cache (100), pour obtenir le taux de remplissage moyen de l'ensemble des partitions (P₁ à Pₙ) du cache (100). De même, l'étape (635) de calcul du taux de remplissage individuel de chaque partition (P₁ à Pₙ) du cache (100), par le module (32) de contrôle du remplissage du cache (100), consiste, dans ce mode de réalisation, en une mesure, pour chacune des partitions (P₁ à Pₙ) du cache (100) individuellement, de la taille totale des données présentes dans les volumes virtuels (V'₁ à V'ₙ) dont le statut est « disc only », qu'ils soient ouverts ou fermés, cette taille étant rapportée à la taille totale disponible dans la partition (P₁ à Pₙ) du cache (100) considérée, pour obtenir le taux de remplissage moyen de chacune des partitions (P₁ à Pₙ) du cache (100).

Dans certains modes de réalisation de l'invention, le procédé comporte également au moins une étape de comparaison (65) de l'indice d'activité du cache avec un seuil minimum d'activité et un seuil maximum d'activité, une étape de comparaison (661) du taux de remplissage individuel du cache avec seuil maximum de remplissage et une étape de comparaison (662) du taux de remplissage moyen avec un premier seuil, dit seuil de priorité, au-dessous duquel le remplissage du cache (100) est prioritaire par rapport au vidage et un deuxième seuil, dit seuil de démarrage du vidage, au-dessus duquel le vidage du cache (100) peut être effectué. Ces étapes de comparaison sont mises en oeuvre par le module (30) de gestion pour gérer les accès au cache (100) grâce à l'algorithme (AG) de gestion de la bande passante d'accès au cache (100), implémenté dans le système (1) de stockage, comme expliqué précédemment pour les règles de gestion en fonction des différents seuils. Ces règles et le paramétrage de l'algorithme décrits précédemment ne seront pas détaillés à nouveau ici. Les calculs de l'indice d'activité et des taux de remplissage individuel et moyen permettent de contrôler les opérations réalisées par le système (1) avec précision en fonction de l'utilisation des différentes partitions du cache (100). Le système permet ainsi une souplesse d'utilisation permettant à un opérateur de fixer différentes valeurs pour les seuils et de contrôler les différentes opérations internes réalisées en fonction des valeurs des seuils et des paramètres qu'il aura choisis dans l'algorithme de gestion. Dans les modes de réalisation de l'invention où le système comporte un module (33) d'organisation, l'étape (62) de calcul de l'indice d'activité du cache (100), par le module (31) de contrôle d'activité du cache, comporte au moins une étape de consultation (621) des données générées par le module (33) d'organisation, pour calculer l'indice d'activité du cache (100) en comptant le nombre de volumes virtuels ouverts dans le cache (100). Le seuil maximum d'activité correspond au nombre total de volumes virtuels (V'₁ à V'ₙ) du cache (100) qui, lorsqu'ils sont ouverts en même temps, consomment une fraction de bande passante d'accès au cache (100) jugée trop importante pour permettre de démarrer une opération nécessitant un accès au cache (100). Lorsque ce seuil est atteint, une opération nécessitant un accès au cache (100) risquerait de saturer la bande passante, ou de créer un conflit d'accès aux différentes partitions (P₁ à Pₙ) du cache (100). De même, l'étape (63) de calcul du taux de remplissage du cache (100), par le module (32) de contrôle du remplissage du cache, comporte au moins une étape de consultation (631) des données générées par le module (33) d'organisation, pour connaître les volumes virtuels ouverts et fermés et calculer les taux de remplissage comme expliqué précédemment. Dans les modes de réalisation où le module (30) de gestion attribue des statuts aux volumes virtuels, cette étape de consultation (631) permet au module (32) de contrôle du remplissage du cache de calculer, d'une part, le taux de remplissage moyen du cache (100) grâce à une comparaison (632) de la somme, pour l'ensemble des partitions (P₁ à Pₙ) du cache (100), de la taille totale des données présentes dans les volumes virtuels (V'₁ à V'ₙ) ouverts , quels que soient leurs statuts, et de la taille des données présentes dans les volumes virtuels (V'₁ à V'ₙ) fermés dont le statut est « disc only », par rapport à la capacité totale de stockage dans l'ensemble des partitions (P₁ à Pₙ) du cache (100). Cette étape de consultation (631) permet au module (32) de contrôle du remplissage du cache de calculer, d'autre part, le taux de remplissage individuel de chacune des partitions (P₁ à Pₙ) du cache (100) grâce à une comparaison (633), pour une partition (P₁ à Pₙ) donnée, de la taille des données présentes dans les volumes virtuels (V'₁ à V'ₙ) dont le statut est « disc only », qu'il soient ouverts ou fermés, par rapport à la capacité totale de stockage de cette partition (P₁ à Pₙ) du cache (100). De plus, l'étape d'émulation (61) des volumes virtuels (V'₁ à V'ₙ) par le module (30) de gestion pourra comporter une étape de coopération (611) du module (33) d'organisation avec les modules de contrôle (31) d'activité du cache et de contrôle (32) du remplissage du cache pour répartir les données de façon équitable sur les différentes partitions (P₁ à Pₙ) du cache (100), afin de favoriser une distribution homogène des volumes virtuels (V'₁ à V'ₙ) sur les disques supportant les différentes partitions (P₁ à Pₙ) du cache (100). Cette répartition permet également d'éviter une concentration trop importante d'accès aux différents disques supportant les différentes partitions (P₁ à Pₙ) du cache (100).

Dans certains modes de réalisation, l'opération de vidage du cache (100), résulte d'une utilisation, par le module de gestion (30), des résultats des calculs du module (32) de contrôle du remplissage du cache, pour sélectionner les volumes virtuels (V'₁ à V'ₙ) du cache (100) à copier dans la librairie (P20₁ à P20ₙ) physique. Les volumes virtuels (V'₁ à V'ₙ) du cache (100) ainsi sélectionnés pour une opération de vidage sont des volumes virtuels (V'₁ à V'ₙ) fermés dont le statut est « Disc Only » car ils ne sont pas en cours d'utilisation et ils ne possèdent pas d'image dans la librairie physique ou possèdent au moins une image dans la librairie physique qui n'est pas valide. Dans certains modes de réalisation particulièrement avantageux, les volumes virtuels (V'₁ à V'ₙ) ainsi sélectionnés seront les volumes virtuels (V'₁ à V'ₙ) les moins récemment accédés, en lecture ou en écriture, par les plateformes (10₁ à 10ₙ) informatiques, soit dans une partition (P₁ à Pₙ) donnée du cache (100) si la valeur du taux de remplissage individuel de cette partition est supérieure ou égale à la valeur du seuil maximum de remplissage, soit dans l'ensemble des partitions (P₁ à Pₙ) du cache (100) si les valeurs des taux de remplissage individuels de toutes les partitions sont inférieures à la valeur du seuil maximum de remplissage.

Dans les modes de réalisation où le module (30) de gestion comporte un module (34) de contrôle de l'activité de la librairie, le procédé comporte au moins une étape (71) de création et de mise à jour de données représentatives d'informations relatives à l'utilisation des lecteurs et/ou des cartouches des librairies (P20₁ à P20ₙ) sous le contrôle du système (1) de stockage. Comme expliqué précédemment, ces informations permettent ainsi au module (30) de gestion de gérer les priorités dans le temps des accès aux ressources (20, 100) de stockage, d'une part, par le système (1) lui-même pour une opération de vidage du cache (100) vers la librairie (P20₁ à P20ₙ) physique et, d'autre part, par les plateformes (10₁ à 10ₙ) informatiques pour la lecture/écriture d'un volume virtuel (V'₁ à V'ₙ) non présent dans le cache (100) et nécessitant donc une consultation de la librairie (P20₁ à P20ₙ) physique pour la copie d'un volume (V₁ à Vₙ) de cette librairie (P20₁ à P20ₙ) physique vers le cache (100), sous la forme d'un volume virtuel (V'₁ à V'ₙ) de la librairie (V20₁ à V20ₙ) virtuelle.

Dans les modes de réalisation où le module (30) de gestion comporte des moyens d'accès au contenu des ressources (20, 100) de stockage du système (1), le module (30) de gestion peut mettre en oeuvre au moins une étape (69) de création et de mise à jour de données représentatives d'informations relatives à la validité des volumes (V₁ à Vₙ) présents dans les cartouches (P21₁ à P21ₙ) des librairies (P20₁ à P20ₙ) sous le contrôle du système (1) de stockage, par rapport aux volumes virtuels (V₁ à Vₙ) éventuellement modifiés dans le cache (100) par les plateformes (10₁ à 10ₙ) informatiques. Ces informations de validité permettent au module (30) de gestion de mettre en oeuvre une étape de comparaison (89) de l'espace occupé par les volumes (V₁ à Vₙ) obsolètes dans les cartouches (P21₁ à P21ₙ) de la librairie (P20₁ à P20ₙ) physique avec un seuil maximum d'invalidité. Lorsque l'espace occupé par ces volumes virtuels (V₁ à Vₙ) obsolètes atteint ce seuil, le module (30) de gestion effectue une étape de compactage (90) des volumes (V₁ à Vₙ) valides de la librairie (P20₁ à P20ₙ) physique. Ainsi, le module (30) de gestion pourra effectuer un compactage des volumes (V₁ à Vₙ) valides, extraits des cartouches (P21₁ à P21ₙ) contenant des volumes (V₁ à Vₙ) non utilisés et/ou correspondant à des volumes virtuels (V'₁ à V'ₙ) fermés, en contrôlant une lecture (92) de l'ensemble des volumes (V₁ à Vₙ) valides des cartouches (P21₁ à P21ₙ) sources contenant des volumes (V₁ à Vₙ) obsolètes et une copie (93) simultanée de ces volumes (V₁ à Vₙ) valides dans des cartouches (P21₁ à P21ₙ) cibles, de façon à effacer ces cartouches (P21₁ à P21ₙ) sources et à n'obtenir que des cartouches (P21₁ à P21ₙ) contenant des volumes (V₁ à Vₙ) valides dans la librairie (P20₁ à P20ₙ) physique.

Comme mentionné précédemment, les étapes d'émulation (61) des volumes virtuels (V₁ à Vₙ) de la librairie physique (P20₁ à P20ₙ) en volumes virtuels (V'₁ à V'ₙ) de la librairie virtuelle (V20₁ à V20ₙ) du cache (100) et de gestion du cache (100) par le module de gestion (30), offrent la possibilité qu'un volume virtuel (V'₁ à V'ₙ) du cache (100) possède des copies (V₁ à Vₙ), appelées images, multiples dans la librairie physique (P20₁ à P20ₙ). L'étape (69) de création et de mise à jour, par le module (30) de gestion, de données représentatives d'informations relatives à la validité des volumes (V₁ à Vₙ) présents dans les cartouches (P21₁ à P21ₙ) des librairies (P20₁ à P20ₙ) physiques permet donc que les volumes virtuels (V'₁ à V'ₙ) du cache (100) pris en compte par le module (32) de contrôle du remplissage du cache, dans le calcul du taux de remplissage, correspondent aux volumes virtuels (V'₁ à V'ₙ) du cache (100) dont le statut est « disc only », c'est-à-dire dont les copies (V₁ à Vₙ) présentes dans la librairie physique (P20₁ à P20ₙ) ne sont pas toutes valides

Enfin, l'étape (90) de compactage de la librairie (P20₁ à P20ₙ) physique pourra comporter une étape d'utilisation (91), par le module (30) de gestion, des résultats des opérations effectuées par le module (31) de contrôle de l'activité du cache, le module (32) de contrôle du remplissage du cache et le module (34) de contrôle de l'activité de la librairie (P20₁ à P20ₙ) physique. Grâce à cette utilisation (91), le compactage des volumes (V₁ à Vₙ) valides de la librairie (P20₁ à P20ₙ) physique par le module (30) de gestion sera réalisé en fonction de l'activité et du remplissage du cache (100), en favorisant les accès aux ressources (20, 100) de stockage par les plateformes (10₁ à 10ₙ) informatiques par rapport aux accès nécessaires à ce compactage.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système (1) de stockage de données générées, dans au moins un format, par au moins une plateforme (10₁ à 10ₙ) informatique et transmises au système (1) de stockage via au moins un réseau (RC) de communication, grâce à des moyens (101) d'accès de la plateforme au système (1) de stockage, le système (1) de stockage comportant des moyens (11) de traitement et des ressources (20, 100) de stockage comprenant, d'une part, des moyens (20) de stockage comportant au moins une librairie physique (P20₁ à P20ₙ) comprenant au moins un robot (P22) capable de charger et décharger au moins une cartouche (P21₁ à P21ₙ) de stockage de données dans au moins un lecteur (P200₁ à P200ₙ) permettant l'écriture et la lecture des données transmises par la plateforme (10₁ à 10ₙ) informatique dans la librairie physique (P20₁ à P20ₙ) et, d'autre part, des moyens (100) de mémorisation, dits cache (100), dans lesquels les moyens (11) de traitement du système (1) de stockage émulent, vis-à-vis des plateformes (10₁ à 10ₙ) informatiques, au moins une librairie virtuelle (V20₁ à V20ₙ) à partir d'au moins une librairie physique (P20₁ à P20ₙ) que le système (1) de stockage a sous son contrôle, les données ainsi stockées dans la librairie physique (P20₁ à P20ₙ) et la librairie virtuelle (V20₁ à V20ₙ) étant regroupées en ensembles de taille déterminée, dits volumes virtuels, possédant au moins une image (V₁ à Vₙ) dans la librairie physique (P20₁ à P20ₙ) et/ou une image (V'₁ à V'ₙ) dans la librairie virtuelle (V20₁ à V20ₙ), les moyens (101) d'accès des plateformes (10₁ à 10ₙ) au système (1) de stockage accédant ainsi en lecture et en écriture, via le réseau (RC) de communication, à l'image (V'₁ à V'ₙ) dans le cache (100) de chacun des volumes virtuels stockés par le système de stockage, **caractérisé en ce que** les moyens (11) de traitement du système (1) de stockage comportent un module (30) de gestion gérant les accès aux ressources (20, 100) de stockage, à la fois dans la librairie physique (P20₁ à P20ₙ) et dans la librairie virtuelle (V20₁ à V20ₙ), en fonction de requêtes transmises par les moyens (101) d'accès des plateformes (10₁ à 10ₙ) informatiques au système (1) de stockage, le module de gestion (30) étant responsable de l'émulation des volumes virtuels (V₁ à Vₙ) de la librairie physique en volumes virtuels (V'₁ à V'ₙ) de la librairie virtuelle du cache (100) et comportant, d'une part, un module (31) de contrôle de l'activité du cache calculant au moins un indice d'activité du cache par périodes de temps déterminées, reflétant l'utilisation de la bande passante d'accès au cache (100) et, d'autre part, un module (32) de contrôle du remplissage du cache calculant au moins un taux de remplissage du cache à un instant donné, le module de gestion (30) déclenchant ces calculs périodiquement ou ponctuellement lors d'une allocation d'espace pour un nouveau volume virtuel (V'₁ à V'ₙ) dans le cache (100) et utilisant le résultat de ces calculs, en fonction d'au moins un algorithme (AG) de gestion de la bande passante d'accès au cache, implémenté dans le système de stockage, de façon à réguler le remplissage du cache (100) tout en gérant les priorités dans le temps des accès aux ressources (20, 100) de stockage par les plateformes informatiques (10₁ à 10ₙ) pour la lecture/écriture des volumes virtuels (V'₁ à V'ₙ) du cache (100) ou par le système (1) lui-même pour au moins une opération, dite de vidage du cache (100), permettant la copie des données d'au moins un volume virtuel (V'₁ à V'ₙ) de la librairie virtuelle (V20₁ à V20ₙ) vers au moins un volume virtuel (V₁ à Vₙ) de la librairie physique (P20₁ à P20ₙ), le cache (100) consistant en une pluralité de disques durs (100₁ à 100ₙ) sur lesquels est répartie une pluralité de partitions (P₁ à Pₙ), le module de gestion (30) comportant un module d'organisation (33) maintenant en permanence à jour des informations relatives à la répartition des partitions (P₁ à Pₙ) installées sur les disques durs et à la répartition des données enregistrées sur les différentes partitions (P₁ à Pₙ), ce module (33) d'organisation générant, à partir de ces informations, au moins un répertoire (RP) contenant des informations relatives aux emplacements et à l'utilisation des volumes virtuels (V'₁ à V'ₙ) du cache (100), les volumes virtuels (V'₁ à V'ₙ) sur lesquels une lecture ou une écriture est en cours étant identifiés comme volumes virtuels ouverts et les volumes virtuels sur lesquels aucune lecture ou écriture n'est en cours étant identifiés comme volumes virtuels fermés, le module (31) de contrôle d'activité du cache comportant des moyens de consultation des informations générées par le module (33) d'organisation pour calculer l'indice d'activité du cache (100) en comptant le nombre de volumes virtuels ouverts dans le cache pendant une période de temps déterminée.

2. Système selon la revendication 1, **caractérisé en ce que** le module (30) de gestion comporte des moyens d'accès au contenu des ressources (20, 100) de stockage du système (1) et vérifie le contenu de la librairie physique (P20₁ à P20ₙ) et de la librairie virtuelle (V20₁ à V20ₙ) pour attribuer à chacun des volumes virtuels une valeur, dite statut, parmi au moins les statuts suivants : - statut ' disc only ' lorsque le volume virtuel possède une image (V'₁ à V'ₙ) dans la librairie virtuelle (V20₁ à V20ₙ) du cache (100) mais ne possède pas d'image dans la librairie physique ou dont au moins une image (V₁ à Vₙ) dans la librairie physique (P20₁ à P20ₙ) n'est pas valide, c'est-à-dire ne contiennent pas les mêmes données que l'image (V'₁ à V'ₙ) dans la librairie virtuelle (V20₁ à V20ₙ) ;
- statut ' out of cache ' lorsque le volume virtuel ne possède aucune image (V'₁ à V'ₙ) dans la librairie virtuelle (V20₁ à V20ₙ) du cache (100) ;
- statut ' disk and tape ' lorsque le volume virtuel possède des images valides à la fois dans la librairie virtuelle (V20₁ à V20ₙ) du cache (100) et dans la librairie physique (P20₁ à P20ₙ) ;
- statut' swapping in ' lorsque le volume virtuel possède une image (V'₁ à V'ₙ) en cours de chargement dans la librairie virtuelle (V20₁ à V20ₙ), à partir d'une image (V₁ à Vₙ) dans la librairie physique (P20₁ à P20ₙ) ;
- statut' swapping out' lorsque le volume virtuel possède une image (V'₁ à V'ₙ) dans la librairie virtuelle (V20₁ à V20ₙ) en cours de copie dans une image (V₁ à Vₙ) de la librairie physique (P20₁ à P20ₙ) ;
- statut ' incomplete ' lorsque le volume virtuel (V'₁ à V'ₙ) de la librairie virtuelle (V20₁ à V20ₙ) est ouvert et ne contient pas de données ou contient des données incomplètes ;
- statut ' moving out ' lorsque le volume virtuel (V'₁ à V'ₙ) de la librairie virtuelle (V20₁ à V20ₙ) est en cours de copie d'une partition (P₁ à Pₙ) du cache (100) dans une autre;
- statut ' swappable ' lorsque le volume virtuel possède une image (V'₁ à V'ₙ) dans la librairie virtuelle (V20₁ à V20ₙ) du cache (100) mais dont au moins une image (V₁ à Vₙ) dans la librairie physique (P20₁ à P20ₙ) n'est pas valide ou que l'image (V'₁ à V'ₙ) dans la librairie virtuelle (V20₁ à V20ₙ) est en cours de copie dans une image (V₁ à Vₙ) de la librairie physique (P20₁ à P20ₙ), c'est-à-dire que le volume est soit en statut ' disc only ' soit en statut ' swapping out '.

3. Système selon une des revendications 1 et 2, **caractérisé en ce que** le module (32) de contrôle du remplissage du cache calcule, d'une part, un taux de remplissage, dit individuel, correspondant à un calcul du taux de remplissage sur chacune des partitions (P₁ à Pₙ) du cache (100) individuellement et, d'autre part, un taux de remplissage, dit moyen, correspondant à un calcul du taux de remplissage de l'ensemble des partitions (P₁ à Pₙ) du cache (100).

4. Système selon la revendication 3, **caractérisé en ce que** le taux de remplissage moyen du cache (100) à un instant donné, calculé par le module (32) de contrôle du remplissage du cache, correspond, pour l'ensemble des partitions (P₁ à Pₙ) du cache (100), à la somme de la taille des données présentes dans les volumes virtuels (V'₁ à V'ₙ) fermés dont le statut est ' disc only ' et de la taille allouée, pour l'ensemble des partitions (P₁ à Pₙ), aux volumes virtuels (V'₁ à V'ₙ) ouverts, quels que soient leurs statuts, cette somme étant rapportée, pour l'ensemble partition (P₁ à Pₙ), à la taille totale disponible dans l'ensemble des partitions (P₁ à Pₙ) du cache (100), pour obtenir le taux de remplissage moyen de l'ensemble des partitions (P₁ à Pₙ) du cache (100).

5. Système selon une des revendications 3 et 4, **caractérisé en ce que** le taux de remplissage individuel de chaque partition (P₁ à Pₙ) du cache (100) à un instant donné, calculé par le module (32) de contrôle du remplissage du cache, correspond, pour chacune des partitions (P₁ à Pₙ) du cache (100) individuellement, à la taille des données présentes dans les volumes virtuels (V'₁ à V'ₙ) dont le statut est ' disc only ', qu'ils soient ouverts ou fermés, cette taille étant rapportée, pour chaque partition (P₁ à Pₙ), à la taille totale disponible dans la partition (P₁ à Pₙ) considérée, pour obtenir le taux de remplissage individuel de chaque partition (P₁ à Pₙ).

6. Système selon une des revendications 1 à 5, **caractérisé en ce que** l'indice d'activité du cache par périodes de temps déterminées, calculé par le module (31) de contrôle de l'activité du cache, correspond à la moyenne, calculée sur un nombre déterminé de périodes de temps déterminées successives, du nombre maximum de volumes virtuels (V'₁ à V'ₙ) du cache (100) ouverts simultanément pendant chaque période de temps déterminée.

7. Système selon une des revendications 3 à 6, **caractérisé en ce que** le module (30) de gestion compare l'indice d'activité du cache avec un seuil minimum d'activité et un seuil maximum d'activité, compare le taux de remplissage individuel du cache avec un seuil maximum de remplissage et compare le taux de remplissage moyen du cache avec un premier seuil, dit seuil de priorité, au-dessous duquel le remplissage du cache (100) est prioritaire par rapport au vidage et un deuxième seuil, dit seuil de démarrage du vidage, au-dessus duquel le vidage du cache (100) peut être effectué, pour gérer les accès au cache (100) grâce à l'algorithme (AG) de gestion de la bande passante d'accès au cache, implémenté dans le système de stockage et comportant au moins une des règles suivantes :
- si la valeur du taux de remplissage individuel d'une partition (P₁ à Pₙ) du cache (100) est supérieure à la valeur du seuil maximum de remplissage, quelle que soit la valeur de l'indice d'activité du cache (100), l'opération de vidage du cache (100) est impérative et autorisée à démarrer au détriment éventuel des accès au cache (100) par les plateformes informatiques (10₁ à 10ₙ), une partie de la bande passante d'accès au cache (100) étant alors utilisée par la copie d'un ou plusieurs volume(s) virtuel(s) (V'₁ à V'ₙ) de cette partition (P₁ à Pₙ) vers la librairie physique (P20₁ à P20ₙ) au cours de ce vidage,
- si la valeur de l'indice d'activité du cache (100) est inférieure ou égale à la valeur du seuil minimum d'activité, toute opération de vidage du cache (100) est autorisée à démarrer, pour permettre la copie d'un ou plusieurs volume(s) virtuel(s) (V'₁ à V'ₙ) vers la librairie physique (P20₁ à P20ₙ),
- si la valeur de l'indice d'activité du cache (100) est comprise entre la valeur du seuil minimum d'activité et la valeur du seuil maximum d'activité, une opération de vidage du cache (100) déjà en cours est autorisée à se poursuivre, la copie d'un ou plusieurs volume(s) virtuel(s) (V'₁ à V'ₙ) du cache (100) vers la librairie physique (P20₁ à P20ₙ) étant autorisée pendant cette opération de vidage en cours, mais, s'il n'existe pas d'opération de vidage en cours, une nouvelle opération de vidage du cache (100) n'est pas autorisée à démarrer,
- si la valeur de l'indice d'activité du cache (100) est supérieure à la valeur du seuil maximum d'activité, une nouvelle opération de vidage du cache (100) n'est pas autorisée à démarrer et une opération de vidage du cache (100) déjà en cours est interrompue, au profit des accès au cache (100) par les plateformes informatiques (10₁ à 10ₙ), sauf si la valeur du taux de remplissage individuel du cache (100) est supérieure à la valeur du seuil maximum de remplissage ou si la valeur du taux de remplissage moyen du cache (100) est supérieure au seuil de démarrage du vidage, une nouvelle copie d'un ou plusieurs volume(s) virtuel(s) (V'₁ à V'ₙ) du cache (100) vers la librairie physique (P20₁ à P20ₙ), pendant une opération de vidage déjà en cours, étant interdite, tandis qu'une copie déjà en cours d'un ou plusieurs volume(s) virtuel(s) (V'₁ à V'ₙ) du cache (100) vers la librairie physique (P20₁ à P20ₙ), pendant cette opération de vidage en cours, est autorisée à se terminer,
- si la valeur du taux de remplissage moyen de l'ensemble des partitions (P₁ à Pₙ) du cache (100) est inférieure ou égale à la valeur du seuil de priorité, les accès aux ressources (20, 100) de stockage en réponse aux requêtes transmises par les moyens (101) d'accès des plateformes (10₁ à 10ₙ) informatiques au système (1) de stockage sont prioritaires par rapport aux accès nécessaires à une copie de volumes nécessitant les mêmes ressources (20, 100) au cours d'une opération de vidage du cache (100), cette copie pouvant alors être différée jusqu'à libération de ces ressources (20, 100),
- si la valeur du taux de remplissage moyen de l'ensemble des partitions (P₁ à Pₙ) du cache (100) est supérieure au seuil de priorité, les accès aux ressources (20, 100) de stockage en réponse aux requêtes transmises par les moyens (101) d'accès des plateformes (10₁ à 10ₙ) informatiques au système (1) de stockage ne sont pas prioritaires par rapport aux accès nécessaires à une copie de volumes nécessitant les mêmes ressources (20, 100) au cours d'une opération de vidage du cache (100) qui peut donc démarrer ou se poursuivre au détriment éventuel des accès aux ressources (20, 100) de stockage par les plateformes informatiques (10₁ à 10ₙ),
- si la valeur du taux de remplissage moyen de l'ensemble des partitions (P₁ à Pₙ) du cache (100) est inférieure ou égale à la valeur du seuil de démarrage du vidage, une opération de vidage du cache (100) vers la librairie physique (P20₁ à P20ₙ) n'est autorisée à démarrer que si la valeur de l'indice d'activité du cache (100) est inférieure ou égale à la valeur du seuil minimum d'activité,
- si la valeur du taux de remplissage moyen de l'ensemble des partitions (P₁ à Pₙ) du cache (100) est supérieure à la valeur du seuil de démarrage du vidage, une opération de vidage du cache (100) vers la librairie physique (P20₁ à P20ₙ) est impérative et autorisée à démarrer.

8. Système selon une des revendications 1 à 7, **caractérisé en ce que** le module (31) de contrôle d'activité du cache comporte des moyens de consultation des informations générées par le module (33) d'organisation pour calculer l'indice d'activité du cache (100) en comptant le nombre de volumes virtuels ouverts, le seuil maximum d'activité correspondant au nombre total de volumes virtuels (V'₁ à V'ₙ) du cache (100) ouverts en même temps qui consomment une fraction de bande passante jugée trop importante pour permettre de démarrer une opération interne nécessitant un accès au cache (100).

9. Système selon une des revendications 3 à 8, **caractérisé en ce que** le module (32) de contrôle du remplissage du cache (100) comporte des moyens de consultation des informations générées par le module (33) d'organisation pour calculer, d'une part, le taux de remplissage moyen du cache (100) en comparant la somme de la taille totale des données présentes dans les volumes virtuels (V'₁ à V'ₙ) ouverts, quels que soient leurs statuts, et de la taille totale des données présentes dans les volumes virtuels (V'₁ à V'ₙ) fermés et dont le statut est ' disc only ', par rapport à la capacité totale de stockage dans l'ensemble des partitions (P₁ à Pₙ) du cache (100) et, d'autre part, le taux de remplissage individuel de chacune des partitions (P₁ à Pₙ) du cache (100) en comparant, pour une partition (P₁ à Pₙ) donnée, la taille des données présentes dans les volumes virtuels (V'₁ à V'ₙ) dont le statut est ' disc only ', qu'ils soient ouverts ou fermés, par rapport à la capacité totale de stockage de cette partition (P₁ à Pₙ) du cache (100).

10. Système selon une des revendications 1 à 9, **caractérisé en ce que** le module (33) d'organisation coopère avec les modules (31) de contrôle d'activité du cache et de contrôle (32) du remplissage du cache pour répartir les volumes virtuels (V'₁ à V'ₙ) de façon équitable sur les différentes partitions (P₁ à Pₙ) du cache (100), afin de favoriser une distribution homogène sur l'ensemble des disques supportant les différentes partitions (P₁ à Pₙ) du cache (100).

11. Système selon une des revendications 1 à 10, **caractérisé en ce que** le module de gestion (30), lors de l'opération de vidage du cache (100), utilise les résultats des calculs du module (32) de contrôle du remplissage du cache pour sélectionner les volumes virtuels (V'₁ à V'ₙ) du cache (100) à copier dans la librairie (P20₁ à P20ₙ) physique, les volumes virtuels (V'₁ à V'ₙ) ainsi sélectionnés étant les volumes virtuels (V'₁ à V'ₙ) fermés, dont le statut est ' disk only ' et qui ont été les moins récemment accédés, en lecture ou en écriture, par les plateformes (10₁ à 10ₙ) informatiques, soit dans une partition (P₁ à Pₙ) donnée du cache (100) si la valeur du taux de remplissage individuel de cette partition est supérieure ou égale à la valeur du seuil maximum de remplissage, soit dans l'ensemble des partitions (P₁ à Pₙ) du cache (100) si les valeurs des taux de remplissage individuels de toutes les partitions sont inférieures à la valeur du seuil maximum de remplissage.

12. Système selon une des revendications 1 à 11, **caractérisé en ce que** le module (30) de gestion comporte un module (34) de contrôle de l'activité de la librairie (P20₁ à P20ₙ) physique maintenant en permanence à jour au moins des informations relatives à l'utilisation des lecteurs (P200₁ à P200ₙ) et/ou des cartouches (P21₁ à P21ₙ) des librairies (P20₁ à P20ₙ) physiques sous le contrôle du système (1) de stockage, ces informations permettant ainsi au module (30) de gestion de gérer les priorités dans le temps des accès aux ressources (20, 100) de stockage, d'une part, par le système (1) lui-même pour le vidage d'au moins un volume virtuel (V'₁ à V'ₙ) du cache (100) vers au moins un volume virtuel (V₁ à Vₙ) de la librairie (P20₁ à P20ₙ) physique et, d'autre part, par les plateformes (10₁ à 10ₙ) informatiques pour la lecture/écriture d'un volume virtuel (V'₁ à V'ₙ) non présent dans le cache (100) et nécessitant donc une consultation de la librairie (P20₁ à P20ₙ) physique pour la copie d'un volume virtuel (V₁ à Vₙ) de cette librairie (P20₁ à P20ₙ) physique vers le cache (100), sous la forme d'un volume virtuel (V'₁ à V'ₙ) de la librairie (V20₁ à V20ₙ) virtuelle.

13. Système selon une des revendications 2 à 12, **caractérisé en ce que** le module (30) de gestion, grâce à ses moyens d'accès au contenu des ressources (20, 100) de stockage du système (1), maintient en permanence à jour au moins des informations relatives à la validité des volumes virtuels (V₁ à Vₙ) présents dans les cartouches (P21₁ à P21ₙ) des librairies (P20₁ à P20ₙ) physiques sous le contrôle du système (1) de stockage, par rapport aux volumes virtuels (V'₁ à V'ₙ) éventuellement modifiés dans le cache (100) par les plateformes (10₁ à 10ₙ) informatiques, ces informations de validité permettant au module (30) de gestion de comparer l'espace occupé par les volumes virtuels (V₁ à Vₙ) obsolètes dans les cartouches (P21₁ à P21ₙ) de la librairie (P20₁ à P20ₙ) physique avec un seuil maximum d'invalidité, et d'effectuer, lorsque cet espace des volumes virtuels (V₁ à Vₙ) obsolètes atteint ce seuil, un compactage des volumes (V₁ à Vₙ) valides de la librairie (P20₁ à P20ₙ) physique, dans les cartouches (P21₁ à P21ₙ) contenant des volumes virtuels (V₁ à Vₙ) non utilisés dans la librairie (P20₁ à P20ₙ) physique et/ou correspondant à des volumes virtuels (V'₁ à V'ₙ) fermés dans le cache (100), en contrôlant la lecture de l'ensemble des volumes (V₁ à Vₙ) valides des cartouches (P21₁ à P21ₙ) sources contenant des volumes (V₁ à Vₙ) obsolètes et la copie simultanée de ces volumes (V₁ à Vₙ) valides dans des cartouches (P21₁ à P21ₙ) cibles, de façon à effacer ces cartouches (P21₁ à P21ₙ) sources et à n'obtenir que des cartouches (P21₁ à P21ₙ) contenant des volumes (V₁ à Vₙ) valides dans la librairie (P20₁ à P20ₙ) physique et des cartouches vides.

14. Système selon la revendication 13, **caractérisé en ce que** le module de gestion (30), responsable de l'émulation des volumes virtuels (V₁ à Vₙ) de la librairie physique (P20₁ à P20ₙ) en volumes virtuels (V'₁ à V'ₙ) de la librairie virtuelle (V20'₁ à V20ₙ) du cache (100), offre la possibilité qu'un volume virtuel (V'₁ à V'ₙ) du cache (100) possède des images (V₁ à Vₙ) multiples dans la librairie physique (P20₁ à P20ₙ) et,permet que les volumes virtuels (V'₁ à V'ₙ) du cache (100) pris en compte par le module (32) de contrôle du remplissage du cache, dans le calcul du taux de remplissage, correspondent aux volumes virtuels (V'₁ à V'ₙ) du cache (100) dont le statut est' disc only', c'est-à-dire dont les images (V₁ à Vₙ) présentes dans la librairie physique (P20₁ à P20ₙ) ne sont pas toutes valides.

15. Système selon une des revendications 13 et 14, **caractérisé en ce que** le module (30) de gestion utilise les résultats des opérations effectuées par le module (31) de contrôle de l'activité du cache, le module (32) de contrôle du remplissage du cache et le module (34) de contrôle de l'activité de la librairie (P20₁ à P20ₙ) physique, de façon à ce que le compactage des volumes (V₁ à Vₙ) valides de la librairie (P20₁ à P20ₙ) physique par le module (30) de gestion soit réalisé en fonction de l'activité et du remplissage du cache (100), en favorisant les accès aux ressources (20, 100) de stockage par les plateformes (10₁ à 10ₙ) informatiques par rapport aux accès nécessaires à ce compactage.

16. Système selon une des revendications 1 à 15, **caractérisé en ce que** les moyens (11) de traitement exécutent une application logicielle constituant l'ensemble des modules (30, 31, 32, 33 et 34) du système (1) de stockage et responsable de l'interopérabilité des différents moyens du système, cette application logicielle coopérant avec un système d'exploitation installé sur le système (1) de stockage pour gérer les opérations à réaliser en générant au moins des informations relatives aux emplacements et à l'utilisation de l'ensemble des données présentes dans le système (1) de stockage, les données nécessaires à l'exécution de cette application ayant été au préalable enregistrées dans une mémoire accessible par les moyens (11) de traitement du système (1).

17. Procédé de sauvegarde de données générées, dans au moins un format, par au moins une plateforme (10₁ à 10ₙ) informatique et transmises à un système (1) de stockage via au moins un réseau (RC) de communication, grâce à des moyens (101) d'accès de la plateforme au système (1) de stockage, le système (1) de stockage comportant des ressources (20, 100) de stockage comprenant, d'une part, des moyens (20) de stockage comportant au moins une librairie physique (P20₁ à P20ₙ) comprenant au moins un robot (P22) capable de charger et décharger au moins une cartouche (P21₁ à P21ₙ) de stockage de données dans au moins un lecteur (P200₁ à P200ₙ) permettant l'écriture et la lecture des données transmises par la plateforme (10₁ à 10ₙ) informatique dans la librairie physique (P20₁ à P20ₙ) et, d'autre part, des moyens (100) de mémorisation, dits cache (100), dans lesquels les moyens (11) de traitement du système (1) de stockage émulent, vis-à-vis des plateformes (10₁ à 10ₙ) informatiques, au moins une librairie virtuelle (V20₁ à V20ₙ) à partir d'au moins une librairie physique (P20₁ à P20ₙ) que le système de stockage a sous son contrôle, les données ainsi stockées dans la librairie physique (P20₁ à P20ₙ) et la librairie virtuelle (V20₁ à V20ₙ) étant regroupées en ensembles de taille déterminée, dits volumes virtuels, possédant au moins une image (V₁ à Vₙ) dans la librairie physique (P20₁ à P20ₙ) et/ou une image (V'₁ à V'ₙ) dans la librairie virtuelle (V20₁ à V20ₙ), les moyens (101) d'accès des plateformes (10₁ à 10ₙ) au système (1) de stockage accédant ainsi en lecture et en écriture, via le réseau (RC) de communication, à l'image (V'₁ à V'ₙ) dans le cache (100) de chacun des volumes virtuels stockés par le système de stockage, le procédé étant **caractérisé en ce qu'**il comporte au moins les étapes suivantes :
- émulation (61) des volumes (V₁ à Vₙ) virtuels de la librairie (P20₁ à P20ₙ) physique en volumes virtuels (V'₁ à V'ₙ) de la librairie (V20₁ à V20ₙ) virtuelle du cache (100), par un module (30) de gestion, présent dans les moyens (11) de traitement du système (1) de stockage et gérant les accès aux ressources (20, 100) de stockage, à la fois sur les volumes (V₁ à Vₙ) virtuels de la librairie (P20₁ à P20ₙ) physique et sur les volumes virtuels (V'₁ à V'ₙ) du cache (100), en fonction de requêtes transmises par les moyens (101) d'accès des plateformes (10₁ à 10ₙ) informatiques au système (1) de stockage ;
- calcul (62), par un module (31) de contrôle de l'activité du cache, d'au moins un indice d'activité du cache (100) par périodes de temps déterminées, reflétant l'utilisation de la bande passante d'accès au cache (100), cette étape de calcul (62) étant répétée pour surveiller l'évolution de l'activité du cache (100) périodiquement ou ponctuellement lors d'une allocation d'espace pour un nouveau volume virtuel (V'₁ à V'ₙ) dans le cache (100) ;
- calcul (63), par un module (32) de contrôle du remplissage du cache, d'au moins un taux de remplissage du cache (100) à un instant donné, cette étape de calcul (63) étant répétée pour surveiller l'évolution du remplissage du cache (100) périodiquement ou ponctuellement lors d'une allocation d'espace pour un nouveau volume virtuel (V'₁ à V'ₙ) dans le cache (100) ;
- décision (64), par le module (30) de gestion, en fonction du résultat de ces calculs et d'au moins un algorithme (AG) de gestion de la bande passante d'accès au cache (100), implémenté dans le système (1) de stockage, entre une autorisation (70) ou une interdiction (80) des accès aux ressources (20, 100) de stockage par les plateformes (10₁ à 10ₙ) informatiques pour la lecture/écriture des volumes virtuels (V'₁ à V'ₙ) dans le cache (100) ou par le système (1) lui-même pour au moins une opération, dite de vidage du cache, permettant la copie des données d'au moins un volume virtuel (V'₁ à V'ₙ) de la librairie virtuelle (V20₁ à V20ₙ) vers au moins un volume virtuel (V₁ à Vₙ) de la librairie physique (P20₁ à P20ₙ), de façon à réguler le remplissage du cache (100) tout en gérant les priorités dans le temps des accès aux ressources par les plateformes et le système lui-même
et **en ce qu'**il comporte, d'une part, au moins une étape d'installation (67) d'une pluralité de partitions (P₁ à Pₙ) sur une pluralité de disques durs (100₁ à 100ₙ) constituant le cache (100) et, d'autre part, au moins une étape (68) de création et de mise à jour, par un module (33) d'organisation, de données représentatives d'informations relatives à la répartition des partitions (P₁ à Pₙ) et à la répartition des données enregistrées sur les différentes partitions (P₁ à Pₙ), ce module (33) d'organisation générant, à partir de ces informations, au moins un répertoire (RP) contenant des informations relatives aux emplacements et à l'utilisation des volumes virtuels (V'₁ à V'ₙ), les volumes virtuels (V'₁ à V'ₙ) sur lesquels une lecture ou une écriture est en cours étant identifiés comme volumes virtuels ouverts et les volumes virtuels sur lesquels aucune lecture ou écriture n'est en cours étant identifiés comme volumes virtuels fermés,
l'étape (62) de calcul de l'indice d'activité du cache (100), par le module (31) de contrôle d'activité du cache, comportant au moins une étape de consultation (621) des données générées par le module (33) d'organisation, pour calculer l'indice d'activité du cache (100) en comptant le nombre de volumes virtuels ouverts dans le cache (100), le seuil maximum d'activité correspondant au nombre total de volumes virtuels (V'₁ à V'ₙ) du cache (100) ouverts en même temps qui consomment une fraction de bande passante jugée trop importante pour permettre de démarrer une opération interne nécessitant un accès au cache (100).

18. Procédé selon la revendication 17, **caractérisé en ce qu'**il comporte une étape de vérification du contenu de la librairie physique (P20₁ à P20ₙ) et de la librairie virtuelle (V20₁ à V20ₙ) par le module (30) de gestion, grâce à des moyens d'accès au contenu des ressources (20, 100) de stockage du système (1), suivie d'une étape d'attribution, à chacun des volumes virtuels d'une valeur, dite statut, parmi au moins les statuts suivants :
- statut' disc only' lorsque le volume virtuel possède une image (V'₁ à V'ₙ) dans la librairie virtuelle (V20₁ à V20ₙ) du cache (100) mais ne possède pas d'image dans la librairie physique ou dont au moins une image (V₁ à Vₙ) dans la librairie physique (P20₁ à P20ₙ) n'est pas valide, c'est-à-dire ne contiennent pas les mêmes données que l'image (V'₁ à V'ₙ) dans la librairie virtuelle (V20₁ à V20ₙ);
- statut ' out of cache ' lorsque le volume virtuel ne possède aucune image (V'₁ à V'ₙ) dans la librairie virtuelle (V20₁ à V20ₙ) du cache (100) ;
- statut ' disk and tape ' lorsque le volume virtuel possède des images valides à la fois dans la librairie virtuelle (V20₁ à V20ₙ) du cache (100) et dans la librairie physique (P20₁ à P20ₙ);
- statut ' swapping in ' lorsque le volume virtuel possède une image (V'₁ à V'ₙ) en cours de chargement dans la librairie virtuelle (V20₁ à V20ₙ), à partir d'une image (V₁ à Vₙ) dans la librairie physique (P20₁ à P20ₙ);
- statut' swapping out' lorsque le volume virtuel possède une image (V'₁ à V'ₙ) dans la librairie virtuelle (V20₁ à V20ₙ) en cours de copie dans une image (V₁ à Vₙ) de la librairie physique (P20₁ à P20ₙ) ;
- statut ' incomplete ' lorsque le volume virtuel (V'₁ à V'ₙ) de la librairie virtuelle (V20₁ à V20ₙ) est ouvert et ne contient pas de données ou contient des données incomplètes ;
- statut ' moving out ' lorsque le volume virtuel (V'₁ à V'ₙ) de la librairie virtuelle (V20₁ à V20ₙ) est en cours de copie d'une partition (P₁ à Pₙ) du cache (100) dans une autre ;
- statut ' swappable ' lorsque le volume virtuel possède une image (V'₁ à V'ₙ) dans la librairie virtuelle (V20₁ à V20ₙ) du cache (100) mais dont au moins une image (V₁ à Vₙ) dans la librairie physique (P20₁ à P20ₙ) n'est pas valide ou que l'image (V'₁ à V'ₙ) dans la librairie virtuelle (V20₁ à V20ₙ) est en cours de copie dans une image (V₁ à Vₙ) de la librairie physique (P20₁ à P20ₙ), c'est-à-dire que le volume est soit en statut' disc only' soit en statut' swapping out'. '.

19. Procédé selon une des revendications 17 et 18, **caractérisé en ce que** l'étape (63) de calcul du taux de remplissage du cache (100) à un instant donné, par le module (32) de contrôle du remplissage du cache (100) comporte, d'une part, une étape (635) de calcul d'un taux de remplissage, dit individuel, correspondant à un calcul du taux de remplissage sur chacune des partitions (P₁ à Pₙ) du cache (100) individuellement et, d'autre part, une étape (636) de calcul d'un taux de remplissage, dit moyen, correspondant à un calcul du taux de remplissage de l'ensemble des partitions (P₁ à Pₙ) du cache (100).

20. Procédé selon la revendication 19, **caractérisé en ce que** l'étape (636) de calcul du taux de remplissage moyen du cache (100), par le module (32) de contrôle du remplissage du cache (100), consiste en une mesure, pour l'ensemble des partitions (P₁ à Pₙ) du cache (100), de la somme de la taille des données présentes dans les volumes virtuels (V'₁ à V'ₙ) fermés dont le statut est ' disc only ' et de la taille allouée aux volumes virtuels (V'₁ à V'ₙ) ouverts, quels que soient leurs statuts, cette somme étant rapportée à la taille totale disponible dans l'ensemble des partitions (P₁ à Pₙ) du cache (100), pour obtenir le taux de remplissage moyen de l'ensemble des partitions (P₁ à Pₙ) du cache (100).

21. Procédé selon une des revendications 19 et 20, **caractérisé en ce que** l'étape (635) de calcul du taux de remplissage individuel de chaque partition (P₁ à Pₙ) du cache (100), par le module (32) de contrôle du remplissage du cache (100), consiste en une mesure, pour chacune des partitions (P₁ à Pₙ) du cache (100) individuellement, de la taille totale des données présentes dans les volumes virtuels (V'₁ à V'ₙ) dont le statut est' disc only', qu'ils soient ouverts ou fermés, cette taille étant rapportée à la taille totale disponible dans la partition (P₁ à Pₙ) considérée du cache (100), pour obtenir le taux de remplissage moyen de chacune des partitions (P₁ à Pₙ) du cache (100).

22. Procédé selon une des revendications 17 à 21, **caractérisé en ce que** l'étape (62) de calcul de l'indice d'activité du cache (100) par périodes de temps déterminées, par le module (31) de contrôle de l'activité du cache, consiste en un calcul d'une moyenne, calculée sur un nombre déterminé de périodes de temps déterminées successives, du nombre maximum de volumes virtuels (V'₁ à V'ₙ) du cache (100) ouverts simultanément pendant chaque période de temps déterminée.

23. Procédé selon une des revendications 20 à 22, **caractérisé en ce qu'**il comporte au moins une étape supplémentaire de comparaison (65) de l'indice d'activité du cache avec un seuil minimum d'activité et un seuil maximum d'activité, une étape de comparaison (661) du taux de remplissage individuel du cache avec seuil maximum de remplissage et une étape de comparaison (662) du taux de remplissage moyen avec un premier seuil, dit seuil de priorité, au-dessous duquel le remplissage du cache (100) est prioritaire par rapport au vidage et un deuxième seuil, dit seuil de démarrage du vidage, au-dessus duquel le vidage du cache (100) peut être effectué, mises en oeuvre par le module (30) de gestion pour gérer les accès au cache (100) grâce à l'algorithme (AG) de gestion de la bande passante d'accès au cache (100), implémenté dans le système (1) de stockage et comportant au moins une des règles suivantes :
- si la valeur du taux de remplissage individuel d'une partition (P₁ à Pₙ) du cache (100) est supérieure à la valeur du seuil maximum de remplissage, quelle que soit la valeur de l'indice d'activité du cache (100), l'opération de vidage du cache (100) est impérative et autorisée à démarrer au détriment éventuel des accès au cache (100) par les plateformes informatiques (10₁ à 10ₙ), une partie de la bande passante d'accès au cache (100) étant alors utilisée par la copie d'un ou plusieurs volume(s) virtuel(s) (V'₁ à V'ₙ) de cette partition (P₁ à Pₙ) vers la librairie physique (P20₁ à P20ₙ) au cours de ce vidage,
- si la valeur de l'indice d'activité du cache (100) est inférieure ou égale à la valeur du seuil minimum d'activité, toute opération de vidage du cache (100) est autorisée à démarrer, pour permettre la copie d'un ou plusieurs volume(s) virtuel(s) (V'₁ à V'ₙ) vers la librairie physique (P20₁ à P20ₙ),
- si la valeur de l'indice d'activité du cache (100) est comprise entre la valeur du seuil minimum d'activité et la valeur du seuil maximum d'activité, une opération de vidage du cache (100) déjà en cours est autorisée à se poursuivre, la copie d'un ou plusieurs volume(s) virtuel(s) (V'₁ à V'ₙ) du cache (100) vers la librairie physique (P20₁ à P20ₙ) étant autorisée pendant cette opération de vidage en cours, mais, s'il n'existe pas d'opération de vidage en cours, une nouvelle opération de vidage du cache (100) n'est pas autorisée à démarrer,
- si la valeur de l'indice d'activité du cache (100) est supérieure à la valeur du seuil maximum d'activité, une nouvelle opération de vidage du cache (100) n'est pas autorisée à démarrer et une opération de vidage du cache (100) déjà en cours est interrompue, au profit des accès au cache (100) par les plateformes informatiques (10₁ à 10ₙ), sauf si la valeur du taux de remplissage individuel du cache (100) est supérieure à la valeur du seuil maximum de remplissage ou si la valeur du taux de remplissage moyen du cache (100) est supérieure au seuil de démarrage du vidage, une nouvelle copie d'un ou plusieurs volume(s) virtuel(s) (V'₁ à V'ₙ) du cache (100) vers la librairie physique (P20₁ à P20ₙ), pendant une opération de vidage déjà en cours, étant interdite, tandis qu'une copie déjà en cours d'un ou plusieurs volume(s) virtuel(s) (V'₁ à V'ₙ) du cache (100) vers la librairie physique (P20₁ à P20ₙ), pendant cette opération de vidage en cours, est autorisée à se terminer,
- si la valeur du taux de remplissage moyen de l'ensemble des partitions (P₁ à Pₙ) du cache (100) est inférieure ou égale à la valeur du seuil de priorité, les accès aux ressources (20, 100) de stockage en réponse aux requêtes transmises par les moyens (101) d'accès des plateformes (10₁ à 10ₙ) informatiques au système (1) de stockage sont prioritaires par rapport aux accès nécessaires à une copie de volumes nécessitant les mêmes ressources (20, 100) au cours d'une opération de vidage du cache (100), cette copie pouvant alors être différée jusqu'à libération de ces ressources (20, 100),
- si la valeur du taux de remplissage moyen de l'ensemble des partitions (P₁ à Pₙ) du cache (100) est supérieure au seuil de priorité, les accès aux ressources (20, 100) de stockage en réponse aux requêtes transmises par les moyens (101) d'accès des plateformes (10₁ à 10ₙ) informatiques au système (1) de stockage ne sont pas prioritaires par rapport aux accès nécessaires à une copie de volumes nécessitant les mêmes ressources (20, 100) au cours d'une opération de vidage du cache (100) qui peut donc démarrer ou se poursuivre au détriment éventuel des accès aux ressources (20, 100) de stockage par les plateformes informatiques (10₁ à 10ₙ),
- si la valeur du taux de remplissage moyen de l'ensemble des partitions (P₁ à Pₙ) du cache (100) est inférieure ou égale à la valeur du seuil de démarrage du vidage, une opération de vidage du cache (100) vers la librairie physique (P20₁ à P20ₙ) n'est autorisée à démarrer que si la valeur de l'indice d'activité du cache (100) est inférieure ou égale à la valeur du seuil minimum d'activité,
- si la valeur du taux de remplissage moyen de l'ensemble des partitions (P₁ à Pₙ) du cache (100) est supérieure à la valeur du seuil de démarrage du vidage, une opération de vidage du cache (100) vers la librairie physique (P20₁ à P20ₙ) est impérative et autorisée à démarrer.

24. Procédé selon une des revendications 17 à 23, **caractérisé en ce que** l'étape (62) de calcul de l'indice d'activité du cache (100), par le module (31) de contrôle d'activité du cache, comporte au moins une étape de consultation (621) des données générées par le module (33) d'organisation, pour calculer l'indice d'activité du cache (100) en comptant le nombre de volumes virtuels ouverts dans le cache (100), le seuil maximum d'activité correspondant au nombre total de volumes virtuels (V'₁ à V'ₙ) du cache (100) ouverts en même temps qui consomment une fraction de bande passante jugée trop importante pour permettre de démarrer une opération interne nécessitant un accès au cache (100).

25. Procédé selon une des revendications 20 à 24, **caractérisé en ce que** l'étape (63) de calcul du taux de remplissage du cache (100), par le module (32) de contrôle du remplissage du cache, comporte au moins une étape de consultation (631) des données générées par le module (33) d'organisation, pour calculer, d'une part, le taux de remplissage moyen du cache (100) grâce à une comparaison (632) de la somme de la taille totale des données présentes dans les volumes virtuels (V'₁ à V'ₙ) ouverts, quels que soient leurs statuts, et de la taille totale des données présentes dans les volumes virtuels (V'₁ à V'ₙ) fermés dont le statut est ' disc only ', par rapport à la capacité totale de stockage dans l'ensemble des partitions (P₁ à Pₙ) du cache (100) et, d'autre part, le taux de remplissage individuel de chacune des partitions (P₁ à Pₙ) du cache (100) grâce à une comparaison (633), pour une partition (P₁ à Pₙ) donnée, de la taille des données présentes dans les volumes virtuels (V'₁ à V'ₙ) dont le statut est ' disc only ', qu'ils soient ouverts ou fermés, par rapport à la capacité totale de stockage de cette partition (P₁ à Pₙ) du cache (100).

26. Procédé selon une des revendications 17 à 25, **caractérisé en ce que** l'étape d'émulation (61) des volumes virtuels (V'₁ à V'ₙ) par le module (30) de gestion comporte une étape de coopération (611) du module (33) d'organisation avec les modules de contrôle (31) d'activité du cache et de contrôle (32) du remplissage du cache pour répartir les volumes virtuels (V'₁ à V'ₙ) de façon équitable sur les différentes partitions (P₁ à Pₙ) du cache (100), afin de favoriser une distribution homogène sur l'ensemble des disques supportant les différentes partitions (P₁ à Pₙ) du cache (100).

27. Procédé selon une des revendications 17 à 26, **caractérisé en ce que** l'opération de vidage du cache (100), résulte d'une utilisation, par le module de gestion (30), des résultats des calculs du module (32) de contrôle du remplissage du cache, pour sélectionner les volumes virtuels (V'₁ à V'ₙ) du cache (100) à copier dans la librairie (P20₁ à P20ₙ) physique, les volumes virtuels (V'₁ à V'ₙ) ainsi sélectionnés étant les volumes virtuels (V'₁ à V'ₙ) fermés, dont le statut est ' disk only ' et qui ont été les moins récemment accédés, en lecture ou en écriture, par les plateformes (10₁ à 10ₙ) informatiques, soit dans une partition (P₁ à Pₙ) donnée du cache (100) si la valeur du taux de remplissage individuel de cette partition est supérieure ou égale à la valeur du seuil maximum de remplissage, soit dans l'ensemble des partitions (P₁ à Pₙ) du cache (100) si les valeurs des taux de remplissage individuels de toutes les partitions sont inférieures à la valeur du seuil maximum de remplissage.

28. Procédé selon une des revendications 17 à 27, **caractérisé en ce qu'**il comporte au moins une étape (71) de création et de mise à jour, par un module (34) de contrôle de l'activité de la librairie, de données représentatives d'informations relatives à l'utilisation des lecteurs et/ou des cartouches des librairies (P20₁ à P20ₙ) sous le contrôle du système (1) de stockage, ces informations permettant ainsi au module (30) de gestion de gérer les priorités dans le temps des accès aux ressources (20, 100) de stockage, d'une part, par le système (1) lui-même pour le vidage d'au moins un volume virtuel (V'₁ à V'ₙ) du cache (100) vers un volume (V₁ à Vₙ) de la librairie (P20₁ à P20ₙ) physique et, d'autre part, par les plateformes (10₁ à 10ₙ) informatiques pour la lecture/écriture d'un volume virtuel (V'₁ à V'ₙ) non présent dans le cache (100) et nécessitant donc une consultation de la librairie (P20₁ à P20ₙ) physique pour la copie d'un volume (V₁ à Vₙ) de cette librairie (P20₁ à P20ₙ) physique vers le cache (100), sous la forme d'un volume virtuel (V'₁ à V'ₙ) de la librairie (V20₁ à V20ₙ) virtuelle.

29. Procédé selon une des revendications 18 à 28, **caractérisé en ce qu'**il comporte au moins une étape (69) de création et de mise à jour, par le module (30) de gestion, de données représentatives d'informations relatives à la validité des volumes (V₁ à Vₙ) présents dans les cartouches (P21₁ à P21ₙ) des librairies (P20₁ à P20ₙ) physiques sous le contrôle du système (1) de stockage, par rapport aux volumes virtuels (V₁ à Vₙ) éventuellement modifiés dans le cache (100) par les plateformes (10₁ à 10ₙ) informatiques, ces informations de validité permettant au module (30) de gestion de mettre en oeuvre une étape de comparaison (89) de l'espace occupé par les volumes virtuels (V₁ à Vₙ) obsolètes dans les cartouches (P21₁ à P21ₙ) de la librairie (P20₁ à P20ₙ) physique avec un seuil maximum d'invalidité, et de mettre en oeuvre, lorsque cet espace occupé par ces volumes virtuels (V₁ à Vₙ) obsolètes atteint ce seuil, une étape de compactage (90) des volumes (V₁ à Vₙ) valides, extraits des cartouches (P21₁ à P21ₙ) contenant des volumes (V₁ à Vₙ) non utilisés et/ou correspondant à des volumes virtuels (V'₁ à V'ₙ) fermés, en contrôlant une lecture (92) de l'ensemble des volumes (V₁ à Vₙ) valides des cartouches (P21₁ à P21ₙ) sources contenant des volumes (V₁ à Vₙ) obsolètes et une copie (93) simultanée de ces volumes (V₁ à Vₙ) valides dans des cartouches (P21₁ à P21ₙ) cibles, de façon à effacer ces cartouches (P21₁ à P21ₙ) sources et à n'obtenir que des cartouches (P21₁ à P21ₙ) contenant des volumes (V₁ à Vₙ) valides dans la librairie (P20₁ à P20ₙ) physique.

30. Procédé selon la revendication 29, **caractérisé en ce que** les étapes d'émulation (61) des volumes virtuels (V₁ à Vₙ) de la librairie physique (P20₁ à P20ₙ) en volumes virtuels (V'₁ à V'ₙ) de la librairie virtuelle (V20₁ à V20ₙ) du cache (100) et de gestion du cache (100) par le module de gestion (30), offrent la possibilité qu'un volume virtuel (V'₁ à V'ₙ) du cache (100) possède des images (V₁ à Vₙ) multiples dans la librairie physique (P20₁ à P20ₙ), l'étape (69) de création et de mise à jour, par le module (30) de gestion, de données représentatives d'informations relatives à la validité des volumes (V₁ à Vₙ) présents dans les cartouches (P21₁ à P21ₙ) des librairies (P20₁ à P20ₙ) physiques, permettant que les volumes virtuels (V'₁ à V'ₙ) du cache (100) pris en compte par le module (32) de contrôle du remplissage du cache, dans le calcul du taux de remplissage, correspondent aux volumes virtuels (V'₁ à V'ₙ) du cache (100) dont le statut est ' disc only ', c'est-à-dire dont les images (V₁ à Vₙ) présentes dans la librairie physique (P20₁ à P20ₙ) ne sont pas toutes valides.

31. Procédé selon une des revendications 29 et 30, **caractérisé en ce que** l'étape (90) de compactage de la librairie (P20₁ à P20ₙ) physique comporte une étape d'utilisation (91), par le module (30) de gestion, des résultats des opérations effectuées par le module (31) de contrôle de l'activité du cache, le module (32) de contrôle du remplissage du cache et le module (34) de contrôle de l'activité de la librairie (P20₁ à P20ₙ) physique, de façon à ce que le compactage des volumes (V₁ à Vₙ) valides de la librairie (P20₁ à P20ₙ) physique par le module (30) de gestion soit réalisé en fonction de l'activité et du remplissage du cache (100), en favorisant les accès aux ressources (20, 100) de stockage par les plateformes (10₁ à 10ₙ) informatiques par rapport aux accès nécessaires à ce compactage.

32. Procédé selon une des revendications 17 à 31, **caractérisé en ce qu'**il comporte une étape d'installation d'une application logicielle dans le système d'exploitation du système (1) de stockage, cette application logicielle constituant l'ensemble des modules (30, 31, 32, 33 et 34) du système (1) de stockage et responsable de l'interopérabilité des différents moyens du système, cette application logicielle coopérant avec un système d'exploitation installé sur le système (1) de stockage pour gérer les opérations à réaliser en générant au moins des informations relatives aux emplacements et à l'utilisation de l'ensemble des données présentes dans le système (1) de stockage, cette étape d'installation permettant l'enregistrement des données nécessaires à l'exécution de cette application dans une mémoire accessible par les moyens (11) de traitement du système (1).

## Claims

1. System (1) for storing data generated, in at least one format, by at least one computer platform (10₁ to 10ₙ) and transmitted to the storage system (1) via at least one communication network (RC), using means (101) for access by the platform to the storage system (1), the storage system (1) including processing means (11) and storage resources (20, 100) comprising, on the one hand, storage means (20) including at least one physical library (P20₁ to P20ₙ) comprising at least one robot (P22) capable of loading and unloading at least one data storage cartridge (P21₁ to P21ₙ) in at least one reader (P200₁ to P200ₙ) allowing the data transmitted by the computer platform (10₁ to 10ₙ) to be written to and read from the physical library (P20₁ to P20ₙ) and, on the other hand, memory means (100), known as a cache (100), in which the processing means (11) of the storage system (1) emulate, with respect to the computer platforms (10₁ to 10ₙ), at least one virtual library (V20₁ to V20ₙ) on the basis of at least one physical library (P20₁ to P20ₙ) that the storage system (1) has under its control, the data thus stored in the physical library (P20₁ to P20ₙ) and the virtual library (V20₁ to V20ₙ) being grouped in sets of a given size, known as virtual volumes, containing at least one image (V'₁ to V'ₙ) in the physical library (P20₁ to P20ₙ) and/or an image (V'₁ to V'ₙ) in the virtual library (V20₁ to V20ₙ), the means (101) for access by the platforms (10₁ to 10ₙ) to the storage system (1) thus accessing in read and write mode, via the communication network (RC), the image (V'₁ to V'ₙ) in the cache (100) of each of the virtual volumes stored by the storage system, **characterised in that** the processing means (11) of the storage system (1) include a management module (30) managing access to the storage resources (20, 100), both in the physical library (P20₁ to P20ₙ) and in the virtual library (V20₁ to V20ₙ), according to requests transmitted by the means (101) for access by the computer platforms (10₁ to 10ₙ) to the storage system (1), the management module (30) being responsible for the emulation of the virtual volumes (V₁ to Vₙ) of the physical library in virtual volumes (V'₁ to V'ₙ) of the virtual library of the cache (100) and including, on the one hand, a module (31) for controlling the activity of the cache calculating at least one cache activity index in predetermined time periods, reflecting the use of the band-width of access to the cache (100) and, on the other hand, a module (32) for controlling cache occupancy calculating at least one cache occupancy rate at a given moment, the management module (30) triggering these calculations periodically or on an ad hoc basis during an allocation of space for a new virtual volume (V'₁ to V'ₙ) in the cache (100) and using the result of these calculations, according to at least one algorithm (AG) for managing the cache access band-width, implemented in the storage system, so as to regulate occupancy of the cache (100) by managing time priorities for access to the storage resources (20, 100) by the computer platforms (10₁ to 10ₙ) for reading from/writing to the virtual volumes (V'₁ to V'ₙ) of the cache (100) or by the system (1) itself for at least one operation, known as cache flushing (100), allowing data to be copied from at least one virtual volume (V'₁ to V'ₙ) of the virtual library (V20₁ to V20ₙ) to at least one virtual volume (V₁ to Vₙ) of the physical library (P20₁ to P20n), the cache (100) consisting of a plurality of hard disks (100₁ to 100ₙ) on which a plurality of partitions (P₁ to Pₙ) is distributed, the management module (30) including an organisation module (33) maintaining constantly up to date information relating to the distribution of the partitions (P₁ to Pₙ) installed on the hard disks and to the distribution of the data recorded on the various partitions (P₁ to Pₙ), this organisation module (33) generating, on the basis of this information, at least one directory (RP) containing information relating to the locations and to the use of the virtual volumes (V'₁ to V'ₙ) of the cache (100), the virtual volumes (V'₁ to V'ₙ) on which reading or writing is in progress being identified as open virtual volumes, and the virtual volumes on which no reading or writing is in progress being identified as closed virtual volumes, the cache activity control module (31) including means for consulting the information generated by the organisation module (33) in order to calculate the activity index of the cache (100) by counting the number of open virtual volumes in the cache for a predetermined time period.

2. System according to Claim 1, **characterised in that** the management module (30) includes means for accessing the contents of the storage resources (20, 100) of the system (1) and checks the contents of the physical library (P20₁ to P20ₙ) and of the virtual library (V20₁ to V20ₙ) in order to allocate to each of the virtual volumes a value, known as status, from among at least the following statuses: - "disk only" status when the virtual volume contains an image (V'₁ to V'ₙ) in the virtual library (V20₁ to V20ₙ) of the cache (100) but does not contain an image in the physical library or where at least one image (V₁ to Vₙ) in the physical library (P20₁ to P20ₙ) is not valid, i.e. does not contain the same data as the image (V'₁ to V'ₙ) in the virtual library (V20₁ to V20ₙ);
- "out off cache" status when the virtual volume does not contain any image (V'₁ to V'ₙ) in the virtual library (V20₁ to V20ₙ) of the cache (100);
- "disk and tape" status when the virtual volume contains valid images both in the virtual library (V20₁ to V20ₙ) of the cache (100) and in the physical library (P20₁ to P20ₙ);
- "swapping in" status when the virtual volume contains an image (V'₁ to V'ₙ) in the process of being loaded into the virtual library (V20₁ to V20ₙ), on the basis of an image (V'₁ to V'ₙ) in the physical library (P20₁ to P20ₙ);
- "swapping out" status when the virtual volume contains an image (V'₁ to V'ₙ) in the virtual library (V20₁ to V20ₙ) in the process of being copied into an image (V₁ to Vₙ) in the physical library (P20₁ to P20ₙ);
- "incomplete" status when the virtual volume (V'₁ to V'ₙ) of the virtual library (V20₁ to V20ₙ) is open and does not contain any data or contains incomplete data;
- "moving out" status when the virtual volume (V'₁ to V'ₙ) of the virtual library (V20₁ to V20ₙ) is in the process of being copied from one partition (P₁ to Pₙ) of the cache (100) into another;
- "swappable" status when the virtual volume contains an image (V'₁ to V'ₙ) in the virtual library (V20₁ to V20ₙ) of the cache (100) but where at least one image (V₁ to Vₙ) in the physical library (P20₁ to P20ₙ) is not valid or where the image (V'₁ to V'ₙ) in the virtual library (V20₁ to V20ₙ) is in the process of being copied into an image (V₁ to Vₙ) in the physical library (P20₁ to P20ₙ), i.e. the volume is either in "disk only" status or in "swapping out" status.

3. System according to one of Claims 1 and 2, **characterised in that** the cache occupancy control module (32) calculates, on the one hand, an occupancy rate, described as individual, corresponding to a calculation of the occupancy rate on each of the partitions (P₁ to Pₙ) of the cache (100) individually and, on the other hand, an occupancy rate, described as average, corresponding to a calculation of the occupancy rate of all the partitions (P₁ to Pₙ) of the cache (100).

4. System according to Claim 3, **characterised in that** the average occupancy rate of the cache (100) at a given moment, calculated by the cache occupancy control module (32), corresponds, for all the partitions (P₁ to Pₙ) of the cache (100), to the sum of the size of the data present in the closed virtual volumes (V'₁ to V'ₙ) the status of which is "disk only" and of the size allocated, for all the partitions (P₁ to Pₙ), to the open virtual volumes (V'₁ to V'ₙ), whatever their status, this sum being related, for the partition set (P₁ to Pₙ), to the total size available in all the partitions (P₁ to Pₙ) of the cache (100), in order to obtain the average occupancy rate of all the partitions (P₁ to Pₙ) of the cache (100).

5. System according to one of Claims 3 and 4, **characterised in that** the individual occupancy rate of each partition (P₁ to Pₙ) of the cache (100) at a given moment, calculated by the cache occupancy control module (32), corresponds, for each of the partitions (P₁ to Pₙ) of the cache (100) individually, to the size of the data present in the virtual volumes (V'₁ to Vₙ), the status of which is "disk only", whether they are open or closed, this size being related, for each partition (P₁ to Pₙ), to the total size available in the partition (P₁ to Pₙ) in question, in order to obtain the individual occupancy rate of each partition (P₁ to Pₙ).

6. System according to one of Claims 1 to 5, **characterised in that** the cache activity index in predetermined time periods, calculated by the cache activity control module (31), corresponds to the average, calculated over a determined number of successive determined time periods, of the maximum number of virtual volumes (V'₁ to V'ₙ) of the cache (100) open simultaneously in each determined time period.

7. System according to one of Claims 3 to 6, **characterised in that** the management module (30) compares the cache activity index with a minimum activity threshold and a maximum activity threshold, compares the individual occupancy rate of the cache with a maximum occupancy threshold and compares the average occupancy rate of the cache with a first threshold, known as the priority threshold, below which the occupancy of the cache (100) has priority over flushing and a second threshold, known as the flush start threshold, above which flushing of the cache (100) can be carried out, in order to manage access to the cache (100) using the algorithm (AG) for managing cache access band-width, implemented in the storage system and including at least one of the following rules:
- if the value of the individual occupancy rate of a partition (P₁ to Pₙ) of the cache (100) is greater than the value of the maximum occupancy threshold, whatever the value of the activity index of the cache (100), the operation of flushing the cache (100) is imperative and is authorised to start, to the possible detriment of access to the cache (100) by the computer platforms (10₁ to 10ₙ), a part of the access band-width for the cache (100) then being used by copying one or more virtual volume(s) (V'₁ to V'ₙ) of that partition (P₁ to Pₙ) to the physical library (P20₁ to P20ₙ) during this flushing,
- if the value of the activity index of the cache (100) is less than or equal to the value of the minimum activity threshold, any operation of flushing the cache (100) is authorised to start, in order to allow one or more virtual volume(s) (V'₁ to V'ₙ) to be copied to the physical library (P20₁ to P20ₙ),
- if the value of the activity index of the cache (100) lies between the value of the minimum activity threshold and the value of the maximum activity threshold, an operation of flushing the cache (100) that is already in progress is authorised to continue, the copying of one or more virtual volume(s) (V'₁ to V'ₙ) of the cache (100) to the physical library (P20₁ to P20ₙ) being authorised during this current flushing operation but, if there is no flushing operation in progress, a new flushing operation of the cache (100) is not authorised to start,
- if the value of the activity index of the cache (100) is greater than the value of the maximum activity threshold, a new flushing operation of the cache (100) is not authorised to start and a flushing operation of the cache (100) already in progress is stopped, to the benefit of access to the cache (100) by the computer platforms (10₁ to 10ₙ), except if the value of the individual occupancy rate of the cache (100) is greater than the value of the maximum occupancy threshold or if the value of the average occupancy rate of the cache (100) is greater than the flush start threshold, further copying of one or more virtual volume(s) (V'₁ to V'ₙ) of the cache (100) to the physical library (P20₁ to P20ₙ), during a flushing operation already in progress being prohibited, whereas copying of one or more virtual volume(s) (V'₁ to V'ₙ) of the cache (100) to the physical library (P20₁ to P20ₙ), already in progress during this current flushing operation, is authorised to finish,
- if the value of the average occupancy rate of all the partitions (P₁ to Pₙ) of the cache (100) is less than or equal to the value of the priority threshold, access to the storage resources (20, 100) in response to requests transmitted by the means (101) for access by the platforms (10₁ to 10ₙ) to the storage system (1) has priority over the access necessary for copying volumes requiring the same resources (20, 100) during a flushing operation of the cache (100), it being possible then to defer this copying until these resources (20, 100) are released,
- if the value of the average occupancy rate of all the partitions (P₁ to Pₙ) of the cache (100) is greater than the priority threshold, access to the storage resources (20, 100) in response to the requests transmitted by the access means (101) of the computer platforms (10₁ to 10ₙ) to the storage system (1) does not have priority over the access necessary to copy volumes requiring the same resources (20, 100) during a flushing operation of the cache (100), which can therefore start or continue, to the possible detriment of access to the storage resources (20, 100) by the computer platforms (10₁ to 10ₙ),
- if the value of the average occupancy rate of all the partitions (P₁ to Pₙ) of the cache (100) is less than or equal to the value of the flush start threshold, a flushing operation of the cache (100) to the physical library (P20₁ to P20ₙ) is authorised to start only if the value of the activity index of the cache (100) is less than or equal to the value of the minimum activity threshold,
- if the value of the average occupancy rate of all the partitions (P₁ to Pₙ) of the cache (100) is greater than the value of the flush start threshold, a flushing operation of the cache (100) to the physical library (P20₁ to P20ₙ) is imperative and is authorised to start.

8. System according to one of Claims 1 to 7, **characterised in that** the module (31) for controlling cache activity comprises means for consulting the information generated by the organisation module (33) in order to calculate the activity index of the cache (100) by counting the number of open virtual volumes, the maximum activity threshold corresponding to the total number of virtual volumes (V'₁ to V'ₙ) in the cache (100), open at the same time, that consume a fraction of band-width deemed too large to allow an internal operation requiring access to the cache (100) to be started.

9. System according to one of Claims 3 to 8, **characterised in that** the module (32) controlling occupancy of the cache (100) comprises means for consulting information generated by the organisation module (33) in order to calculate, on the one hand, the average occupancy rate of the cache (100) by comparing the sum of the total size of the data present in the open virtual volumes (V'₁ to Vₙ), whatever their status, and the total size of the data present in the closed virtual volumes (V'₁ to V'ₙ), the status of which is "disk only", with the total storage capacity in all the partitions (P₁ to Pₙ) of the cache (100) and, on the other hand, the individual occupancy rate of each of the partitions (P₁ to Pₙ) of the cache (100) by comparing, for a given partition (P₁ to Pₙ), the size of the data present in the virtual volumes (V'₁ to V'ₙ) the status of which is "disk only", whether they are open or closed, with the total storage capacity of that partition (P₁ to Pₙ) of the cache (100).

10. System according to one of Claims 1 to 9, **characterised in that** the organisation module (33) co-operates with the cache activity control (31) and cache occupancy control (32) modules in order to distribute the virtual
volumes (V'₁ to V'ₙ) in an equitable manner over the various partitions (P₁ to Pₙ) of the cache (100), so as to favour a homogeneous distribution over all the disks supporting the various partitions (P₁ to Pₙ) of the cache (100).

11. System according to one of Claims 1 to 10, **characterised in that** the management module (30), at the time of the flushing operation of the cache (100), uses the results of the calculations of the cache occupancy control module (32) to select the virtual volumes (V'₁ to V'ₙ) of the cache (100) to be copied to the physical library (P20₁ to P20ₙ), the virtual volumes (V'₁ to V'ₙ) thus selected being the closed virtual volumes (V'₁ to V'ₙ), the status of which is "disk only" and which have been accessed the least recently, in read or write mode, by the computer platforms (10₁ to 10ₙ), either in a given partition (P₁ to Pₙ) of the cache (100) if the value of the individual occupancy rate of this partition is greater than or equal to the value of the maximum occupancy threshold, or in all the partitions (P₁ to Pₙ) of the cache (100) if the values of the individual occupancy rates of all the partitions are less than the value of the maximum occupancy threshold.

12. System according to one of Claims 1 to 11, **characterised in that** the management module (30) includes a module (34) for controlling the activity of the physical library (P20₁ to P20ₙ) maintaining constantly up to date at least the information relating to the use of the readers (P200₁ to P200ₙ) and/or the cartridges (P21₁ to P21ₙ) of the physical libraries (P20₁ to P20ₙ) under the control of the storage system (1), this information thus allowing the management module (30) to manage the time priorities for access to the storage resources (20, 100), on the one hand, by the system (1) itself for flushing at least one virtual volume (V'₁ to V'ₙ) of the cache (100) to at least one virtual volume (V₁ to Vₙ) of the physical library (P20₁ to P20ₙ) and, on the other hand, by the computer platforms (10₁ to 10ₙ) for reading from/writing to a virtual volume (V'₁ to V'ₙ) not present in the cache (100) and therefore requiring consultation of the physical library (P20₁ to P20ₙ) to copy a virtual volume (V₁ to Vₙ) from this physical library (P20₁ to P20ₙ) to the cache (100), in the form of a virtual volume (V'₁ to V'ₙ) of the virtual library (V20₁ to V20ₙ).

13. System according to one of Claims 2 to 12, **characterised in that** the management module (30), using its means for accessing the contents of the storage resources (20, 100) of the system (1), maintains constantly up to date at least the information relating to the validity of the virtual volumes (V₁ to Vₙ) present in the cartridges (P21₁ to P21ₙ) of the physical libraries (P20₁ to P20ₙ) under the control of the storage system (1), in relation to the virtual volumes (V'₁ to V'ₙ) that may be modified in the cache (100) by the computer platforms (10₁ to 10ₙ), this information on validity allowing the management module (30) to compare the space occupied by the obsolete virtual volumes (V₁ to Vₙ) in the cartridges (P21₁ to P21ₙ) of the physical library (P20₁ to P20ₙ) with a maximum invalidity threshold, and, when this space of obsolete virtual volumes (V₁ to Vₙ) reaches this threshold, to perform compacting of the valid volumes (V₁ to Vₙ) of the physical library (P20₁ to P20ₙ), in the cartridges (P21₁ to P21ₙ) containing virtual volumes (V₁ to Vₙ) not used in the physical library (P20₁ to P20ₙ) and/or corresponding to closed virtual volumes (V'₁ to V'ₙ) in the cache (100), by controlling the reading of all the valid volumes (V₁ to Vₙ) in the source cartridges (P21₁ to P21ₙ) containing obsolete volumes (V₁ to Vₙ) and the simultaneous copying of these valid volumes (V₁ to Vₙ) to target cartridges (P21₁ to P21ₙ), in order to erase these source cartridges (P21₁ to P21ₙ) and obtain only cartridges (P21₁ to P21ₙ) containing valid volumes (V₁ to Vₙ) in the physical library (P20₁ to P20ₙ) and empty cartridges.

14. System according to Claim 13, **characterised in that** the management module (30), responsible for the emulation of the virtual volumes (V₁ to Vₙ) of the physical library (P20₁ to P20ₙ) in virtual volumes (V'₁ to V'ₙ) of the virtual library (V20₁ to V20ₙ) of the cache (100), offers the possibility of a virtual volume (V'₁ to V'ₙ) of the cache (100) containing multiple images (V₁ to Vₙ) in the physical library (P20₁ to P20ₙ) and allows the virtual volumes (V'₁ to V'ₙ) of the cache (100) taken into account by the cache occupancy control module (32), in calculating the occupancy rate, to correspond to virtual volumes (V'₁ to V'ₙ) of the cache (100), the status of which is "disk only", i.e. having images (V₁ to Vₙ) present in the physical library (P20₁ to P20ₙ) are not all valid.

15. System according to one of Claims 13 and 14, **characterised in that** the management module (30) uses the results of the operations carried out by the cache activity control module (31), the cache occupancy control module (32) and the module (34) for controlling the activity of the physical library (P20₁ to P20ₙ), so that the compacting of the valid volumes (V₁ to Vₙ) in the physical library (P20₁ to P20ₙ) by the management module (30) is carried out according to the activity and occupancy of the cache (100), by favouring the access to the storage resources (20, 100) by the computer platforms (10₁ to 10ₙ) over the access necessary for this compacting.

16. System according to one of Claims 1 to 15, **characterised in that** the processing means (11) execute a software application constituting all the modules (30, 31, 32, 33 and 34) of the storage system (1) and responsible for the interoperability of the various means of the system, this software application co-operating with an operating system installed on the storage system (1) in order to manage the operations to be carried out by generating information relating at least to the locations and use of all the data present in the storage system (1), the data necessary for the execution of this application having first been recorded in a memory accessible by the processing means (11) of the system (1).

17. Method of backing up data generated, in at least one format, by at least one computer platform (10₁ to 10ₙ) and transmitted to a storage system (1) via at least one communication network (RC), using means (101) for access by the platform to the storage system (1), the storage system (1) including storage resources (20, 100) comprising, on the one hand, storage means (20) including at least one physical library (P20₁ to P20ₙ) comprising at least one robot (P22) capable of loading and unloading at least one cartridge (P21₁ to P21ₙ) for storing data in at least one reader (P200₁ to P200ₙ) allowing the writing and reading of data transmitted by the computer platform (10₁ to 10ₙ) in the physical library (P20₁ to P20ₙ) and, on the other hand, memory means (100), known as a cache (100), in which the processing means (11) of the storage system (1) emulate, with respect to the computer platforms (10₁ to 10ₙ), at least one virtual library (V20₁ to V20ₙ) on the basis of at least one physical library (P20₁ to P20ₙ) that the storage system has under its control, the data thus stored in the physical library (P20₁ to P20ₙ) and the virtual library (V20₁ to V20ₙ) being grouped in sets of a given size, known as virtual volumes, containing at least one image (V₁ to Vₙ) in the physical library (P20₁ to P20ₙ) and/or an image (V'₁ to V'ₙ) in the virtual library (V20₁ to V20ₙ), the means (101) for access by the platforms (10₁ to 10ₙ) to the storage system (1) thus accessing in read and write mode, via the communication network (RC), the image (V'₁ to V'ₙ) in the cache (100) of each of the virtual volumes stored by the storage system, the process being **characterised in that** it comprises at least the following steps:
- emulation (61) of the virtual volumes (V₁ to Vₙ) of the physical library (P20₁ to P20ₙ) in virtual volumes (V'₁ to V'ₙ) of the virtual library (V20₁ to V20ₙ) of the cache (100), by a management module (30), present in the processing means (11) of the storage system (1) and managing access to the storage resources (20, 100), both on the virtual volumes (V₁ to Vₙ) of the physical library (P20₁ to P20ₙ) and on the virtual volumes (V'₁ to V'ₙ) of the cache (100), according to requests transmitted by the means (101) for access by the computer platforms (10₁ to 10ₙ) to the storage system (1);
- calculation (62), by a cache activity control module (31), of at least one activity index of the cache (100) in predetermined time periods, reflecting the use of the access band-width for the cache (100), this calculation step (62) being repeated in order to monitor changes in the activity of the cache (100) periodically or on an ad hoc basis when space is allocated for a new virtual volume (V'₁ to V'ₙ) in the cache (100);
- calculation (63), by a module (32) for controlling cache occupancy, of at least one occupancy rate of the cache (100) at a given moment, this calculation step (63) being repeated in order to monitor changes in the occupancy of the cache (100) periodically or on an ad hoc basis when space is allocated for a new virtual volume (V'₁ to V'ₙ) in the cache (100);
- decision (64), by the management module (30), according to the result of these calculations and at least one algorithm (AG) for managing the access band-width of the cache (100), implemented in the storage system (1), between authorisation (70) or prohibition (80) of access to the storage resources (20, 100) by the computer platforms (10₁ to 10ₙ) for reading from/writing to virtual volumes (V'₁ to V'ₙ) in the cache (100) or by the system (1) itself for at least one operation, known as flushing the cache, allowing data to be copied from at least one virtual volume (V'₁ to V'ₙ) of the virtual library (V20₁ to V20ₙ) to at least one virtual volume (V₁ to Vₙ) of the physical library (P20₁ to P20ₙ), in order to regulate occupancy of the cache (100) whilst managing the time priorities for access to the resources by the platforms and the system itself
and **in that** it comprises, on the one hand, at least one step of installation (67) of a plurality of partitions (P₁ to Pₙ) on a plurality of hard disks (100₁ to 100ₙ) constituting the cache (100) and, on the other hand, at least one step (68) of creation and updating, by an organisation module (33), of data representing information relating to the distribution of partitions (P₁ to Pₙ) and to the distribution of the data recorded on the various partitions (P₁ to Pₙ), this organisation module (33) generating, on the basis of this information, at least one directory (RP) containing information relating to the locations and use of the virtual volumes (V'₁ to V'ₙ), the virtual volumes (V'₁ to V'ₙ) on which reading or writing is in progress being identified as open virtual volumes and the virtual volumes on which no reading or writing is in progress being identified as closed virtual volumes,
the step (62) of calculation of the activity index of the cache (100), by the cache activity control module (31), including at least one step of consulting (621) of the data generated by the organisation module (33), in order to calculate the activity index of the cache (100) by counting the number of open virtual volumes in the cache (100), the maximum activity threshold corresponding to the total number of virtual volumes (V'₁ to V'ₙ) of the cache (100) that are open at the same time, which consume a fraction of band-width deemed too large to allow an internal operation requiring access to the cache (100) to be started.

18. Method according to Claim 17, **characterised in that** it comprises a step of checking the contents of the physical library (P20₁ to P20ₙ) and the virtual library (V20₁ to V20ₙ) by the management module (30), using means for accessing the contents of the storage resources (20, 100) of the system (1), followed by a step of assignment, to each of the virtual volumes, of a value, known as status, from among at least the following statuses:
- "disk only" status when the virtual volume contains an image (V'₁ to V'ₙ) in the virtual library (V20₁ to V20ₙ) of the cache (100) but does not have an image in the physical library or of which at least one image (V₁ to Vₙ) in the physical library (P20₁ to P20ₙ) is not valid, i.e. do not contain the same data as the image (V'₁ to V'ₙ) in the virtual library (V20₁ to V20ₙ);
- "out off cache" status when the virtual volume does not contain any image (V'₁ to V'ₙ) in the virtual library (V20₁ to V20ₙ) of the cache (100);
- "disk and tape" status when the virtual volume contains valid images both in the virtual library (V20₁ to V20ₙ) of the cache (100) and in the physical library (P20₁ to P20ₙ);
- "swapping in" status when the virtual volume contains an image (V'₁ to V'ₙ) in the process of being loaded into the virtual library (V20₁ to V20ₙ), on the basis of an image (V₁ to Vₙ) in the physical library (P20₁ to P20ₙ);
- "swapping out" status when the virtual volume contains an image (V'₁ to V'ₙ) in the virtual library (V20₁ to V20ₙ) in the process of being copied into an image (V₁ to Vₙ) of the physical library (P20₁ to P20ₙ);
- "incomplete" status when the virtual volume (V'₁ to V'ₙ) of the virtual library (V20₁ to V20ₙ) is open and does not contain any data or contains incomplete data;
- "moving out" status when the virtual volume (V'₁ to V'ₙ) of the virtual library (V20₁ to V20ₙ) is in the process of being copied from one partition (P₁ to Pₙ) of the cache (100) to another;
- "swappable" status when the virtual volume contains an image (V'₁ to V'ₙ) in the virtual library (V20₁ to V20ₙ) of the cache (100) but in which at least one image (V₁ to Vₙ) in the physical library (P20₁ to P20ₙ) is not valid or the image (V'₁ to V'ₙ) in the virtual library (V20₁ to V20ₙ) is in the process of being copied into an image (V₁ to Vₙ) in the physical library (P20₁ to P20ₙ), i.e. the volume is either in "disk only" status or in "swapping out" status.

19. Method according to one of Claims 17 and 18, **characterised in that** the step (63) of calculation of the occupancy rate of the cache (100), at a given moment, by the module (32) controlling occupancy of the cache (100), includes on the one hand a step (635) of calculation of an occupancy rate, described as individual, corresponding to a calculation of the occupancy rate on each of the partitions (P₁ to Pₙ) of the cache (100) individually and, on the other hand, a step (636) of calculation of an occupancy rate, described as average, corresponding to a calculation of the occupancy rate of all the partitions (P₁ to Pₙ) of the cache (100).

20. Method according to Claim 19, **characterised in that** the step (636) of calculation of the average occupancy rate of the cache (100), by the module (32) controlling occupancy of the cache (100), consists of measuring, for all the partitions (P₁ to Pₙ) of the cache (100), the sum of the size of the data present in the closed virtual volumes (V'₁ to V'ₙ), the status of which is "disk only" and of the size allocated to the open virtual volumes (V'₁ to V'ₙ), whatever their status, this sum being related to the total size available in all the partitions (P₁ to Pₙ) of the cache (100), in order to obtain the average occupancy rate of all the partitions (P₁ to Pₙ) of the cache (100).

21. Method according to one of Claims 19 and 20, **characterised in that** the step (635) of calculation of the individual occupancy rate of each partition (P₁ to Pₙ) of the cache (100), by the module (32) controlling occupancy of the cache (100), consists in measuring, for each partition (P₁ to Pₙ) of the cache (100) individually, the total size of the data present in the virtual volumes (V'₁ to V'ₙ), the status of which is "disk only", whether they are open or closed, this size being related to the total size available in the partition (P₁ to Pₙ) in question of the cache (100), in order to obtain the average occupancy rate of each of the partitions (P₁ to Pₙ) of the cache (100).

22. Method according to one of Claims 17 to 21, **characterised in that** the step (62) of calculation of the activity index of the cache (100) in predetermined time periods, by the cache activity control module (31), consists in calculating an average, calculated over a determined number of successive determined time periods, of the maximum number of virtual volumes (V'₁ to V'ₙ) of the cache (100) open simultaneously in each determined time period.

23. Method according to one of Claims 20 to 22, **characterised in that** it comprises at least one additional step of comparison (65) of the cache activity index with a minimum activity threshold and a maximum activity threshold, a step of comparison (661) of the individual occupancy rate of the cache with a maximum occupancy threshold and a step of comparison (662) of the average occupancy rate with a first threshold, known as the priority threshold, below which the occupancy of the cache (100) has priority over flushing and a second threshold, known as the flush start threshold, above which flushing of the cache (100) can be carried out, implemented by the management module (30) in order to manage access to the cache (100) using the algorithm (AG) for managing the access band-width of the cache (100), implemented in the storage system (1) and including at least one of the following rules:
- if the value of the individual occupancy rate of a partition (P₁ to Pₙ) of the cache (100) is greater than the value of the maximum occupancy threshold, whatever the value of the activity index of the cache (100), the flushing operation of the cache (100) is imperative and is authorised to start, to the possible detriment of access to the cache (100) by the computer platforms (10₁ to 10ₙ), a part of the access band-width of the cache (100) then being used by copying one or more virtual volume(s) (V'₁ to V'ₙ) of this partition (P₁ to Pₙ) to the physical library (P20₁ to P20ₙ) during this flushing,
- if the value of the activity index of the cache (100) is less than or equal to the value of the minimum activity threshold, any flushing operation of the cache (100) is authorised to start, in order to allow one or more virtual volume(s) (V'₁ to V'ₙ) to be copied to the physical library (P20₁ to P20ₙ),
- if the value of the activity index of the cache (100) lies between the value of the minimum activity threshold and the value of the maximum activity threshold, a flushing operation of the cache (100) already in progress is authorised to continue, the copying of one or more virtual volume(s) (V'₁ to V'ₙ) of the cache (100) to the physical library (P20₁ to P20ₙ) being authorised during this flushing operation in progress but, if there is no flushing operation in progress, a new flushing operation of the cache (100) is not authorised to start,
- if the value of the activity index of the cache (100) is greater than the value of the maximum activity threshold, a new flushing operation of the cache (100) is not authorised to start and a flushing operation of the cache (100) already in progress is stopped, to the benefit of access to the cache (100) by the computer platforms (10₁ to 10ₙ), except if the value of the individual occupancy rate of the cache (100) is greater than the value of the maximum occupancy threshold or if the value of the average occupancy rate of the cache (100) is greater than the flush start threshold, further copying of one or more virtual volume(s) (V'₁ to V'ₙ) of the cache (100) to the physical library (P20₁ to P20ₙ) during a flushing operation already in progress being prohibited, while copying already in progress of one or more virtual volume(s) (V'₁ to V'ₙ) of the cache (100) to the physical library (P20₁ to P20ₙ), during this flushing operation in progress, is authorised to finish,
- if the value of the average occupancy rate of all the partitions (P₁ to Pₙ) of the cache (100) is less than or equal to the value of the priority threshold, access to the storage resources (20, 100) in response to requests transmitted by the means (101) for accessing the computer platforms (10₁ to 10ₙ) to the storage system (1) have priority over the access necessary for copying volumes requiring the same resources (20, 100) during a flushing operation of the cache (100), it being possible then to defer this copying until release of these resources (20,100),
- if the value of the average occupancy rate of all the partitions (P₁ to Pₙ) of the cache (100) is greater than the priority threshold, the access to the storage resources (20, 100) in response to the requests transmitted by the means (101) for accessing the computer platforms (10₁ to 10ₙ) to the storage system (1) do not have priority over the access necessary for copying volumes requiring the same resources (20, 100) during a flushing operation of the cache (100), which can therefore start or continue, to the possible detriment of access to the storage resources (20, 100) by the computer platforms (10₁ to 10ₙ),
- if the value of the average occupancy rate of all the partitions (P₁ to Pₙ) of the cache (100) is less than or equal to the value of the flush start threshold, a flushing operation of the cache (100) to the physical library (P20₁ to P20ₙ) is authorised to start only if the value of the activity index of the cache (100) is less than or equal to the value of the minimum activity threshold,
- if the value of the average occupancy rate of all the partitions (P₁ to Pₙ) of the cache (100) is greater than the value of the flush start threshold, a flushing operation of the cache (100) to the physical library (P20₁ to P20ₙ) is imperative and is authorised to start.

24. Method according to one of Claims 17 to 23, **characterised in that** the step (62) of calculation of the activity index of the cache (100), by the cache activity control module (31), comprises at least one step of consultation (621) of the data generated by the organisation module (33), in order to calculate the activity index of the cache (100) by counting the number of open virtual volumes in the cache (100), the maximum activity threshold corresponding to the total number of virtual volumes (V'₁ to V'ₙ) in the cache (100) that are open at the same time, which consume a fraction of band-width deemed too large to allow an internal operation requiring an access to the cache (100) to be started.

25. Method according to one of Claims 20 to 24, **characterised in that** the step (63) of calculation of the occupancy rate of the cache (100), by the cache occupancy control module (32), comprises at least one step of consultation (631) of the data generated by the organisation module (33), in order to calculate, on the one hand, the average occupancy rate of the cache (100) using a comparison (632) of the sum of the total size of data present in the open virtual volumes (V'₁ to V'ₙ), whatever their status, and the total size of the data present in the closed virtual volumes (V'₁ to V'ₙ), the status of which is "disk only", with the total storage capacity in all the partitions (P₁ to Pₙ) of the cache (100) and, on the other hand, the individual occupancy rate of each of the partitions (P₁ to Pₙ) of the cache (100) using a comparison (633), for a given partition (P₁ to Pₙ), of the size of the data present in the virtual volumes (V'₁ in V'ₙ), the status of which is "disk only", whether they are open or closed, with the total storage capacity of this partition (P₁ to Pₙ) of the cache (100).

26. Method according to one of Claims 17 to 25, **characterised in that** the step of emulation (61) of the virtual volumes (V'₁ to V'ₙ) by the management module (30) comprises a step of co-operation (611) of the organisation module (33) with the cache activity control (31) and cache occupancy control (32) modules in order to distribute the virtual volumes (V'₁ to V'ₙ) in an equitable manner over the various partitions (P₁ to Pₙ) of the cache (100), so as to favour a homogeneous distribution over all the disks supporting the various partitions (P₁ to Pₙ) of the cache (100).

27. Method according to one of Claims 17 to 26, **characterised in that** the flushing operation of the cache (100) results from use, by the management module (30), of the results of the calculations of the cache occupancy control module (32), in order to select the virtual volumes (V'₁ to V'ₙ) of the cache (100) to be copied to the physical library (P20₁ to P20ₙ), the virtual volumes (V'₁ to V'ₙ) thus selected being the closed virtual volumes (V'₁ to V'ₙ), the status of which is "disk only" and which have been accessed the least recently, in read or write mode, by the computer platforms (10₁ to 10ₙ), either in a given partition (P₁ to Pₙ) of the cache (100) if the value of the individual occupancy rate of this partition is greater than or equal to the value of the maximum occupancy threshold, or in all the partitions (P₁ to Pₙ) of the cache (100) if the values of the individual occupancy rates of all the partitions are less than the value of the maximum occupancy threshold.

28. Method according to one of Claims 17 to 27, **characterised in that** it includes at least one step (71) of creation and update, by a library activity control module (34), of data representing information relating to the use of the readers and/or cartridges of the libraries (P20₁ to P20ₙ) under the control of the storage system (1), this information thus allowing the management module (30) to manage the time priorities of access to the storage resources (20, 100), on the one hand, by the system (1) itself for flushing at least one virtual volume (V'₁ to V'ₙ) of the cache (100) to a volume (V₁ to Vₙ) of the physical library (P20₁ to P20ₙ) and, on the other hand, by the computer platforms (10₁ to 10ₙ) for reading/writing a virtual volume (V'₁ to V'ₙ) not present in the cache (100) and therefore requiring consultation of the physical library (P20₁ to P20ₙ) for copying a volume (V₁ to Vₙ) from this physical library (P20₁ to P20ₙ) to the cache (100), in the form of a virtual volume (V'₁ to V'ₙ) of the virtual library (V20₁ to V20ₙ).

29. Method according to one of Claims 18 to 28, **characterised in that** it comprises at least one step (69) of creation and update, by the management module (30), of data representing information relating to the validity of the volumes (V₁ to Vₙ) present in the cartridges (P21₁ to P21ₙ) of the physical libraries (P20₁ to P20ₙ) under the control of the storage system (1), with respect to the virtual volumes (V₁ to Vₙ) that may have been modified in the cache (100) by the computer platforms (10₁ to 10ₙ), this validity information allowing the management module (30) to implement a step of comparison (89) of the space occupied by the obsolete virtual volumes (V₁ to Vₙ) in the cartridges (P21₁ to P21ₙ) of the physical library (P20₁ to P20ₙ) with a maximum invalidity threshold and, when this space occupied by these obsolete virtual volumes (V₁ to Vₙ) reaches this threshold, to implement a step of compacting (90) of the valid volumes (V₁ to Vₙ), extracted from the cartridges (P21₁ to P21ₙ) containing volumes (V₁ to Vₙ) not used and/or corresponding to closed virtual volumes (V'₁ to Vₙ), by controlling the reading (92) of all the valid volumes (V₁ to Vₙ) of the source cartridges (P21₁ to P21ₙ) containing obsolete volumes (V₁ to Vₙ) and simultaneous copying (93) of these valid volumes (V₁ to Vₙ) to the target cartridges (P21₁ to P21ₙ), so as to erase these source cartridges (P21₁ to P21ₙ) and obtain only cartridges (P21₁ to P21ₙ) containing valid volumes (V₁ to Vₙ) in the physical library (P20₁ to P20ₙ).

30. Method according to Claim 29, **characterised in that** the steps of emulation (61) of the virtual volumes (V₁ to Vₙ) of the physical library (P20₁ to P20ₙ) in virtual volumes (V'₁ to V'ₙ) of the virtual library (V20₁ to V20ₙ) of the cache (100) and of management of the cache (100) by the management module (30), offer the possibility that a virtual volume (V'₁ to V'ₙ) of the cache (100) contains multiple images (V₁ to Vₙ) in the physical library (P20₁ to P20ₙ), the step (69) of creation and update, by the management module (30), of data representing information relating to the validity of the volumes (V₁ to Vₙ) present in the cartridges (P21₁ to P21ₙ) of the physical libraries (P20₁ to P20ₙ), allowing the virtual volumes (V'₁ to V'ₙ) of the cache (100) taken into account by the cache occupancy control module (32), in the calculation of the occupancy rate, to correspond to the virtual volumes (V'₁ to V'ₙ) of the cache (100), the status of which is "disk only", i.e. in which the images (V₁ to Vₙ) present in the physical library (P20₁ to P20ₙ) are not all valid.

31. Method according to one of Claims 29 and 30, **characterised in that** the step (90) of compacting of the physical library (P20₁ to P20ₙ) comprises a step of use (91), by the management module (30), of the results of the operations carried out by the cache activity control module (31), the cache occupancy control module (32) and the module (34) for controlling the activity of the physical library (P20₁ to P20ₙ), so that the compacting of the valid volumes (V₁ to Vₙ) of the physical library (P20₁ to P20ₙ) by the management module (30) is carried out according to the activity and occupancy of the cache (100), by favouring access to the storage resources (20, 100) by the computer platforms (10₁ to 10ₙ) over the access necessary for this compacting.

32. Method according to one of Claims 17 to 31, **characterised in that** it includes a step of installation of a software application in the operating system of the storage system (1), this software application constituting all the modules (30, 31, 32, 33 and 34) of the storage system (1) and responsible for the interoperability of the various means of the system, this software application co-operating with an operating system installed in the storage system (1) in order to manage the operations to be carried out by generating information relating at least to the locations and use of all the data present in the storage system (1), this installation step allowing the data necessary for execution of this application to be recorded in a memory accessible by the processing means (11) of the system (1).

## Patentansprüche

1. System (1) zur Speicherung von Daten mindestens eines Formates, von mindestens einer Informatik-Plattform (10₁ bis 10ₙ) erzeugt und dem Speicherungssystem (1) über mindestens ein Kommunikations-Netzwerk (RC) durch Mittel (101) für den Zugang der Plattform zum Speicherungssystem (1) übertragen, wobei das Speicherungssystem (1) Mittel (11) zur Verarbeitung und Ressourcen (20, 100) zur Speicherung enthält, die einerseits Mittel (20) zur Speicherung enthalten, die mindestens eine physikalische Bibliothek (P20₁ bis P20ₙ) enthalten, mindestens einen Roboter (P22) enthaltend, der fähig ist, mindestens eine Datenspeicherungspatrone (P21₁ bis P21ₙ) zu beladen und zu entladen in mindestens einem Lesegerät (P200₁ bis P200ₙ), das das Schreiben und Lesen der von der Informatik-Plattform (10₁ bis 10ₙ) in die physikalische Bibliothek (P20₁ bis P20ₙ) übertragenen Daten ermöglicht, und, andererseits, Mittel (100) zur Speicherung, Cache (100) genannt, in denen die Verarbeitungs-Mittel (11) des Speicherungs-Systems (1) gegenüber der Informatik-Plattformen (10₁ bis 10ₙ) mindestens eine virtuelle Bibliothek (V20₁ bis V20ₙ) emulieren, ausgehend von mindestens einer physikalischen Bibliothek (P20₁ bis P20ₙ), die das Speicherungs-System (1) unter seiner Kontrolle hat, wobei die so in der physikalischen Bibliothek (P20₁ bis P20ₙ) und der virtuellen Bibliothek (V20₁ bis V20ₙ) gespeicherten Daten in Einheiten von bestimmter Größe zusammengefasst werden, virtuelle Volumen genannt, die mindestens ein Abbild (V₁ bis Vₙ) in der physikalischen Bibliothek (P20₁ bis P20ₙ) und/oder ein Abbild (V'₁ bis V'ₙ) in der virtuellen Bibliothek (V20₁ bis V20ₙ) besitzen, wobei die Mittel (101) für Zugang der Plattformen (10₁ bis 10ₙ) zum Speicherungs-System (1) so über das Kommunikations-Netzwerk (RC) lesend und schreibend zugreifen auf das Abbild (V'₁ bis V'ₙ) eines jeden virtuellen Volumens im Cache (100), das vom Speicherungs-System gespeichert wird, **dadurch gekennzeichnet, dass** die Verarbeitungs-Mittel (11) des Speicherungs-Systems (1) ein Verwaltungs-Modul (30) enthalten, das den Zugang zu den Speicherungs-Ressourcen (20, 100) verwaltet, sowohl in der physikalischen Bibliothek (P20₁ bis P20ₙ) als auch in der virtuellen Bibliothek (V20₁ bis V20ₙ), in Abhängigkeit der von den Mitteln (101) der Informatik-Plattformen (10₁ bis 10ₙ) für Zugang zum Speicherungs-System (1) übertragenen Anfragen, wobei das Verwaltungs-Modul (30) verantwortlich ist für die Emulierung des virtuellen Volumens (V₁ bis Vₙ) der physikalischen Bibliothek zu virtuellen Volumen (V'₁ bis V'ₙ) der virtuellen Bibliothek des Caches (100) und einerseits ein Modul (31) zur Überwachung der Cache-Aktivität enthält, das mindestens einen Aktivitäts-Index des Caches in bestimmten Zeitintervallen berechnet, der die Benutzung des Zugangs-Übertragungsbandes zum Cache (100) widerspiegelt, und andererseits ein Modul (32) zur Überwachung der Belegung des Caches, das mindestens eine Belegungsquote des Caches zu einem gegebenen Zeitpunkt berechnet, wobei das Verwaltungs-Modul (30) diese Berechnungen periodisch oder punktuell bei einer Speicherzuweisung für ein neues, virtuelles Volumen (V'₁ bis V'ₙ) im Cache (100) auslöst und das Ergebnis dieser Berechnungen in Abhängigkeit mindestens eines, im Speicherungs-System implementierten Algorithmus (AG) zur Verwaltung des Zugangs-Übertragungsbandes zum Cache verwendet, derart, dass die Belegung des Caches (100) geregelt wird unter Verwaltung der Zeit-Prioritäten des Zugriffs auf die Speicherungs-Ressourcen (20, 100) durch die Informatik-Plattformen (10₁ bis 10ₙ) zum Auslesen/Beschreiben der virtuellen Volumen (V'₁ bis Vₙ) des Caches (100) oder durch das System (1) selbst für mindestens eine Operation, die als "Leeren des Caches" (100) bezeichnet wird, welches das Kopieren der Daten mindestens eines virtuellen Volumens (V'₁ bis V'ₙ) der virtuellen Bibliothek (V20₁ bis V20ₙ) in mindestens ein virtuelles Volumen (V₁ bis Vₙ) der physikalischen Bibliothek (P20₁ bis P20ₙ) ermöglicht, wobei der Cache (100) aus einer Mehrzahl von Festplatten (100₁ bis 100ₙ) besteht, auf denen eine Mehrzahl von Partitionen (P₁ bis Pₙ) eingeteilt sind, wobei das Verwaltungs-Modul (30) ein Organisations-Modul (33) enthält, das permanent Informationen aktualisiert bezüglich der Einteilung der Partitionen (P₁ bis Pₙ), die auf den Festplatten installiert sind, und wobei dieses Organisations-Modul (33) bei der Einteilung der gespeicherten Daten auf die verschiedenen Partitionen (P₁ bis Pₙ) anhand dieser Informationen mindestens ein Verzeichnis (RP) erzeugt, das Informationen bezüglich der Standorte und der Verwendung des virtuellen Volumens (V'₁ bis Vₙ) des Caches (100) enthält, wobei die virtuellen Volumen (V'₁ bis V'ₙ), auf denen ein Lese- oder ein Schreibvorgang stattfindet, als geöffnete, virtuelle Volumen identifiziert werden und die virtuellen Volumen, auf denen keinerlei Lese- oder ein Schreibvorgang stattfindet, als geschlossene, virtuelle Volumen identifiziert werden, wobei das Modul (31) zur Überwachung der Cache-Aktivität Mittel zur Hinzuziehung der vom Organisations-Modul (33) erzeugten Informationen enthält, um den Aktivitäts-Index des Caches (100) zu berechnen durch Zählen der Menge an geöffneten, virtuellen Volumen im Cache während eines bestimmen Zeitraumes.

2. System nach Anspruch 1, **dadurch gekennzeichnet, dass** das Verwaltungs-Modul (30) Mittel enthält für Zugriff auf den Inhalt der Speicherungs-Ressourcen (20, 100) des Systems (1) und den Inhalt der physikalischen Bibliothek (P20₁ bis P20ₙ) und der virtuellen Bibliothek (V20₁ bis V20ₙ) überprüft, um jedem der virtuellen Volumen einen Wert, Zustandsregel genannt, zuzuordnen, darunter mindestens die folgenden Zustandsregeln:
- Zustandsregel "disc only", wenn das virtuelle Volumen ein Abbild (V'₁ bis V'ₙ) in der virtuellen Bibliothek (V20₁ bis V20ₙ) des Caches (100) besitzt, aber kein Abbild in der physikalischen Bibliothek besitzt oder davon mindestens ein Abbild (V₁ bis Vₙ) in der physikalischen Bibliothek (P20₁ bis P20ₙ) ungültig ist, das heißt nicht die selben Daten enthält, wie das Abbild (V'₁ bis V'ₙ) in der virtuellen Bibliothek (V20₁ bis V20ₙ);
- Zustandsregel "out of cache", wenn das virtuelle Volumen keinerlei Abbild (V'₁ bis V'ₙ) in der virtuellen Bibliothek (V20₁ bis V20ₙ) des Caches (100) besitzt;
- Zustandsregel "disk and tape", wenn das virtuelle Volumen gültige Abbilder sowohl in der virtuellen Bibliothek (V20₁ bis V20ₙ) des Caches (100) als auch in der physikalischen Bibliothek (P20₁ bis P20ₙ) besitzt;
- Zustandsregel "swapping in", wenn das virtuelle Volumen ein Abbild (V'₁ bis V'ₙ) besitzt, das gerade in die virtuelle Bibliothek (V20₁ bis V20ₙ) geladen wird, ausgehend von einem Abbild (V₁ bis Vₙ) in der physikalischen Bibliothek (P20₁ bis P20ₙ);
- Zustandsregel "swapping out", wenn das virtuelle Volumen ein Abbild (V'₁ bis V'ₙ) in der virtuellen Bibliothek (V20₁ bis V20ₙ) besitzt, das gerade in ein Abbild (V₁ bis Vₙ) der physikalischen Bibliothek kopiert wird;
- Zustandsregel "incomplete", wenn das virtuelle Volumen (V'₁ bis V'ₙ) der virtuellen Bibliothek (V20₁ bis V20ₙ) geöffnet ist und keine Daten oder unvollständige Daten enthält;
- Zustandsregel "moving out", wenn das virtuelle Volumen (V'₁ bis V'ₙ) der virtuellen Bibliothek (V20₁ bis V20ₙ) gerade von einer Partition (P₁ bis Pₙ) des Caches (100) in eine andere kopiert wird;
- Zustandsregel "swappable", wenn das virtuelle Volumen ein Abbild (V'₁ bis V'ₙ) in der virtuellen Bibliothek (V20₁ bis V20ₙ) des Caches (100) besitzt, wovon aber mindestens ein Abbild (V₁ bis Vₙ) in der physikalischen Bibliothek (P20₁ bis P20ₙ) ungültig ist, oder das Abbild (V'₁ bis V'ₙ) in der virtuellen Bibliothek (V20₁ bis V20ₙ) gerade in ein Abbild (V₁ bis Vₙ) der physikalischen Bibliothek (P20₁ bis P20ₙ) kopiert wird, das heißt, die Zustandsregel des Volumens ist entweder "disc only" oder "swapping out".

3. System nach einem der Ansprüche 1 und 2, **dadurch gekennzeichnet, dass** das Modul (32) zur Überwachung der Belegung des Caches einerseits eine Belegungsquote, als individuell bezeichnet, berechnet, die einer individuellen Berechnung der Belegungsquote auf jeder der Partitionen (P₁ bis Pₙ) des Caches (100) entspricht, und, andererseits, eine Belegungsquote, als durchschnittlich bezeichnet, die einer Berechnung der Belegungsquote der Gesamtheit der Partitionen (P₁ bis Pₙ) des Caches (100) entspricht.

4. System nach Anspruch 3, **dadurch gekennzeichnet, dass** die durchschnittliche Belegungsquote des Caches (100), berechnet durch das Modul (32) zur Überwachung der Belegung des Caches, zu einem gegebenen Zeitpunkt für die Gesamtheit der Partitionen (P₁ bis Pₙ) des Caches (100) der Summe entspricht der Größe der Daten, die vorliegen in den geschlossenen, virtuellen Volumen (V'₁ bis V'ₙ), deren Zustandsregel "disc only" ist, und der für die Gesamtheit der Partitionen (P₁ bis Pₙ) der an die geöffneten, virtuellen Volumen (V'₁ bis V'ₙ) unabhängig ihrer Zustandsregeln zugeteilten Größe entspricht, wobei diese Summe für die Gesamtheit der Partitionen (P₁ bis Pₙ) zur insgesamt verfügbaren Größe der Gesamtheit der Partitionen (P₁ bis Pₙ) des Caches (100) ins Verhältnis gesetzt wird, um die mittlere Belegungsquote der Gesamtheit der Partitionen (P₁ bis Pₙ) des Caches (100) zu erhalten.

5. System nach einem der Ansprüche 3 und 4, **dadurch gekennzeichnet, dass** zu einem gegebenen Zeitpunkt die individuelle Belegungsquote von jeder Partition (P₁ bis Pₙ) des Caches (100), berechnet vom Modul (32) zur Überwachung der Belegung des Caches, individuell für jede der Partitionen (P₁ bis Pₙ) des Caches (100) der Größe der Daten entspricht, die in den virtuellen Volumen (V'₁ bis V'ₙ) vorliegen, deren Zustandsregel "disc only" ist, egal, ob sie geöffnet oder geschlossen sind, wobei diese Größe für jede Partition (P₁ bis Pₙ) zur gesamt verfügbaren Größe der betrachteten Partition (P₁ bis Pₙ) ins Verhältnis gesetzt wird, um die individuelle Belegungsquote von jeder Partition (P₁ bis Pₙ) zu erhalten.

6. System nach einem der Ansprüche 1 bis 5, **dadurch gekennzeichnet, dass** der Aktivitätsindex des Caches für bestimmte Zeiträume, der vom Modul (31) zur Überwachung der Cache-Aktivität berechnet wird, dem über eine bestimmte Anzahl von aufeinanderfolgenden, bestimmten Zeiträumen berechneten Durchschnitt der maximalen Anzahl von gleichzeitig während jedem der bestimmten Zeiträume geöffneten, virtuellen Volumen (V'₁ bis V'ₙ) entspricht.

7. System nach einem der Ansprüche 3 bis 6, **dadurch gekennzeichnet, dass** das Verwaltungs-Modul (30) den Aktivitätsindex des Caches mit einer minimalen Aktivitätsschwelle und einer maximalen Aktivitätsschwelle vergleicht, die individuelle Belegungsquote des Caches mit einer maximalen Belegungsschwelle vergleicht und die mittlere Belegungsquote des Caches vergleicht mit einer ersten Schwelle, Prioritätsschwelle genannt, unterhalb derer die Belegung des Caches (100) bezüglich des Leerens vorrangig ist, und einer zweiten Schwelle, Schwelle des Beginns des Leerens genannt, oberhalb derer das Leeren des Caches (100) durchgeführt werden kann, um den Zugriff des Caches (100) zu verwalten mittels des im Speicherungs-System implementierten Algorithmus (AG) zur Verwaltung des Zugangs-Übertragungsbandes zum Cache, der mindestens eine der folgenden Regeln enthält:
- wenn der Wert der individuellen Belegungsrate einer Partition (P₁ bis Pₙ) des Caches (100) größer ist, als der Wert der maximalen Belegungsschwelle, egal, wie der Wert des Aktivitätsindex des Caches (100) ist, ist der Vorgang des Leerens des Caches (100) geboten und zum Nachteil eines eventuellen Zugriffs auf den Cache (100) durch die Informatik-Plattformen (10₁ bis 10ₙ) zum Starten autorisiert, wobei im Zuge dieses Leerens ein Teil des Zugangs-Übertragungsbandes zum Cache (100) dann vom Kopieren eines oder mehrerer virtueller Volumen (V'₁ bis V'ₙ) dieser Partition (P₁ bis Pₙ) in die physikalische Bibliothek (P20₁ bis P20ₙ) verwendet wird,
- wenn der Wert des Aktivitätsindex des Caches (100) kleiner oder gleich der minimalen Aktivitätsschwelle ist, wird jeglicher Vorgang des Leerens des Caches (100) zum Starten autorisiert, um das Kopieren eines oder mehrerer virtueller Volumen (V'₁ bis V'ₙ) in die physikalische Bibliothek (P20₁ bis P20ₙ) zu ermöglichen,
- wenn der Wert des Aktivitätsindex des Caches (100) zwischen der minimalen Aktivitätsschwelle und der maximalen Aktivitätsschwelle liegt, wird ein bereits erfolgender Vorgang des Leerens des Caches (100) autorisiert fortzufahren, wobei das Kopieren eines oder mehrerer virtueller Volumen (V'₁ bis V'ₙ) des Caches (100) in die physikalische Bibliothek (P20₁ bis P20ₙ) autorisiert wird, während dieser Leerungs-Vorgang abläuft, aber, wenn kein Vorgang des Leerens abläuft, wird ein neuer Vorgang des Leerens des Caches (100) nicht zum Starten autorisiert,
- wenn der Wert des Aktivitätsindex des Caches (100) größer ist, als der Wert der maximalen Aktivitätsschwelle, wird ein neuer Vorgang des Leerens des Caches (100) nicht zum Starten autorisiert und ein bereits erfolgender Vorgang des Leerens des Caches (100) wird unterbrochen, zugunsten des Zugriffs auf den Cache (100) durch die Informatik-Plattformen (10₁ bis 10ₙ), es sei denn der Wert der individuellen Belegungsquote des Caches (100) ist größer als der Wert der maximalen Belegungsschwelle, oder der Wert der mittleren Belegungsquote des Caches (100) ist größer als die Startschwelle des Leerens, wobei ein neues Kopieren eines oder mehrerer virtueller Volumen (V'₁ bis V'ₙ) des Caches (100) in die physikalische Bibliothek (P20₁ bis P20ₙ) während eines bereits erfolgenden Leerungs-Vorgangs verboten wird, während ein bereits erfolgendes Kopieren eines oder mehrerer virtueller Volumen (V'₁ bis V'ₙ) des Caches (100) in die physikalische Bibliothek (P20₁ bis P20ₙ) zum Fertigstellen autorisiert wird, während dieser Leerungs-Vorgang abläuft,
- wenn der Wert der mittleren Belegungsquote der Gesamtheit der Partitionen (P₁ bis Pₙ) des Caches (100) kleiner oder gleich dem Wert der Prioritäts-Schwelle ist, sind die Zugriffe auf die Speicherungs-Ressourcen (20, 100) in Folge der durch die Mittel (101) für Zugriff der Informatik-Plattformen (10₁ bis 10ₙ) auf das Speicherungs-System (1) übertragenen Anfragen vorrangig gegenüber der für Kopieren der Volumen notwendigen Zugriffe, die die selben Ressourcen (20, 100) bei einem Vorgang des Leerens des Caches (100) erfordern, wobei dieses Kopieren dann bis zum Freiwerden dieser Ressourcen (20, 100) verschoben werden kann,
- wenn der Wert der mittleren Belegungsquote der Gesamtheit der Partitionen (P₁ bis Pₙ) des Caches (100) größer ist als die Prioritäts-Schwelle, sind die Zugriffe auf die Speicherungs-Ressourcen (20, 100) in Folge der durch die Mittel (101) für Zugriff der Informatik-Plattformen (10₁ bis 10ₙ) auf das Speicherungs-System (1) übertragenen Anfragen nicht vorrangig gegenüber der für Kopieren der Volumen notwendigen Zugriffe, die die selben Ressourcen (20, 100) bei einem Vorgang des Leerens des Caches (100) erfordern, der also zum eventuellen Nachteil des Zugriffs der Informatik-Plattformen (10₁ bis 10ₙ) auf die Speicherungs-Ressourcen (20, 100) starten oder fortfahren darf,
- wenn der Wert der mittleren Belegungsquote der Gesamtheit der Partitionen (P₁ bis Pₙ) des Caches (100) kleiner oder gleich der Schwelle für den Start des Leerens ist, wird ein Vorgang des Leerens des Caches (100) in die physikalische Bibliothek (P20₁ bis P20ₙ) nur dann zum Starten autorisiert, wenn der Wert des Aktivitätsindex des Caches (100) kleiner oder gleich der minimalen Aktivitätsschwelle ist,
- wenn der Wert der mittleren Belegungsquote der Gesamtheit der Partitionen (P₁ bis Pₙ) des Caches (100) größer ist als die Schwelle für den Start des Leerens, ist ein Vorgang des Leerens des Caches (100) in die physikalische Bibliothek (P20₁ bis P20ₙ) unerlässlich und zum Starten autorisiert.

8. System nach einem der Ansprüche 1 bis 7, **dadurch gekennzeichnet, dass** das Modul (31) zur Überwachung der Cache-Aktivität Mittel zum Hinzuziehen der Informationen enthält, die vom Organisations-Modul (33) erzeugt wurden, um den Aktivitätsindex des Caches (100) durch Zählen der geöffneten, virtuellen Volumen zu berechnen, wobei die maximale Aktivitätsschwelle der gesamten Anzahl der gleichzeitig geöffneten, virtuellen Volumen (V'₁ bis V'ₙ) des Caches (100) entspricht, die einen Bruchteil des Übertragungsbandes belegen, der als zu groß bewertet wird, um einen internen Vorgang zu starten, der einen Zugriff auf den Cache (100) erfordert.

9. System nach einem der Ansprüche 3 bis 8, **dadurch gekennzeichnet, dass** das Modul (32) zur Überwachung der Belegung des Caches (100) Mittel zur Hinzuziehung der Informationen enthält, die vom Organisations-Modul (33) erzeugt wurden, um zu berechnen einerseits die mittlere Belegungsquote des Caches (100) durch Vergleichen der Summe der Gesamt-Größe der Daten, die in den geöffneten, virtuellen Volumen (V'₁ bis V'ₙ) vorliegen, egal wie ihre Zustandsregel ist, und der Gesamt-Größe der Daten, die in den geschlossenen, virtuellen Volumen (V'₁ bis V'ₙ) vorliegen und deren Zustandsregel "disc only" ist, mit der Gesamt-Speicherkapazität in der Gesamtheit der Partitionen (P₁ bis Pₙ) des Caches (100), und, andererseits, der individuellen Belegungsquote einer jeden Partition (P₁ bis Pₙ) des Caches (100) durch Vergleichen, für eine gegebene Partition (P₁ bis Pₙ), der Größe der Daten in den virtuellen Volumen (V'₁ bis V'ₙ), deren Zustandsregel "disc only" ist, egal, ob sie geöffnet oder geschlossen sind, mit der Gesamt-Speicherkapazität dieser Partition (P₁ bis Pₙ) des Caches (100).

10. System nach einem der Ansprüche 1 bis 9, **dadurch gekennzeichnet, dass** das Organisations-Modul (33) mit den Modulen (31) zur Überwachung der Cache-Aktivität und (32) der Überwachung der Belegung des Caches zusammenwirkt, um die virtuellen Volumen (V'₁ bis V'ₙ) in gleichmäßiger Weise auf die verschiedenen Partitionen (P₁ bis Pₙ) des Caches (100) zu verteilen, mit dem Ziel, eine homogene Verteilung auf die Gesamtheit der verschiedenen Platten, die die Partitionen (P₁ bis Pₙ) des Caches (100) tragen, zu begünstigen.

11. System nach einem der Ansprüche 1 bis 10, **dadurch gekennzeichnet, dass** das Verwaltungs-Modul (30) beim Vorgang des Leerens des Caches (100) die Ergebnisse der Berechnungen des Moduls (32) der Überwachung der Belegung des Caches verwendet, um die in die physikalische Bibliothek (P20₁ bis P20ₙ) zu kopierenden, virtuellen Volumen (V'₁ bis V'ₙ) des Caches (100) auszuwählen, wobei die so ausgewählten, virtuellen Volumen (V'₁ bis V'ₙ) die geschlossenen, virtuellen Volumen (V'₁ bis V'ₙ) sind, deren Zustandsregel "disk only" ist und auf die am wenigsten zuletzt durch die Informatik-Plattformen (10₁ bis 10ₙ) lesend oder schreibend zugegriffen wurde, und zwar entweder in einer gegebenen Partition (P₁ bis Pₙ) des Caches (100), wenn der Wert der individuellen Belegungsquote dieser Partition größer oder gleich dem Wert der maximalen Belegungsschwelle ist, oder in der Gesamtheit der Partitionen (P₁ bis Pₙ) des Caches (100), wenn die Werte der individuellen Belegungsquoten aller Partitionen kleiner sind, als der Wert der maximalen Belegungsschwelle.

12. System nach einem der Ansprüche 1 bis 11, **dadurch gekennzeichnet, dass** das Verwaltungs-Modul (30) ein Modul (34) zur Überwachung der Aktivität der physikalischen Bibliothek (P20₁ bis P20ₙ) enthält, das permanent mindestens die Informationen bezüglich der Verwendung der Lesegeräte (P200₁ bis P200ₙ) und/oder der Patronen (P21₁ bis P21ₙ) der physikalischen Bibliotheken unter Kontrolle des Speicherungs-Systems (1) aktuell hält, wobei es diese Informationen so dem Verwaltungs-Modul (30) ermöglichen, die Zeit-Prioritäten der Zugriffe auf die Speicherungs-Ressourcen (20, 100) zu verwalten einerseits durch das System (1) selbst für das Leeren mindestens eines virtuellen Volumens (V'₁ bis V'ₙ) des Caches (100) in mindestens ein virtuelles Volumen (V₁ bis Vₙ) der physikalischen Bibliothek (P20₁ bis P20ₙ), und andererseits durch die Informatik-Plattformen (10₁ bis 10ₙ), für das Lesen/Schreiben eines nicht im Cache (100) vorliegenden, virtuellen Volumens (V'₁ bis V'ₙ), was also eine Hinzuziehung der physikalischen Bibliothek (P20₁ bis P20ₙ) zum Kopieren eines virtuellen Volumens (V₁ bis Vₙ) dieser physikalischen Bibliothek (P20₁ bis P20ₙ) in den Cache (100) erfordert, in Form eines virtuellen Volumens (V'₁ bis Vₙ) der virtuellen Bibliothek (V20₁ bis V20ₙ).

13. System nach einem der Ansprüche 2 bis 12, **dadurch gekennzeichnet, dass** das Verwaltungs-Modul (30) dank seiner Mittel für Zugriff auf den Inhalt der Speicherungs-Ressourcen (20, 100) des Systems (1) ständig mindestens Informationen aktuell hält bezüglich der Gültigkeit der in den Patronen (P21₁ bis P21ₙ) der physikalischen Bibliotheken (P20₁ bis P20ₙ) vorliegenden, virtuellen Volumen (V₁ bis Vₙ), die sich unter Kontrolle des Speicherungs-Systems (1) befinden, die gegenüber den virtuellen Volumen (V'₁ bis V'ₙ) eventuell im Cache (100) durch die Informatik-Plattformen verändert wurden, wobei es diese Informationen dem Verwaltungs-Modul (30) ermöglichen, den von den veralteten, virtuellen Volumen (V₁ bis Vₙ) in den Patronen (P21₁ bis P21ₙ) der physikalischen Bibliothek (P20₁ bis P20ₙ) belegten Bereich zu vergleichen mit einer maximalen Ungültigkeits-Schwelle, und, wenn dieser Bereich der veralteten, virtuellen Volumen (V₁ bis Vₙ) diese Schwelle erreicht, eine Verdichtung durchzuführen der gültigen Volumen (V₁ bis Vₙ) der physikalischen Bibliothek (P20₁ bis P20ₙ), in den Patronen (P21₁ bis P21ₙ), die in der physikalischen Bibliothek (P20₁ bis P20ₙ) nicht verwendete, virtuelle Volumen (V₁ bis Vₙ) enthalten und/oder geschlossenen, virtuellen Volumen (V'₁ bis V'ₙ) im Cache (100) entsprechen, wobei das Lesen der Gesamtheit der gültigen, virtuellen Volumen (V₁ bis Vₙ) der Quell-Patronen (P21₁ bis P21ₙ), die veraltete Volumen (V₁ bis Vₙ) enthalten, und das gleichzeitige Kopieren dieser gültigen, virtuellen Volumen (V₁ bis Vₙ) in Ziel-Patronen (P21₁ bis P21ₙ) überwacht wird, so dass diese Quell-Patronen (P21₁ bis P21ₙ) gelöscht werden und nur Patronen (P21₁ bis P21ₙ) erwirkt werden, die gültige, virtuelle Volumen (V₁ bis Vₙ) in der physikalischen Bibliothek (P20₁ bis P20ₙ) enthalten, und leere Patronen.

14. System nach Anspruch 13, **dadurch gekennzeichnet, dass** das Verwaltungs-Modul (30), das für die Emulation der virtuellen Volumen (V₁ bis Vₙ) der physikalischen Bibliothek (P20₁ bis P20ₙ) in virtuelle Volumen (V'₁ bis Vₙ) der virtuellen Bibliothek (V20₁ bis V20ₙ) des Caches (100) verantwortlich ist, die Möglichkeit bietet, dass ein virtuelles Volumen (V'₁ bis V'ₙ) des Caches (100) mehrfache Abbilder (V₁ bis Vₙ) in der physikalischen Bibliothek (P20₁ bis P20ₙ) besitzt, und es ermöglicht, dass die virtuellen Volumen (V'₁ bis Vₙ) des Caches (100), die vom Modul (32) der Überwachung der Belegung des Caches bei der Berechnung der Belegungsquote berücksichtigt werden, den virtuellen Volumen (V'₁ bis V'ₙ) des Caches (100) entsprechen, deren Zustandsregel "disc only" ist, das heißt, deren in der physikalischen Bibliothek (P20₁ bis P20ₙ) vorliegende Abbilder (V₁ bis Vₙ) nicht alle gültig sind.

15. System nach einem der Ansprüche 13 und 14, **dadurch gekennzeichnet, dass** das Verwaltungs-Modul (30) die Ergebnisse der Vorgänge verwendet, die vom Modul (31) zur Überwachung der Cache-Aktivität, dem Modul (32) zur Überwachung der Belegung des Caches und dem Modul (34) zur Überwachung der Aktivität der physikalischen Bibliothek (P20₁ bis P20ₙ) ausgeführt werden, derart, dass die Verdichtung der gültigen Volumen (V₁ bis Vₙ) der physikalischen Bibliothek (P20₁ bis P20ₙ) durch das Verwaltungs-Modul (30) in Abhängigkeit der Aktivität und der Belegung des Caches (100) erfolgt, wobei die Zugriffe auf die Speicherungs-Ressourcen (20, 100) durch die Informatik-Plattformen (10₁ bis 10ₙ) gegenüber den für die Verdichtung notwendigen Zugriffen bevorteilt werden.

16. System nach einem der Ansprüche 1 bis 15, **dadurch gekennzeichnet, dass** die Mittel (11) zur Verarbeitung eine Software-Anwendung ausführen, die die Gesamtheit der Module (30, 31, 32, 33 und 34) des Speicherungs-Systems (1) bildet und verantwortlich für die Interoperabilität der verschiedenen Mittel des Systems ist, wobei diese Software-Anwendung mit einem Betriebs-System zusammenarbeitet, das auf dem Speicherungs-System (1) installiert ist, um die durchzuführenden Vorgänge zu verwalten durch Erzeugen von mindestens Informationen bezüglich der Plätze und der Verwendung der Gesamtheit der im Speicherungs-System (1) vorliegenden Daten, wobei die zur Ausführung dieser Anwendung notwendigen Daten vorab in einen Speicher aufgenommen wurden, der den Mitteln (11) zur Verarbeitung des Systems (1) zugänglich ist.

17. Verfahren zur Sicherung von Daten mindestens eines Formates, von mindestens einer Informatik-Plattform (10₁ bis 10ₙ) erzeugt und dem Speicherungssystem (1) über mindestens ein Kommunikations-Netzwerk (RC) durch Mittel (101) für den Zugang der Plattform zum Speicherungssystem (1) übertragen, wobei das Speicherungssystem (1) Ressourcen (20, 100) zur Speicherung enthält, die einerseits Mittel (20) zur Speicherung enthalten, die mindestens eine physikalische Bibliothek (P20₁ bis P20ₙ) enthalten, mindestens einen Roboter (P22) enthaltend, der fähig ist, mindestens eine Datenspeicherungspatrone (P21₁ bis P21ₙ) zu laden und zu entladen in mindestens einem Lesegerät (P200₁ bis P200ₙ), das das Schreiben und Lesen der von der Informatik-Plattform (10₁ bis 10ₙ) in die physikalische Bibliothek (P20₁ bis P20ₙ) übertragenen Daten ermöglicht, und andererseits Mittel (100) zur Speicherung, Cache (100) genannt, in denen die Verarbeitungs-Mittel (11) des Speicherungs-Systems (1) gegenüber der Informatik-Plattformen (10₁ bis 10ₙ) mindestens eine virtuelle Bibliothek (V20₁ bis V20ₙ) emulieren, ausgehend von mindestens einer physikalischen Bibliothek (P20₁ bis P20ₙ), die das Speicherungs-System (1) unter seiner Kontrolle hat, wobei die so in der physikalischen Bibliothek (P20₁ bis P20ₙ) und der virtuellen Bibliothek (V20₁ bis V20ₙ) gespeicherten Daten in Einheiten von bestimmter Größe zusammengefasst werden, virtuelle Volumen genannt, die mindestens ein Abbild (V₁ bis Vₙ) in der physikalischen Bibliothek (P20₁ bis P20ₙ) und/oder ein Abbild (V'₁ bis V'ₙ) in der virtuellen Bibliothek (V20₁ bis V20ₙ) besitzen, wobei die Mittel (101) für den Zugang der Plattformen (10₁ bis 10ₙ) zum Speicherungs-System (1) so über das Kommunikations-Netzwerk (RC) lesend und schreibend zugreifen auf das Abbild (V'₁ bis V'ₙ) eines jeden virtuellen Volumens im Cache (100), das vom Speicherungs-System gespeichert wird, wobei das Verfahren **dadurch gekennzeichnet ist, dass** es mindestens die folgenden Schritte enthält:
- Emulierung (61) der virtuellen Volumen (V₁ bis Vₙ) der physikalischen Bibliothek (P201 bis P20n) zu virtuellen Volumen (V'₁ bis V'ₙ) der virtuellen Bibliothek (V20₁ bis V20ₙ) des Caches (100) durch ein Verwaltungs-Modul (30), das in den Mitteln (11) zur Verarbeitung des Speicherungs-Systems (1) vorliegt und die Zugriffe auf die Speicherungs-Ressourcen (20, 100) verwaltet, gleichzeitig auf die virtuellen Volumen (V₁ bis Vₙ) der physikalischen Bibliothek (P20₁ bis P20ₙ) und auf die virtuellen Volumen (V'₁ bis V'ₙ) des Caches (100), in Abhängigkeit der von den Mitteln (101) für Zugang der Informatik-Plattformen (10₁ bis 10ₙ) zum Speicherungs-System (1) übertragenen Anfragen;
- Berechnung (62) von mindestens einem Aktivitätsindex des Caches (100), der die Benutzung des Zugangs-Übertragungsbandes zum Cache (100) widerspiegelt, in bestimmten Zeitintervallen durch ein Modul (31) zur Überwachung der Cache-Aktivität, wobei dieser Schritt der Berechnung (62) wiederholt wird, um die Entwicklung der Aktivität des Caches (100) periodisch oder punktuell bei einer Platzzuweisung für ein neues, virtuelles Volumen (V'₁ bis V'ₙ) im Cache (100) zu überwachen;
- Berechnung (63) von mindestens einer Belegungsquote des Caches (100), zu einem gegebenen Zeitpunkt, durch ein Modul (32) zur Überwachung der Belegung des Caches, wobei dieser Schritt der Berechnung (63) wiederholt wird, um die Entwicklung der Belegung des Caches (100) periodisch oder punktuell bei einer Platzzuweisung für ein neues, virtuelles Volumen (V'₁ bis V'ₙ) im Cache (100) zu überwachen;
- Entscheidung (64) durch das Verwaltungs-Modul (30), in Abhängigkeit des Ergebnisses dieser Berechnungen und mindestens eines Algorithmus (AG) zur Verwaltung des Zugangs-Übertragungsbandes zum Cache (100), der im Speicherungs-System (1) implementiert ist, zwischen einer Autorisation (70) oder einem Verbot (80) für Zugriff auf die Speicherungs-Ressourcen (20, 100) durch die Informatik-Plattformen (10, bis 10ₙ) für das Beschreiben/Auslesen der virtuellen Volumen (V'₁ bis V'ₙ) im Cache (100) oder durch das System (1) selbst für mindestens einen Vorgang, Leeren des Caches genannt, der das Kopieren der Daten von mindestens einem virtuellen Volumen (V'1 bis V'n) der virtuellen Bibliothek (V20₁ bis V20ₙ) in mindestens ein virtuelles Volumen (V₁ bis Vₙ) der physikalischen Bibliothek (P20₁ bis P20ₙ) ermöglicht, derart, dass die Belegung des Caches (100) geregelt wird unter Verwaltung der Zeit-Prioritäten der Zugriffe durch die Plattformen und das System selbst auf die Ressourcen;
und **dadurch**, dass es einerseits enthält mindestens einen Schritt der Installation (67) von einer Mehrzahl von Partitionen (P₁ bis Pₙ) auf einer Mehrzahl von Festplatten (100₁ bis 100ₙ), die den Cache (100) bilden, und andererseits mindestens einen Schritt (68) der durch ein Verwaltungs-Modul (33) erfolgenden Erzeugung und Aktualisierung von Daten, die Informationen widerspiegeln bezüglich der Verteilung der Partitionen (P₁ bis Pₙ) und der Verteilung der auf den verschiedenen Partitionen (P₁ bis Pₙ) aufgenommenen Daten, wobei dieses Verwaltungs-Modul (33) anhand dieser Informationen mindestens ein Verzeichnis (RP) erzeugt, das Informationen bezüglich der Standorte und der Verwendung des virtuellen Volumens (V'₁ bis V'ₙ) enthält, wobei die virtuellen Volumen (V'₁ bis V'ₙ), auf denen ein Lese- oder ein Schreibvorgang stattfindet, als geöffnete, virtuelle Volumen identifiziert werden und die virtuellen Volumen, auf denen keinerlei Lese- oder ein Schreibvorgang stattfindet, als geschlossene, virtuelle Volumen identifiziert werden;
wobei der Schritt (62) der Berechnung des Aktivitätsindex des Caches (100) durch das Modul (31) zur Überwachung der Cache-Aktivität mindestens einen Schritt der Hinzuziehung (621) der vom Verwaltungs-Modul (33) erzeugten Daten enthält, um den Aktivitätsindex des Caches (100) zu berechnen durch Zählen der Anzahl an offenen, virtuellen Volumen im Cache (100), wobei die maximale Aktivitätsschwelle der Gesamtanzahl an gleichzeitig geöffneten, virtuellen Volumen (V'₁ bis V'ₙ) des Caches (100), die einen Bruchteil des Übertragungsbandes belegen, der als zu groß bewertet wird, um einen internen Vorgang zu starten, der einen Zugriff auf den Cache (100) erfordert.

18. Verfahren nach Anspruch 17, **dadurch gekennzeichnet, dass** es einen Schritt der Überprüfung des Inhaltes der physikalischen Bibliothek (P20₁ bis P20ₙ) und der virtuellen Bibliothek (V20₁ bis V20ₙ) durch das Verwaltungs-Modul (30) enthält, dank Mitteln für Zugriff auf den Inhalt der Speicherungs-Ressourcen (20, 100) des Systems (1), gefolgt von einem Schritt der Zuweisung eines Wertes, Zustandsregel genannt, an jedes der virtuellen Volumen, darunter mindestens die folgenden Zustandsregeln:
- Zustandsregel "disc only", wenn das virtuelle Volumen ein Abbild (V'₁ bis V'ₙ) in der virtuellen Bibliothek (V20₁ bis V20ₙ) des Caches (100) besitzt, aber kein Abbild in der physikalischen Bibliothek besitzt oder davon mindestens ein Abbild (V₁ bis Vₙ) in der physikalischen Bibliothek (P20₁ bis P20ₙ) ungültig ist, das heißt nicht die selben Daten enthält, wie das Abbild (V'₁ bis V'ₙ) in der virtuellen Bibliothek (V20₁ bis V20ₙ);
- Zustandsregel "out of cache", wenn das virtuelle Volumen keinerlei Abbild (V'₁ bis V'ₙ) in der virtuellen Bibliothek (V20₁ bis V20ₙ) des Caches (100) besitzt;
- Zustandsregel "disk and tape", wenn das virtuelle Volumen gültige Abbilder sowohl in der virtuellen Bibliothek (V20₁ bis V20ₙ) des Caches (100) als auch in der physikalischen Bibliothek (P20₁ bis P20ₙ) besitzt;
- Zustandsregel "swapping in", wenn das virtuelle Volumen ein Abbild (V'₁ bis V'ₙ) besitzt, das gerade in die virtuelle Bibliothek (V20₁ bis V20ₙ) geladen wird, ausgehend von einem Abbild (V₁ bis Vₙ) in der physikalischen Bibliothek (P20₁ bis P20ₙ);
- Zustandsregel "swapping out", wenn das virtuelle Volumen ein Abbild (V'₁ bis V'ₙ) in der virtuellen Bibliothek (V20₁ bis V20ₙ) besitzt, das gerade in ein Abbild (V₁ bis Vₙ) der physikalischen Bibliothek kopiert wird;
- Zustandsregel "incomplete", wenn das virtuelle Volumen (V'₁ bis V'ₙ) der virtuellen Bibliothek (V20₁ bis V20ₙ) geöffnet ist und keine Daten oder unvollständige Daten enthält;
- Zustandsregel "moving out", wenn das virtuelle Volumen (V'₁ bis V'ₙ) der virtuellen Bibliothek (V20₁ bis V20ₙ) gerade von einer Partition (P₁ bis Pₙ) des Caches (100) in eine andere kopiert wird;
- Zustandsregel "swappable", wenn das virtuelle Volumen ein Abbild (V'₁ bis V'ₙ) in der virtuellen Bibliothek (V20₁ bis V20ₙ) des Caches (100) besitzt, wovon aber mindestens ein Abbild (V₁ bis Vₙ) in der physikalischen Bibliothek (P20₁ bis P20ₙ) ungültig ist, oder das Abbild (V'₁ bis V'ₙ) in der virtuellen Bibliothek (V20₁ bis V20ₙ) gerade in ein Abbild (V₁ bis Vₙ) der physikalischen Bibliothek (P20₁ bis P20ₙ) kopiert wird, das heißt, dass das Volumen entweder der Zustandsregel "disc only" oder der Zustandsregel "swapping out" entspricht.

19. Verfahren nach einem der Ansprüche 17 und 18, **dadurch gekennzeichnet, dass** der Schritt der Berechnung der Belegungsquote des Caches (100) zu einem gegebenen Zeitpunkt durch das Modul (32) zur Überwachung der Belegung des Caches (100) einerseits einen Schritt (635) enthält der Berechnung einer Belegungsquote, als individuell bezeichnet, die einer individuellen Berechnung der Belegungsquote auf jeder der Partitionen (P₁ bis Pₙ) des Caches (100) entspricht, und andererseits einen Schritt (636) enthält der Berechnung einer Belegungsquote, als durchschnittlich bezeichnet, die einer Berechnung der Belegungsquote der Gesamtheit der Partitionen (P₁ bis Pₙ) des Caches (100) entspricht.

20. Verfahren nach Anspruch 19, **dadurch gekennzeichnet, dass** der Schritt (636) der Berechnung der durchschnittlichen Belegungsquote des Caches (100) durch das Modul (32) zur Überwachung der Belegung des Caches aus einer für die Gesamtheit der Partitionen (P₁ bis Pₙ) des Caches (100) erfolgenden Berechnung der Summe der Größe der Daten besteht, die vorliegen in den geschlossenen, virtuellen Volumen (V'₁ bis V'ₙ), deren Zustandsregel "disc only" ist, und der an die geöffneten, virtuellen Volumen (V'₁ bis V'ₙ) unabhängig ihrer Zustandsregeln zugeteilten Größe, wobei diese Summe zur insgesamt verfügbaren Größe der Gesamtheit der Partitionen (P₁ bis Pₙ) des Caches (100) ins Verhältnis gesetzt wird, um die mittlere Belegungsquote der Gesamtheit der Partitionen (P₁ bis Pₙ) des Caches (100) zu erhalten.

21. Verfahren nach einem der Ansprüche 19 und 20, **dadurch gekennzeichnet, dass** der Schritt (635) der Berechnung der individuellen Belegungsquote von jeder Partition (P₁ bis Pₙ) des Caches (100) durch das Modul (32) zur Überwachung der Belegung des Caches aus einer individuell für jede der Partitionen (P₁ bis Pₙ) des Caches (100) erfolgenden Messung der Gesamt-Größe der Daten besteht, die in den virtuellen Volumen (V'₁ bis V'ₙ) vorliegen, deren Zustandsregel "disc only" ist, egal, ob sie geöffnet oder geschlossen sind, wobei diese Größe zur gesamt in der betrachteten Partition (P₁ bis Pₙ) des Caches (100) verfügbaren Größe ins Verhältnis gesetzt wird, um die individuelle Belegungsquote von jeder Partition (P₁ bis Pₙ) des Caches (100) zu erhalten.

22. Verfahren nach einem der Ansprüche 17 bis 21, **dadurch gekennzeichnet, dass** Schritt (62) der Berechnung des Aktivitätsindex des Caches für bestimmte Zeiträume, durch das Modul (31) zur Überwachung der Cache-Aktivität, besteht aus einer Berechnung eines über eine bestimmte Anzahl von bestimmten aufeinanderfolgenden Zeiträumen berechneten Durchschnitts der maximalen Anzahl von gleichzeitig während jedem der aufeinanderfolgenden Zeiträume geöffneten, virtuellen Volumen (V'₁ bis V'ₙ) des Caches (100).

23. Verfahren nach einem der Ansprüche 20 bis 22, **dadurch gekennzeichnet, dass** es mindestens einen zusätzlichen Schritt enthält des Vergleichens (65) des Aktivitätsindex des Caches mit einer minimalen Aktivitätsschwelle und einer maximalen Aktivitätsschwelle, einen Schritt des Vergleichens (661) der individuellen Belegungsquote des Caches mit einer maximalen Belegungsschwelle, und einen Schritt des Vergleichens (662) der mittleren Belegungsquote des Caches mit einer ersten Schwelle, Prioritätsschwelle genannt, unterhalb derer die Belegung des Caches (100) bezüglich des Leerens vorrangig ist, und einer zweiten Schwelle, Schwelle des Beginns des Leerens genannt, oberhalb derer das Leeren des Caches (100) durchgeführt werden kann, umgesetzt durch das Verwaltungs-Modul (30), um die Zugriffe auf den Cache (100) zu verwalten mittels des im Speicherungs-System (1) implementierten Algorithmus (AG) zur Verwaltung des Zugangs-Übertragungsbandes zum Cache, mindestens eine der folgenden Regeln enthaltend:
- wenn der Wert der individuellen Belegungsrate einer Partition (P₁ bis Pₙ) des Caches (100) größer ist als der Wert der maximalen Belegungsschwelle, egal wie der Wert des Aktivitätsindex des Caches (100) ist, wird der Vorgang des Leerens des Caches (100) geboten und zum Nachteil eines eventuellen Zugriffs auf den Cache (100) durch die Informatik-Plattformen (10₁ bis 10ₙ) zum Starten autorisiert, wobei im Zuge dieses Leerens ein Teil des Zugangs-Übertragungsbandes zum Cache (100) dann vom Kopieren eines oder mehrerer virtueller Volumen (V'₁ bis V'ₙ) dieser Partition (P₁ bis Pₙ) in die physikalische Bibliothek (P20₁ bis P20ₙ) verwendet wird,
- wenn der Wert des Aktivitätsindex des Caches (100) kleiner oder gleich der minimalen Aktivitätsschwelle ist, wird jeglicher Vorgang des Leerens des Caches (100) zum Starten autorisiert, um das Kopieren eines oder mehrerer virtueller Volumen (V'₁ bis V'ₙ) in die physikalische Bibliothek (P20₁ bis P20ₙ) zu ermöglichen,
- wenn der Wert des Aktivitätsindex des Caches (100) zwischen der minimalen Aktivitätsschwelle und der maximalen Aktivitätsschwelle liegt, wird ein bereits erfolgender Vorgang des Leerens des Caches (100) autorisiert fortzufahren, wobei das Kopieren eines oder mehrerer virtueller Volumen (V'₁ bis V'ₙ) des Caches (100) in die physikalische Bibliothek (P20₁ bis P20ₙ) autorisiert wird, während dieser Leerungs-Vorgang abläuft, aber, wenn kein Vorgang des Leerens abläuft, wird ein neuer Vorgang des Leerens des Caches (100) nicht zum Starten autorisiert,
- wenn der Wert des Aktivitätsindex des Caches (100) größer ist, als der Wert der maximalen Aktivitätsschwelle, wird ein neuer Vorgang des Leerens des Caches (100) nicht zum Starten autorisiert, und ein bereits erfolgender Vorgang des Leerens des Caches (100) wird unterbrochen, zugunsten des Zugriffs auf den Cache (100) durch die Informatik-Plattformen (10₁ bis 10ₙ), es sei denn der Wert der individuellen Belegungsquote des Caches (100) ist größer als der Wert der maximalen Belegungsschwelle oder der Wert der mittleren Belegungsquote des Caches (100) ist größer als die Startschwelle des Leerens, wobei ein neues Kopieren eines oder mehrerer virtueller Volumen (V'₁ bis V'ₙ) des Caches (100) in die physikalische Bibliothek (P20₁ bis P20ₙ) während eines bereits erfolgenden Leerungs-Vorgangs verboten wird, während ein bereits erfolgendes Kopieren eines oder mehrerer virtueller Volumen (V'₁ bis V'ₙ) des Caches (100) in die physikalische Bibliothek (P20₁ bis P20ₙ) zum Fertigstellen autorisiert wird, während dieser Leerungs-Vorgang abläuft,
- wenn der Wert der mittleren Belegungsquote der Gesamtheit der Partitionen (P₁ bis Pₙ) des Caches (100) kleiner oder gleich dem Wert der Prioritäts-Schwelle ist, sind die Zugriffe auf die Speicherungs-Ressourcen (20, 100) in Folge der durch die Mittel (101) für Zugriff der Informatik-Plattformen (10₁ bis 10ₙ) auf das Speicherungs-System (1) übertragenen Anfragen vorrangig gegenüber der für Kopieren der Volumen notwendigen Zugriffe, die die selben Ressourcen (20, 100) bei einem Vorgang des Leerens des Caches (100) erfordern, wobei dieses Kopieren dann bis zum Freiwerden dieser Ressourcen (20, 100) verschoben werden kann,
- wenn der Wert der mittleren Belegungsquote der Gesamtheit der Partitionen (P₁ bis Pₙ) des Caches (100) größer ist als die Prioritäts-Schwelle, sind die Zugriffe auf die Speicherungs-Ressourcen (20, 100) in Folge der durch die Mittel (101) für Zugriff der Informatik-Plattformen (10₁ bis 10ₙ) auf das Speicherungs-System (1) übertragenen Anfragen nicht vorrangig gegenüber der für Kopieren der Volumen notwendigen Zugriffe, die die selben Ressourcen (20, 100) bei einem Vorgang des Leerens des Caches (100) erfordern, der also zum eventuellen Nachteil des Zugriffs der Informatik-Plattformen (10₁ bis 10ₙ) auf die Speicherungs-Ressourcen (20, 100) starten oder fortfahren darf,
- wenn der Wert der mittleren Belegungsquote der Gesamtheit der Partitionen (P₁ bis Pₙ) des Caches (100) kleiner oder gleich der Schwelle für den Start des Leerens ist, wird ein Vorgang des Leerens des Caches (100) in die physikalische Bibliothek (P20₁ bis P20ₙ) nur dann zum Starten autorisiert, wenn der Wert des Aktivitätsindex des Caches (100) kleiner oder gleich der minimalen Aktivitätsschwelle ist,
- wenn der Wert der mittleren Belegungsquote der Gesamtheit der Partitionen (P₁ bis Pₙ) des Caches (100) größer ist als die Schwelle für den Start des Leerens, wird ein Vorgang des Leerens des Caches (100) in die physikalische Bibliothek (P20₁ bis P20ₙ) unerlässlich und zum Starten autorisiert.

24. Verfahren nach einem der Ansprüche 17 bis 23, **dadurch gekennzeichnet, dass** der Schritt (62) des Berechnens des Aktivitätsindex des Caches (100) durch das Modul (31) zur Überwachung der Cache-Aktivität mindestens einen Schritt des Hinzuziehens (621) von Daten enthält, die vom Organisations-Modul (33) erzeugt wurden, um den Aktivitätsindex des Caches (100) durch Zählen der geöffneten, virtuellen Volumen zu berechnen, wobei die maximale Aktivitätsschwelle der gesamten Anzahl der gleichzeitig geöffneten, virtuellen Volumen (V'₁ bis V'ₙ) des Caches (100) entspricht, die einen Bruchteil des Übertragungsbandes belegen, der als zu groß bewertet wird, um einem internen Vorgang das Starten zu ermöglichen, der einen Zugriff auf den Cache (100) erfordert.

25. Verfahren nach einem der Ansprüche 20 bis 24, **dadurch gekennzeichnet, dass** der Schritt (63) der Berechnung der Belegungsquote des Caches (100) durch das Modul (32) zur Überwachung der Belegung des Caches mindestens einen Schritt (631) der Hinzuziehung der Daten enthält, die vom Organisations-Modul (33) erzeugt wurden, um zu berechnen einerseits die mittlere Belegungsquote des Caches (100) durch Vergleichen der Summe der Gesamt-Größe der Daten, die in den geöffneten, virtuellen Volumen (V'₁ bis V'ₙ) vorliegen, egal wie ihre Zustandsregel ist, und der Gesamt-Größe der Daten, die in den geschlossenen, virtuellen Volumen (V'₁ bis V'ₙ) vorliegen und deren Zustandsregel "disc only" ist, mit der Gesamt-Speicherkapazität in der Gesamtheit der Partitionen (P₁ bis Pₙ) des Caches (100), und andererseits der individuellen Belegungsquote einer jeden Partition (P₁ bis Pₙ) des Caches (100) durch für eine gegebene Partition (P₁ bis Pₙ) erfolgendes Vergleichen der Größe der Daten in den virtuellen Volumen (V'₁ bis V'ₙ), deren Zustandsregel "disc only" ist, egal, ob sie geöffnet oder geschlossen sind, mit der Gesamt-Speicherkapazität dieser Partition (P₁ bis Pₙ) des Caches (100).

26. Verfahren nach einem der Ansprüche 17 bis 25, **dadurch gekennzeichnet, dass** der Schritt der Emulierung (61) der virtuellen Volumen (V'₁ bis V'ₙ) durch das Verwaltungs-Modul (30) einen Schritt enthält des Zusammenwirkens (611) des Organisations-Moduls (33) mit den Modulen (31) zur Überwachung der Cache-Aktivität und (32) der Überwachung der Belegung des Caches, um die virtuellen Volumen (V'₁ bis V'ₙ) in gleichmäßiger Weise auf die verschiedenen Partitionen (P₁ bis Pₙ) des Caches (100) zu verteilen, mit dem Ziel eine homogene Verteilung auf die Gesamtheit der verschiedenen Platten, die die Partitionen (P₁ bis Pₙ) des Caches (100) tragen, zu begünstigen.

27. Verfahren nach einem der Ansprüche 17 bis 26, **dadurch gekennzeichnet, dass** der Vorgang des Leerens des Caches (100) durch das Verwaltungs-Modul (30) in einer Verwendung der Ergebnisse der Berechnungen des Moduls (32) der Überwachung der Belegung des Caches resultiert, um die in die physikalische Bibliothek (P20₁ bis P20ₙ) zu kopierenden, virtuellen Volumen (V'₁ bis V'ₙ) des Caches (100) auszuwählen, wobei die so ausgewählten, virtuellen Volumen (V'₁ bis V'ₙ) die geschlossenen, virtuellen Volumen (V'₁ bis V'ₙ) sind, deren Zustandsregel "disk only" ist und auf die am wenigsten zuletzt durch die Informatik-Plattformen (10₁ bis 10ₙ) zugegriffen wurde, lesend oder schreibend, entweder in einer gegebenen Partition (P₁ bis Pₙ) des Caches (100), wenn der Wert der individuellen Belegungsquote dieser Partition größer oder gleich dem Wert der maximalen Belegungsschwelle ist, oder in der Gesamtheit der Partitionen (P₁ bis Pₙ) des Caches (100), wenn die Werte der individuellen Belegungsquoten aller Partitionen kleiner sind, als der Wert der maximalen Belegungsschwelle.

28. Verfahren nach einem der Ansprüche 17 bis 27, **dadurch gekennzeichnet, dass** es mindestens einen Schritt (71) der Erstellung und Aktualisierung von Daten enthält, durch ein Modul (34) zur Überwachung der Aktivität der Bibliothek, die Informationen repräsentieren bezüglich der Verwendung der Lesegeräte und/oder der Patronen der Bibliotheken (20₁ bis P20ₙ) unter Kontrolle des Speicherungs-Systems (1), wobei es diese Informationen so dem Verwaltungs-Modul (30) ermöglichen, die Zeit-Prioritäten der Zugriffe auf die Speicherungs-Ressourcen (20, 100) zu verwalten einerseits durch das System (1) selbst für das Leeren mindestens eines virtuellen Volumens (V'₁ bis V'ₙ) des Caches (100) in mindestens ein virtuelles Volumen (V₁ bis Vₙ) der physikalischen Bibliothek (P20₁ bis P20ₙ), und andererseits durch die Informatik-Plattformen (10₁ bis 10ₙ), für das Lesen/Schreiben eines nicht im Cache (100) vorliegenden, virtuellen Volumens (V'₁ bis V'ₙ), was also eine Hinzuziehung der physikalischen Bibliothek (P20₁ bis P20ₙ) zum Kopieren eines virtuellen Volumens (V₁ bis Vₙ) dieser physikalischen Bibliothek (P20₁ bis P20ₙ) in den Cache (100) erfordert, in Form eines virtuellen Volumens (V'₁ bis V'ₙ) der virtuellen Bibliothek (V20₁ bis V20ₙ).

29. Verfahren nach einem der Ansprüche 18 bis 28, **dadurch gekennzeichnet, dass** es mindestens einen Schritt (69) der Erstellung und Aktualisierung von Daten durch das Verwaltungs-Modul (30) enthält, die Informationen repräsentieren bezüglich der Gültigkeit der in den Patronen (P21₁ bis P21ₙ) der physikalischen Bibliotheken (P20₁ bis P20ₙ) vorliegenden, virtuellen Volumen (V₁ bis Vₙ), die sich unter Kontrolle des Speicherungs-Systems (1) befinden, die gegenüber den virtuellen Volumen (V₁ bis Vₙ) eventuell im Cache (100) durch die Informatik-Plattformen (10₁ bis 10ₙ) verändert wurden, wobei es diese Gültigkeits-Informationen dem Verwaltungs-Modul (30) ermöglichen, einen Schritt (89) des Vergleichens zu starten des von den veralteten, virtuellen Volumen (V₁ bis Vₙ) in den Patronen (P21₁ bis P21ₙ) der physikalischen Bibliothek (P20₁ bis P20ₙ) belegten Bereichs mit einer maximalen Ungültigkeits-Schwelle, und, wenn dieser Bereich der veralteten, virtuellen Volumen (V₁ bis Vₙ) diese Schwelle erreicht, einen Schritt (90) der Verdichtung durchzuführen der gültigen Volumen (V₁ bis Vₙ), die extrahiert werden aus den Patronen (P211 bis P21n), die nicht verwendete Volumen (V1 bis Vn) enthalten und/oder geschlossenen, virtuellen Volumen (V'₁ bis V'ₙ) entsprechen, wobei überwacht wird das Lesen (92) der Gesamtheit der gültigen Volumen (V₁ bis Vₙ) der Quell-Patronen (P21, bis P21ₙ), die veraltete Volumen (V₁ bis Vₙ) enthalten, und das gleichzeitige Kopieren (93) dieser gültigen Volumen (V₁ bis Vₙ) in Ziel-Patronen (P21₁ bis P21ₙ), so dass diese Quell-Patronen (P21₁ bis P21ₙ) gelöscht werden und nur Patronen (P21₁ bis P21ₙ) erhalten werden, die gültige Volumen (V₁ bis Vₙ) in der physikalischen Bibliothek (P20₁ bis P20ₙ) enthalten.

30. Verfahren nach Anspruch 29, **dadurch gekennzeichnet, dass** die Schritte (61) der Emulierung der virtuellen Volumen (V₁ bis Vₙ) der physikalischen Bibliothek (P20₁ bis P20ₙ) in virtuelle Volumen (V'₁ bis V'ₙ) der virtuellen Bibliothek (V20₁ bis V20ₙ) des Caches (100) durch das Verwaltungs-Modul (30), die Möglichkeit bieten, dass ein virtuelles Volumen (V'₁ bis V'ₙ) des Caches (100) mehrfache Abbilder (V₁ bis Vₙ) in der physikalischen Bibliothek (P20₁ bis P20ₙ) besitzt, wobei es der Schritt (69) der Erstellung und Aktualisierung von Daten, durch das Verwaltungs-Modul (30), die Informationen repräsentieren bezüglich der Gültigkeit der Volumen (V₁ bis Vₙ), die in den Patronen (P21₁ bis P21ₙ) der physikalischen Bibliothek (P20₁ bis P20ₙ) vorliegen, es ermöglicht, dass die virtuellen Volumen (V'₁ bis V'ₙ) des Caches (100), die vom Modul (32) der Überwachung der Belegung des Caches bei der Berechnung der Belegungsquote berücksichtigt werden, den virtuellen Volumen (V'₁ bis V'ₙ) des Caches (100) entsprechen, deren Zustandsregel "disc only" ist, das heißt, deren in der physikalischen Bibliothek (P20₁ bis P20ₙ) vorliegende Abbilder (V₁ bis Vₙ) nicht alle gültig sind.

31. Verfahren nach einem der Ansprüche 29 und 30, **dadurch gekennzeichnet, dass** der Schritt (90) des Verdichtens der physikalischen Bibliothek (P20₁ bis P20ₙ) einen Schritt (91) der durch das Verwaltungs-Modul (30) erfolgenden Verwendung der Ergebnisse der Vorgänge enthält, die vom Modul (31) zur Überwachung der Cache-Aktivität, dem Modul (32) zur Überwachung der Belegung des Caches und dem Modul (34) zur Überwachung der Aktivität der physikalischen Bibliothek (P20₁ bis P20ₙ) ausgeführt werden, derart, dass die Verdichtung der gültigen Volumen (V₁ bis Vₙ) der physikalischen Bibliothek (P20₁ bis P20ₙ) durch das Verwaltungs-Modul (30) in Abhängigkeit der Aktivität und der Belegung des Caches (100) erfolgt, wobei die Zugriffe auf die Speicherungs-Ressourcen (20, 100) durch die Informatik-Plattformen (10₁ bis 10ₙ) gegenüber den für die Verdichtung notwendigen Zugriffen bevorteilt werden.

32. Verfahren nach einem der Ansprüche 17 bis 31, **dadurch gekennzeichnet, dass** es einen Schritt enthält der Installation einer Software-Anwendung im Betriebs-System des Speicherungs-Systems (1), wobei diese Software-Anwendung die Gesamtheit der Module (30, 31, 32, 33 und 34) des Speicherungs-Systems (1) bildet und verantwortlich für die Interoperabilität der verschiedenen Mittel des Systems ist, wobei diese Software-Anwendung mit einem Betriebs-System zusammenarbeitet, das auf dem Speicherungs-System (1) installiert ist, um die durchzuführenden Vorgänge zu verwalten durch Erzeugen von mindestens Informationen bezüglich der Plätze und der Verwendung der Gesamtheit der im Speicherungs-System (1) vorliegenden Daten, wobei dieser Schritt der Installation das Aufnehmen der Daten, die zur Ausführung dieser Anwendung notwendig sind, in einen Speicher, der den Mitteln (11) zur Verarbeitung des Systems (1) zugänglich ist, ermöglicht.
